# EUROPEAN PATENT APPLICATION

(11) **EP 4 563 599 A1**
(43) Date of publication of application: **04.06.2025**
(21) Application number: 23846647.8
(22) Date of filing: 27.07.2023
(51) Int. Cl.: C08F 6/14, C08F 2/24, C08F 6/16, C08F 6/20

(54) **FLUOROPOLYMER AQUEOUS DISPERSION LIQUID PRODUCTION METHOD, FLUOROPOLYMER AQUEOUS DISPERSION LIQUID, AND COATING COMPOSITION**

(30) Priority: 27.07.2022 JP 2022119934; 15.11.2022 JP 2022182830
(71) Applicant: DAIKIN INDUSTRIES, LTD., Osaka-shi, Osaka 530-0001 (JP)
(72) Inventor: YAMABE, Takuya, Osaka-Shi, Osaka 530-0001 (JP); YOSHIDA, Hirotoshi, Osaka-Shi, Osaka 530-0001 (JP); YAMAZAKI, Ranna, Osaka-Shi, Osaka 530-0001 (JP); YAMAMOTO, Emi, Osaka-Shi, Osaka 530-0001 (JP); KATO, Taketo, Osaka-Shi, Osaka 530-0001 (JP); NAKATANI, Yasukazu, Osaka-Shi, Osaka 530-0001 (JP); YAMANAKA, Taku, Osaka-Shi, Osaka 530-0001 (JP)
(74) Representative: Hoffmann Eitle
(86) International application number: PCT/JP2023/027662
(87) International publication number: WO 2024/024917

(57) **Abstract**

Provided is a method for producing a fluoropolymer aqueous dispersion containing a fluoropolymer, the method comprising: polymerizing a fluoromonomer in the presence of a fluorine-containing surfactant and an aqueous medium to prepare an aqueous dispersion containing a fluoropolymer, adding a nonionic surfactant to the resulting aqueous dispersion and also regulating a pH of the aqueous dispersion to 7 or higher and regulating a temperature of the aqueous dispersion to 35°C or higher, and bringing the aqueous dispersion containing the nonionic surfactant into contact with a treatment agent.

## Description

### TECHNICAL FIELD

The present disclosure relates to a method for producing a fluoropolymer aqueous dispersion, a fluoropolymer aqueous dispersion, and a coating material composition.

### BACKGROUND ART

Patent Document 1 discloses a process for removing a fluorine-containing emulsifier from an aqueous fluoropolymer dispersion which comprises adding to the dispersion an effective amount of a nonionic emulsifier to stabilize the dispersion, bringing the stabilized dispersion into contact with an effective amount of an anion exchanger to extensively remove the fluorine-containing emulsifier and separating the dispersion from the anion exchanger and optionally subjecting the resultant dispersion to concentration.

Patent Document 2 discloses a process for purifying a fluoropolymer dispersion, the process comprising:
(i) providing an aqueous dispersion (D) of at least one fluoropolymer (polymer (F)] comprising at least one fluorinated surfactant [surfactant (FS)], having a solids content (SC) of 15% by weight or more;
(ii) adding to the aqueous dispersion (D) at least one non-ionic non-fluorinated surfactant [surfactant (NS)];
(iii) adjusting the solids content (SC) to less than 10% by weight, to obtain a diluted aqueous dispersion (dD);
(iv) contacting the diluted aqueous dispersion (dD) with at least one adsorbing material, so as to obtain an aqueous dispersion of polymer (F) having a content of the fluorinated surfactant (FS) of less than 1 ppm based on the total weight of solids.

### RELATED ART

### PATENT DOCUMENTS

Patent Document 1: National Publication of International Patent Application No. 2002-532583
Patent Document 2: National Publication of International Patent Application No. 2009-533509

### SUMMARY OF THE INVENTION

### PROBLEM TO BE SOLVED BY THE INVENTION

An object of the present disclosure is to provide a method for producing a fluoropolymer aqueous dispersion having a reduced content of a fluorine-containing compound having a hydrophilic group and having 7 or fewer carbon atoms.

Another object of the present disclosure is to provide a fluoropolymer aqueous dispersion having a reduced content of a fluorine-containing compound having a hydrophilic group and having 7 or fewer carbon atoms.

### MEANS FOR SOLVING THE PROBLEM

The present disclosure provides a method for producing a fluoropolymer aqueous dispersion containing a fluoropolymer, the method comprising polymerizing a fluoromonomer in the presence of a fluorine-containing surfactant and an aqueous medium to prepare an aqueous dispersion containing a fluoropolymer, adding a nonionic surfactant to the resulting aqueous dispersion and also regulating a pH of the aqueous dispersion to 7 or higher and regulating a temperature of the aqueous dispersion to 35°C or higher, and bringing the aqueous dispersion containing the nonionic surfactant into contact with at least one treatment agent selected from the group consisting of an ion exchange resin and an adsorbent.

### EFFECTS OF INVENTION

The present disclosure provides a method for producing a fluoropolymer aqueous dispersion having a reduced content of a fluorine-containing compound having a hydrophilic group and having 7 or fewer carbon atoms.

In addition, the present disclosure provides a fluoropolymer aqueous dispersion having a reduced content of a fluorine-containing compound having a hydrophilic group and having 7 or fewer carbon atoms.

### DESCRIPTION OF EMBODIMENTS

Before describing the present disclosure in detail, some terms used in the present disclosure will now be defined or described.

In the present disclosure, the fluororesin is a partially crystalline fluoropolymer which is a fluoroplastic. The fluororesin has a melting point and has thermoplasticity, and may be either melt-fabricable or non melt-processible.

The melt-fabricable as used herein means that a polymer has an ability to be processed in a molten state using a conventional processing device such as an extruder or an injection molding machine. Accordingly, a melt-fabricable fluororesin usually has a melt flow rate of 0.01 to 500 g/10 min as measured by the measurement method described below.

The fluoroelastomer as used herein is an amorphous fluoropolymer. Being "amorphous" means that the size of a melting peak (ΔH) appearing in differential scanning calorimetry (DSC) (temperature-increasing rate 10°C/min) or differential thermal analysis (DTA) (temperature-increasing rate 10°C/min) of the fluoropolymer is 4.5 J/g or less. The fluoroelastomer exhibits elastomeric characteristics by being crosslinked. The elastomeric characteristics mean that a polymer has an ability to be stretched and to retain its original length when the force required to stretch the polymer is no longer applied.

The monomer that provides a crosslinking site is a monomer (cure-site monomer) having a crosslinkable group that provides the fluoropolymer with a crosslinking site for forming a crosslink with the curing agent.

Polytetrafluoroethylene (PTFE) as used herein is preferably a fluoropolymer having a tetrafluoroethylene unit content of 99 mol% or more based on all polymerization units.

The fluororesin (excluding polytetrafluoroethylene) and the fluoroelastomer as used herein are each preferably a fluoropolymer having a tetrafluoroethylene unit content of less than 99 mol% based on all polymerization units.

The content of each of the monomers constituting the fluoropolymer can be calculated herein by any appropriate combination of NMR, FT-IR, elemental analysis, X-ray fluorescence analysis depending on the type of monomer.

The "organic group" as used herein means a group containing one or more carbon atoms or a group formed by removing one hydrogen atom from an organic compound.

Examples of the "organic group" include:
an alkyl group optionally having one or more substituents,
an alkenyl group optionally having one or more substituents,
an alkynyl group optionally having one or more substituents,
a cycloalkyl group optionally having one or more substituents,
a cycloalkenyl group optionally having one or more substituents,
a cycloalkadienyl group optionally having one or more substituents,
an aryl group optionally having one or more substituents,
an aralkyl group optionally having one or more substituents,
a non-aromatic heterocyclic group optionally having one or more substituents,
a heteroaryl group optionally having one or more substituents,
a cyano group,
a formyl group,
RaO-,
RaCO-,
RaSO₂-,
RaCOO-,
RaNRaCO-,
RaCONRa-,
RaOCO-,
RaOSO₂-, and
RaNRbSO₂-
wherein each Ra is independently
an alkyl group optionally having one or more substituents,
an alkenyl group optionally having one or more substituents,
an alkynyl group optionally having one or more substituents,
a cycloalkyl group optionally having one or more substituents,
a cycloalkenyl group optionally having one or more substituents,
a cycloalkadienyl group optionally having one or more substituents,
an aryl group optionally having one or more substituents,
an aralkyl group optionally having one or more substituents,
a non-aromatic heterocyclic group optionally having one or more substituents, or
a heteroaryl group optionally having one or more substituents; and
Rb is independently H or an alkyl group optionally having one or more substituents.

The organic group is preferably an alkyl group optionally having one or more substituents.

The "substituent" as used herein means a group capable of replacing another atom or group. Examples of the "substituent" include an aliphatic group, an aromatic group, a heterocyclic group, an acyl group, an acyloxy group, an acylamino group, an aliphatic oxy group, an aromatic oxy group, a heterocyclic oxy group, an aliphatic oxycarbonyl group, an aromatic oxycarbonyl group, a heterocyclic oxycarbonyl group, a carbamoyl group, an aliphatic sulfonyl group, an aromatic sulfonyl group, a heterocyclic sulfonyl group, an aliphatic sulfonyloxy group, an aromatic sulfonyloxy group, a heterocyclic sulfonyloxy group, a sulfamoyl group, an aliphatic sulfonamide group, an aromatic sulfonamide group, a heterocyclic sulfonamide group, an amino group, an aliphatic amino group, an aromatic amino group, a heterocyclic amino group, an aliphatic oxycarbonylamino group, an aromatic oxycarbonylamino group, a heterocyclic oxycarbonylamino group, an aliphatic sulfinyl group, an aromatic sulfinyl group, an aliphatic thio group, an aromatic thio group, a hydroxy group, a cyano group, a sulfo group, a carboxy group, an aliphatic oxyamino group, an aromatic oxy amino group, a carbamoylamino group, a sulfamoylamino group, a halogen atom, a sulfamoylcarbamoyl group, a carbamoyl sulfamoyl group, a dialiphatic oxyphosphinyl group, and a diaromatic oxyphosphinyl group.

The aliphatic group may be saturated or unsaturated, and may have a hydroxyl group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic group include alkyl groups having 1 to 8 and preferably 1 to 4 carbon atoms in total, such as a methyl group, an ethyl group, a vinyl group, a cyclohexyl group, and a carbamoylmethyl group.

The aromatic group may have, for example, a nitro group, a halogen atom, an aliphatic oxy group, a carbamoyl group, an aliphatic oxycarbonyl group, an aliphatic thio group, an amino group, an aliphatic amino group, an acylamino group, a carbamoylamino group, or the like. Examples of the aromatic group include aryl groups having 6 to 12 carbon atoms and preferably 6 to 10 carbon atoms in total, such as a phenyl group, a 4-nitrophenyl group, a 4-acetylaminophenyl group, and a 4-methanesulfonylphenyl group.

The heterocyclic group may have a halogen atom, a hydroxy group, an aliphatic oxy group, a carbamoyl group, an aliphatic oxycarbonyl group, an aliphatic thio group, an amino group, an aliphatic amino group, an acylamino group, a carbamoylamino group, or the like. Examples of the heterocyclic group include 5- or 6-membered heterocyclic groups having 2 to 12 and preferably 2 to 10 carbon atoms in total, such as a 2-tetrahydrofuryl group and a 2-pyrimidyl group.

The acyl group may have an aliphatic carbonyl group, an arylcarbonyl group, a heterocyclic carbonyl group, a hydroxy group, a halogen atom, an aromatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the acyl group include acyl groups having 2 to 8 and preferably 2 to 4 carbon atoms in total, such as an acetyl group, a propanoyl group, a benzoyl group, and a 3-pyridinecarbonyl group.

The acylamino group may have an aliphatic group, an aromatic group, a heterocyclic group, or the like, and may have, for example, an acetylamino group, a benzoylamino group, a 2-pyridinecarbonylamino group, a propanoylamino group, or the like. Examples of the acylamino group include acylamino groups having 2 to 12 and preferably 2 to 8 carbon atoms in total and alkylcarbonylamino groups having 2 to 8 carbon atoms in total, such as an acetylamino group, a benzoylamino group, a 2-pyridinecarbonylamino group, and a propanoylamino group.

The aliphatic oxycarbonyl group may be saturated or unsaturated, and may have a hydroxy group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic oxycarbonyl group include alkoxycarbonyl groups having 2 to 8 and preferably 2 to 4 carbon atoms in total, such as a methoxycarbonyl group, an ethoxycarbonyl group, and a (t)-butoxycarbonyl group.

The carbamoyl group may have an aliphatic group, an aromatic group, a heterocyclic group, or the like. Examples of the carbamoyl group include an unsubstituted carbamoyl group and alkylcarbamoyl groups having 2 to 9 carbon atoms in total, and preferably an unsubstituted carbamoyl group and alkylcarbamoyl groups having 2 to 5 carbon atoms in total, such as a N-methylcarbamoyl group, a N,N-dimethylcarbamoyl group, and a N-phenylcarbamoyl group.

The aliphatic sulfonyl group may be saturated or unsaturated, and may have a hydroxy group, an aromatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic sulfonyl group include alkylsulfonyl groups having 1 to 6 carbon atoms in total and preferably 1 to 4 carbon atoms in total, such as a methanesulfonyl group.

The aromatic sulfonyl group may have a hydroxy group, an aliphatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aromatic sulfonyl group include arylsulfonyl groups having 6 to 10 carbon atoms in total, such as a benzenesulfonyl group.

The amino group may have an aliphatic group, an aromatic group, a heterocyclic group, or the like.

The acylamino group may have, for example, an acetylamino group, a benzoylamino group, a 2-pyridinecarbonylamino group, a propanoylamino group, or the like. Examples of the acylamino group include acylamino groups having 2 to 12 carbon atoms in total and preferably 2 to 8 carbon atoms in total, and more preferably alkylcarbonylamino groups having 2 to 8 carbon atoms in total, such as an acetylamino group, a benzoylamino group, a 2-pyridinecarbonylamino group, and a propanoylamino group.

The aliphatic sulfonamide group, the aromatic sulfonamide group, and the heterocyclic sulfonamide group may be, for example, a methanesulfonamide group, a benzenesulfonamide group, and a 2-pyridinesulfonamide group, respectively.

The sulfamoyl group may have an aliphatic group, an aromatic group, a heterocyclic group, or the like. Examples of the sulfamoyl group include a sulfamoyl group, alkylsulfamoyl groups having 1 to 9 carbon atoms in total, dialkylsulfamoyl groups having 2 to 10 carbon atoms in total, arylsulfamoyl groups having 7 to 13 carbon atoms in total, and heterocyclic sulfamoyl groups having 2 to 12 carbon atoms in total, more preferably a sulfamoyl group, alkylsulfamoyl groups having 1 to 7 carbon atoms in total, dialkylsulfamoyl groups having 3 to 6 carbon atoms in total, arylsulfamoyl groups having 6 to 11 carbon atoms in total, and heterocyclic sulfamoyl groups having 2 to 10 carbon atoms in total, such as a sulfamoyl group, a methylsulfamoyl group, a N,N-dimethylsulfamoyl group, a phenylsulfamoyl group, and a 4-pyridinesulfamoyl group.

The aliphatic oxy group may be saturated or unsaturated, and may have a methoxy group, an ethoxy group, an i-propyloxy group, a cyclohexyloxy group, a methoxyethoxy group, or the like. Examples of the aliphatic oxy group include alkoxy groups having 1 to 8 and preferably 1 to 6 carbon atoms in total, such as a methoxy group, an ethoxy group, an i-propyloxy group, a cyclohexyloxy group, and a methoxyethoxy group.

The aromatic amino group and the heterocyclic amino group may have an aliphatic group, an aliphatic oxy group, a halogen atom, a carbamoyl group, a heterocyclic group having a ring condensed with the aryl group, or an aliphatic oxycarbonyl group, and preferably an aliphatic group having 1 to 4 carbon atoms in total, an aliphatic oxy group having 1 to 4 carbon atoms in total, a halogen atom, a carbamoyl group having 1 to 4 carbon atoms in total, a nitro group, or an aliphatic oxycarbonyl group having 2 to 4 carbon atoms in total.

The aliphatic thio group may be saturated or unsaturated, and examples include alkylthio groups having 1 to 8 carbon atoms in total and more preferably 1 to 6 carbon atoms in total, such as a methylthio group, an ethylthio group, a carbamoylmethylthio group, and a t-butylthio group.

The carbamoylamino group may have an aliphatic group, an aryl group, a heterocyclic group, or the like. Examples of the carbamoylamino group include a carbamoylamino group, alkylcarbamoylamino groups having 2 to 9 carbon atoms in total, dialkylcarbamoylamino groups having 3 to 10 carbon atoms in total, arylcarbamoylamino groups having 7 to 13 carbon atoms in total, and heterocyclic carbamoylamino groups having 3 to 12 carbon atoms in total, and preferably a carbamoylamino group, alkylcarbamoylamino groups having 2 to 7 carbon atoms in total, dialkylcarbamoylamino groups having 3 to 6 carbon atoms in total, arylcarbamoylamino groups having 7 to 11 carbon atoms in total, and heterocyclic carbamoylamino groups having 3 to 10 carbon atoms in total, such as a carbamoylamino group, a methylcarbamoylamino group, a N,N-dimethylcarbamoylamino group, a phenylcarbamoylamino group, and a 4-pyridinecarbamoylamino group.

A range indicated by endpoints as used herein includes all numerical values within the range (for example, the range of 1 to 10 includes 1.4, 1.9, 2.33, 5.75, 9.98, and the like).

The phrase "at least one" as used herein includes all numerical values equal to or greater than 1 (for example, at least 2, at least 4, at least 6, at least 8, at least 10, at least 25, at least 50, at least 100, and the like).

Hereinafter, specific embodiments of the present disclosure will now be described in detail, but the present disclosure is not limited to the following embodiments.

### 1. Method for producing fluoropolymer aqueous dispersion

The aqueous dispersion obtained by polymerizing a fluoromonomer may contain, other than the fluoropolymer, a fluorine-containing compound having a hydrophilic group. The fluorine-containing compound having a hydrophilic group includes a fluorine-containing surfactant added during polymerization and a fluorine-containing compound having a hydrophilic group produced by polymerization of a fluoromonomer.

In the production method of the present disclosure, after preparing an aqueous dispersion and before performing an ion exchange treatment or an adsorption treatment on the aqueous dispersion, a nonionic surfactant is added to the aqueous dispersion and, also, the pH of the aqueous dispersion is regulated to 7 or higher and the temperature of the aqueous dispersion is regulated to 35°C or higher. Then, the ion exchange treatment or the adsorption treatment is performed. It was found that, by adding a nonionic surfactant to an aqueous dispersion, regulating the pH and the temperature of the aqueous dispersion to extremely limited ranges, and performing an ion exchange treatment or an adsorption treatment in this way, an aqueous dispersion having a surprisingly reduced content of a fluorine-containing compound having a hydrophilic group can be obtained.

That is to say, the production method of the present disclosure is a method for producing a fluoropolymer aqueous dispersion containing a fluoropolymer, the method comprising polymerizing a fluoromonomer in the presence of a fluorine-containing surfactant and an aqueous medium to prepare an aqueous dispersion containing a fluoropolymer, adding a nonionic surfactant to the resulting aqueous dispersion and also regulating a pH of the aqueous dispersion to 7 or higher and regulating a temperature of the aqueous dispersion to 35°C or higher, and bringing the aqueous dispersion containing the nonionic surfactant into contact with at least one treatment agent selected from the group consisting of an ion exchange resin and an adsorbent.

The use of the production method of the present disclosure makes it possible to reduce the content of a fluorine-containing compound having a hydrophilic group and having 7 or fewer carbon atoms in the fluoropolymer aqueous dispersion. Moreover, the use of the production method of the present disclosure makes it possible to reduce not only the content of a fluorine-containing compound having a hydrophilic group and having 7 or fewer carbon atoms but also the content of a fluorine-containing compound having a hydrophilic group in the fluoropolymer aqueous dispersion.

Hereinafter, the steps and the materials used in the steps will now be described in detail.

### (Polymerization of fluoromonomer)

In the production method of the present disclosure, first a fluoromonomer is polymerized in the presence of a fluorine-containing surfactant and an aqueous medium to prepare an aqueous dispersion containing a fluoropolymer.

The polymerization of a fluoromonomer can be performed by charging a reactor with a fluoromonomer, a fluorine-containing surfactant, a polymerization initiator, an aqueous medium, and optionally other additives, stirring the contents of the reactor, retaining the reactor at a predetermined polymerization temperature, and then adding a predetermined amount of a polymerization initiator to initiate the polymerization reaction. After the polymerization reaction is initiated, the fluoromonomer, the polymerization initiator, the fluorine-containing surfactant, a chain transfer agent, and the like may be further added depending on the purpose. The method for polymerizing the fluoromonomer is not limited, and is preferably an emulsion polymerization method.

### (Fluorine-containing surfactant)

The fluorine-containing surfactant used in the polymerization of the fluoromonomer is not limited as long as it is a surfactant containing at least one fluorine atom, and conventionally known fluorine-containing surfactants can be used.

Examples of the fluorine-containing surfactant include anionic fluorine-containing surfactants. The anionic fluorine-containing surfactant may be, for example, a fluorine atom-containing surfactant having 20 or fewer carbon atoms in total in the portion excluding the anionic group.

The fluorine-containing surfactant may also be a fluorine-containing surfactant in which the molecular weight of the anionic moiety is 1,000 or less.

The "anionic moiety" means a portion of the fluorine-containing surfactant excluding the cation. For example, in the case of F(CF₂)ₙ₁COOM represented by formula (I), which will be described below, the anionic moiety is the "F(CF₂)ₙ₁COO" portion.

Examples of the fluorine-containing surfactant also include fluorine-containing surfactants having a Log POW of 3.5 or less. The Log POW is a partition coefficient between 1-octanol and water, which is represented by Log P (wherein P represents the ratio between the concentration of the fluorine-containing surfactant in octanol and the concentration of the fluorine-containing surfactant in water in a phase-separated octanol/water (1:1) liquid mixture containing the fluorine-containing surfactant).

The Log POW is determined as follows. Specifically, HPLC is performed on standard substances (heptanoic acid, octanoic acid, nonanoic acid, and decanoic acid) each having a known octanol/water partition coefficient using TOSOH ODS-120T column (φ4.6 mm × 250 mm, Tosoh Corp.) as a column and acetonitrile/0.6% by mass HClO₄ aqueous solution =1/1 (vol/vol %) as an eluent at a flow rate of 1.0 ml/min, a sample amount of 300 µL, and a column temperature of 40°C; with a detection light of UV 210 nm. For each standard substance, a calibration curve is drawn with respect to the elution time and the known octanol/water partition coefficient. Based on the calibration curve, Log POW is calculated from the elution time of the sample liquid in HPLC.

Specific examples of the fluorine-containing surfactant include those described in U.S. Patent Application Publication No. 2007/0015864, U.S. Patent Application Publication No. 2007/0015865, U.S. Patent Application Publication No. 2007/0015866, and U.S. Patent Application Publication No. 2007/0276103, U.S. Patent Application Publication No. 2007/0117914, U.S. Patent Application Publication No. 2007/142541, U.S. Patent Application Publication No. 2008/0015319, U.S. Patent No. 3,250,808, U.S. Patent No. 3,271,341, Japanese Patent Laid-Open No. 2003-119204, International Publication No. WO 2005/042593, International Publication No. WO 2008/060461, International Publication No. WO 2007/046377, Japanese Patent Laid-Open No. 2007-119526, International Publication No. WO 2007/046482, International Publication No. WO 2007/046345, U.S. Patent Application Publication No. 2014/0228531, International Publication No. WO 2013/189824, and International Publication No. WO 2013/189826.

Examples of the anionic fluorine-containing surfactant include a compound represented by the following general formula (N⁰):

Xⁿ⁰-Rfⁿ⁰-Y⁰ (N⁰)

wherein Xⁿ⁰ is H, Cl, or F; Rfⁿ⁰ is a linear, branched, or cyclic alkylene group having 3 to 20 carbon atoms in which some or all of H are replaced by F, the alkylene group optionally containing one or more ether bonds in which some of H are optionally replaced by Cl, and Y⁰ is an anionic group.

The anionic group Y⁰ may be -COOM, -SO₂M, or -SO₃M, and may be -COOM or -SO₃M.

M is H, a metal atom, NR⁷₄, optionally substituted imidazolium, optionally substituted pyridinium, or optionally substituted phosphonium, and R⁷ is H or an organic group.

Examples of the metal atom include alkali metals (Group 1) and alkaline earth metals (Group 2), such as Na, K, or Li.

R⁷ may be H or a C₁₋₁₀ organic group, may be H or a C₁₋₄ organic group, and may be H or a C₁₋₄ alkyl group.

M may be H, a metal atom, or NR⁷₄, may be H, an alkali metal (Group 1), an alkaline earth metal (Group 2), or NR⁷₄, and may be H, Na, K, Li, or NH₄.

Rfⁿ⁰ may be an alkylene group in which 50% or more H atoms are replaced by fluorine atoms.

Examples of the compound represented by general formula (N⁰) include a compound represented by the following general formula (N¹):

Xⁿ⁰-(CF₂)ₘ₁-Y⁰ (N¹)

wherein Xⁿ⁰ is H, Cl, or F; m1 is an integer of 3 to 15; and Y⁰ is as defined above;
a compound represented by the following general formula (N²):

   Rfⁿ¹-O-(CF(CF₃)CF₂O)ₘ₂CFXⁿ¹-Y⁰ (N²)

   wherein Rfⁿ¹ is a perfluoroalkyl group having 1 to 5 carbon atoms; m2 is an integer of 0 to 3; Xⁿ¹ is F or CF₃; and Y⁰ is as defined above;
a compound represented by the following general formula (N³):

   Rfⁿ²(CH₂)ₘ₃-(Rfⁿ³)_{q}-Y⁰ (N³)

   wherein Rfⁿ² is a partially or fully fluorinated alkyl group having 1 to 13 carbon atoms and optionally containing an ether bond and/or a chlorine atom; m3 is an integer of 1 to 3; Rfⁿ³ is a linear or branched perfluoroalkylene group having 1 to 3 carbon atoms, q is 0 or 1; and Y⁰ is as defined above;
a compound represented by the following general formula (N⁴):

   Rfⁿ⁴-O-(CYⁿ¹Yⁿ²)ₚCF₂-Y⁰ (N⁴)

   wherein Rfⁿ⁴ is a linear or branched, partially or fully fluorinated alkyl group having 1 to 12 carbon atoms and optionally containing an ether bond; Yⁿ¹ and Yⁿ² are the same or different and are each independently H or F; p is 0 or 1; and Y⁰ is as defined above; and
a compound represented by the following general formula (N⁵): 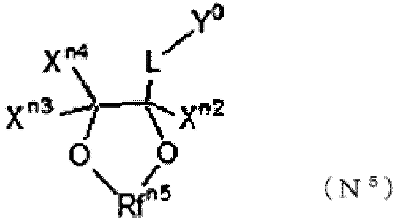 wherein Xⁿ², Xⁿ³, and Xⁿ⁴ may be the same or different and are each independently H, F, or a linear or branched, partially or fully fluorinated alkyl group having 1 to 6 carbon atoms and optionally containing an ether bond; Rfⁿ⁵ is a linear or branched partially or fully fluorinated alkylene group having 1 to 3 carbon atoms and optionally containing an ether bond; L is a linking group; and Y⁰ is as defined above, provided that the total number of carbon atoms in Xⁿ², Xⁿ³, Xⁿ⁴, and Rfⁿ⁵ is 18 or less.

More specific examples of the compound represented by the above general formula (N⁰) include a perfluorocarboxylic acid (I) represented by the following general formula (I), an ω-H perfluorocarboxylic acid (II) represented by the following general formula (II), a perfluoroethercarboxylic acid (III) represented by the following general formula (III), a perfluoroalkylalkylenecarboxylic acid (IV) represented by the following general formula (IV), a perfluoroalkoxyfluorocarboxylic acid (V) represented by the following general formula (V), a perfluoroalkylsulfonic acid (VI) represented by the following general formula (VI), an ω-H perfluorosulfonic acid (VII) represented by the following general formula (VII), a perfluoroalkylalkylene sulfonic acid (VIII) represented by the following general formula (VIII), an alkylalkylene carboxylic acid (IX) represented by the following general formula (IX), a fluorocarboxylic acid (X) represented by the following general formula (X), an alkoxyfluorosulfonic acid (XI) represented by the following general formula (XI), a compound (XII) represented by the following general formula (XII), and a compound (XIII) represented by the following general formula (XIII).

The perfluorocarboxylic acid (I) is represented by the following general formula (I):

F(CF₂)ₙ₁COOM (I)

wherein n1 is an integer of 3 to 14; and M is H, a metal atom, NR⁷₄, optionally substituted imidazolium, optionally substituted pyridinium, or optionally substituted phosphonium, wherein R⁷ is H or an organic group.

The ω-H perfluorocarboxylic acid (II) is represented by the following general formula (II):

H(CF₂)ₙ₂COOM (II)

wherein n2 is an integer of 4 to 15; and M is as defined above.

The perfluoroethercarboxylic acid (III) is represented by the following general formula (III):

Rf¹-O-(CF(CF₃)CF₂O)ₙ₃CF(CF₃)COOM (III)

wherein Rf¹ is a perfluoroalkyl group having 1 to 5 carbon atoms; n3 is an integer of 0 to 3; and M is as defined above.

The perfluoroalkylalkylenecarboxylic acid (IV) is represented by the following general formula (IV):

Rf²(CH₂)ₙ₄Rf³COOM (IV)

wherein Rf² is a perfluoroalkyl group having 1 to 5 carbon atoms; Rf³ is a linear or branched perfluoroalkylene group having 1 to 3 carbon atoms; n4 is an integer of 1 to 3; and M is as defined above.

The alkoxyfluorocarboxylic acid (V) is represented by the following general formula (V):

Rf⁴-O-CY¹Y²CF₂-COOM (V)

wherein Rf⁴ is a linear or branched partially or fully fluorinated alkyl group having 1 to 12 carbon atoms and optionally containing an ether bond and/or a chlorine atom; Y¹ and Y² are the same or different and are each H or F; and M is as defined above.

The perfluoroalkylsulfonic acid (VI) is represented by the following general formula (VI):

F(CF₂)ₙ₅SO₃M (VI)

wherein n5 is an integer of 3 to 14; and M is as defined above.

The ω-H perfluorosulfonic acid (VII) is represented by the following general formula (VII):

H(CF₂)ₙ₆SO₃M (VII)

wherein n6 is an integer of 4 to 14; and M is as defined above.

The perfluoroalkylalkylenesulfonic acid (VIII) is represented by the following general formula (VIII):

Rf⁵(CH₂)ₙ₇SO₃M (VIII)

wherein Rf⁵ is a perfluoroalkyl group having 1 to 13 carbon atoms; n7 is an integer of 1 to 3; and M is as defined above.

The alkylalkylenecarboxylic acid (IX) is represented by the following general formula (IX):

Rf⁶(CH₂)ₙ₈COOM (IX)

wherein Rf⁶ is a linear or branched partially or fully fluorinated alkyl group having 1 to 13 carbon atoms and optionally containing an ether bond; n8 is an integer of 1 to 3; and M is as defined above.

The fluorocarboxylic acid (X) is represented by the following general formula (X):

Rf⁷-O-Rf⁸-O-CF₂-COOM (X)

wherein Rf⁷ is a linear or branched, partially or fully fluorinated alkyl group having 1 to 6 carbon atoms and optionally containing an ether bond and/or a chlorine atom; Rf⁸ is a linear or branched, partially or fully fluorinated alkyl group having 1 to 6 carbon atoms; and M is as defined above.

The alkoxyfluorosulfonic acid (XI) is represented by the following general formula (XI):

Rf⁹-O-CY¹Y²CF₂-SO₃M (XI)

wherein Rf⁹ is a linear or branched partially or fully fluorinated alkyl group having 1 to 12 carbon atoms and optionally containing an ether bond and optionally containing chlorine; Y¹ and Y² are the same or different and are each H or F; and M is as defined above.

The compound (XII) is represented by the following general formula (XII): 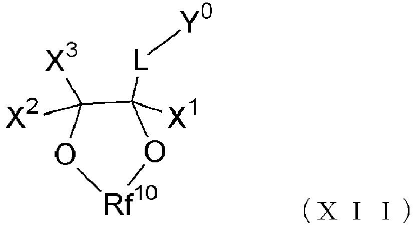 wherein X¹, X², and X³ may be the same or different and are H, F, and a linear or branched partially or fully fluorinated alkyl group having 1 to 6 carbon atoms and optionally containing an ether bond; Rf¹⁰ is a perfluoroalkylene group having 1 to 3 carbon atoms; L is a linking group; and Y⁰ is an anionic group.

Y⁰ may be -COOM, -SO₂M, or -SO₃M, and may be -SO₃M or COOM, wherein M is as defined above.

Examples of L include a single bond, and a partially or fully fluorinated alkylene group having 1 to 10 carbon atoms and optionally containing an ether bond.

The compound (XIII) is represented by the following general formula (XIII):

Rf¹¹=O-(CF₂CF(CF₃)O)ₙ₉(CF₂O)ₙ₁₀CF₂COOM (XIII)

wherein Rf¹¹ is a fluoroalkyl group having 1 to 5 carbon atoms and containing chlorine; n9 is an integer of 0 to 3; n10 is an integer of 0 to 3; and M is as defined above. An example of the compound (XIII) is CF₂ClO(CF₂CF(CF₃)O)ₙ₉(CF₂O)ₙ₁₀CF₂COONH₄ (a mixture having an average molecular weight of 750, n9 and n10 in the formula are as defined above).

As described above, examples of the anionic fluorine-containing surfactant include a carboxylic acid-based surfactant and a sulfonic acid-based surfactant.

The fluorine-containing surfactant may be one fluorine-containing surfactant, or may be a mixture containing two or more fluorine-containing surfactants.

The fluorine-containing surfactant preferably does not have a methylene group (-CH₂-), and more preferably does not have a C-H bond. The use of a fluorine-containing surfactant that does not have a methylene group (-CH₂-) or a C-H bond within the molecule enables the fluoromonomer to be smoothly polymerized in the presence of an aqueous medium.

The number of H atoms that the hydrophobic group of the fluorine-containing surfactant has is preferably 0 or 1, and more preferably 0. The use of a fluorine-containing surfactant in which the number of H atoms bonded to carbon atoms constituting the hydrophobic group is small enables the fluoromonomer to be smoothly polymerized in the presence of an aqueous medium. The number of carbon atoms in the hydrophobic group of the fluorine-containing surfactant having a hydrophobic group and a hydrophilic group is preferably 1 to 50, more preferably 3 to 20, and even more preferably 6 to 12. The hydrophobic group usually constitutes the above-described "portion excluding the anionic group" in the molecular structure of the fluorine-containing surfactant. Examples of the hydrophilic group include groups exemplified as the anionic group Y⁰. The fluorine-containing surfactant may be a saturated fluorinated surfactant in which all carbon atoms bonded to the hydrophobic group are substituted with fluorine atoms.

Examples of fluorine-containing surfactants, among the above-described anionic fluorine-containing surfactants, include compounds represented by general formula (N¹), compounds represented by general formula (N²), and compounds represented by general formula (N⁴):

Rfⁿ⁴-O-(CYⁿ¹F)ₚCF₂-Y⁰ (N⁴)
wherein Rfⁿ⁴ is a linear or branched, partially or fully fluorinated alkyl group having 1 to 12 carbon atoms and optionally containing an ether bond (provided that those having -CH₂- are excluded), Yⁿ¹ is H or F, p is 0 or 1, and Y⁰ is as defined above; and compounds represented by general formula (N⁵): 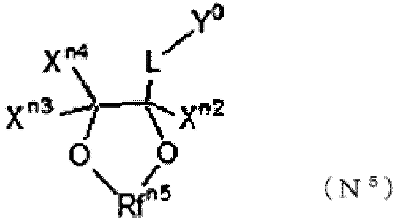
wherein Xⁿ², Xⁿ³, and Xⁿ⁴ may be the same or different and are each independently H, F, or a linear or branched, partially or fully fluorinated alkyl group having 1 to 6 carbon atoms and optionally containing an ether bond (provided that those having -CH₂- are excluded), provided that Xⁿ³ and Xⁿ⁴ are not simultaneously H; Rfⁿ⁵ is a linear or branched, partially or fully fluorinated alkylene group having 1 to 3 carbon atoms and optionally containing an ether bond (provided that those having -CH₂- are excluded); L is a linking group; and Y⁰ is as defined above, provided that the total number of carbon atoms of Xⁿ², Xⁿ³, Xⁿ⁴, and Rfⁿ⁵ is 18 or less.

Among the above-described anionic fluorine-containing surfactants, the fluorine-containing surfactant is preferably at least one selected from the group consisting of perfluorocarboxylic acid (I) represented by general formula (I), ω-H perfluorocarboxylic acid (II) represented by general formula (II), perfluoroethercarboxylic acid (III) represented by general formula (III), perfluoroalkylalkylenecarboxylic acid (IV) represented by general formula (IV), perfluoroalkoxyfluorocarboxylic acid (V) represented by general formula (V), perfluoroalkylsulfonic acid (VI) represented by general formula (VI), ω-H perfluorosulfonic acid (VII) represented by general formula (VII), perfluoroalkylalkylenesulfonic acid (VIII) represented by general formula (VIII), fluorocarboxylic acid (X) represented by general formula (X): Rf⁷-O-Rf⁸-O-CF₂-COOM wherein Rf⁷ is a linear or branched, partially or fully fluorinated alkyl group having 1 to 6 carbon atoms and optionally containing an ether bond and/or a chlorine atom (provided that those having -CH₂- are excluded), Rf⁸ is a linear or branched, partially or fully fluorinated alkyl group having 1 to 6 carbon atoms (provided that those having -CH₂-are excluded), and M is as defined above, an alkoxyfluorosulfonic acid (XI) represented by general formula (XI): Rf⁹-O-CY¹FCF₂-SO₃M
wherein Rf⁹ is a linear or branched, partially or fully fluorinated alkyl group having 1 to 12 carbon atoms, optionally containing chlorine, and optionally containing an ether bond (provided that those having -CH₂- are excluded), Y¹ is H or F, and M is as defined above, a compound (XII) represented by general formula (XII): 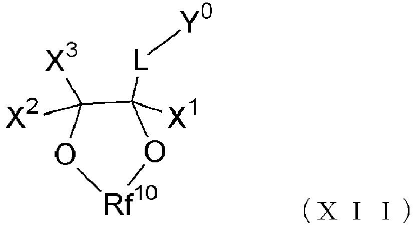
wherein X¹, X², and X³ may be the same or different and are each independently H, F, and a linear or branched, partially or fully fluorinated alkyl group having 1 to 6 carbon atoms and optionally containing an ether bond (provided that those having -CH₂- are excluded), provided that X² and X³ are not simultaneously H, Rf¹⁰ is a perfluoroalkylene group having 1 to 3 carbon atoms, L is a linking group, and Y⁰ is an anionic group, and
a compound (XIII) represented by general formula (XIII): Rf¹¹-O-(CF₂CF(CF₃)O)ₙ₉(CF₂O)ₙ₁₀CF₂COOM
wherein Rf¹¹ is a fluoroalkyl group having 1 to 5 carbon atoms containing chlorine (provided that those having -CH₂- are excluded), n9 is an integer of 0 to 3, n10 is an integer of 0 to 3, and M is as defined above. The use of such a fluorine-containing surfactant enables the fluoromonomer to be smoothly polymerized in the presence of an aqueous medium.

Examples of the fluorine-containing surfactant include compounds represented by the following formulae. The fluorine-containing surfactant may be a mixture of these compounds.

F(CF₂)₇COOM,

F(CF₂)₅COOM,

H(CF₂)₆COOM,

H(CF₂)₇COOM,

CF₃O(CF₂)₃OCHFCF₂COOM,

C₃F₇OCF(CF₃)CF₂OCF(CF₃)COOM,

CF₃CF₂CF₂OCF(CF₃)COOM,

CF₃CF₂OCF₂CF₂OCF₂COOM,

C₂F₅OCF(CF₃)CF₂OCF(CF₃)COOM,

CF₃OCF(CF₃)CF₂OCF(CF₃)COOM,

CF₂ClCF₂CF₂OCF(CF₃)CF₂OCF₂COOM,

CF₂ClCF₂CF₂OCF₂CF(CF₃)OCF₂COOM,

CF₂ClCF(CF₃)OCF(CF₃)CF₂OCF₂COOM,

CF₂ClCF(CF₃)OCF₂CF(CF₃)OCF₂COOM,

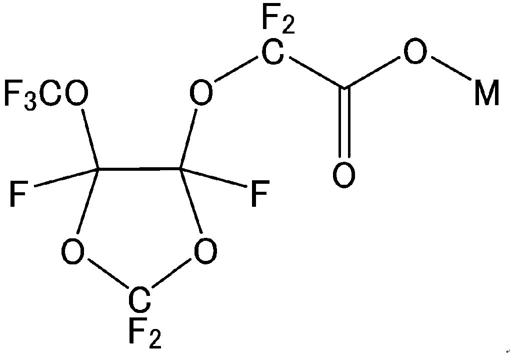

wherein M is H, a metal atom, NR⁷₄, optionally substituted imidazolium, optionally substituted pyridinium, or optionally substituted phosphonium, and R⁷ is H or an organic group.

In the production method of the present disclosure, a fluorine-containing surfactant having 7 or fewer carbon atoms can preferably be used as a fluorine-containing surfactant used in the polymerization of the fluoromonomer. The use of a fluorine-containing surfactant having 7 or fewer carbon atoms enables the polymerization of the fluoromonomer to smoothly proceed and, also, the content of a fluorine-containing compound having a hydrophilic group and having 7 or fewer carbon atoms such as the fluorine-containing surfactant having 7 or fewer carbon atoms to be efficiently removed from the fluoropolymer aqueous dispersion by ion exchange treatment or adsorption treatment after polymerization.

Examples of the fluorine-containing surfactant having 7 or fewer carbon atoms include those having 7 or fewer carbon atoms among the compounds represented by the above general formulae (I) to (XIII). That is, examples of the fluorine-containing compound having a hydrophilic group and having 7 or fewer carbon atoms include the following compounds.

The perfluorocarboxylic acid (I) having 7 or fewer carbon atoms is represented by the following general formula (I):

F(CF₂)ₙ₁COOM (I)

wherein n1 is an integer of 3 to 6; and M is H, a metal atom, NR⁷₄, optionally substituted imidazolium, optionally substituted pyridinium, or optionally substituted phosphonium, wherein R⁷ is H or an organic group.

The ω-H perfluorocarboxylic acid (II) having 7 or fewer carbon atoms is represented by the following general formula (II):

H(CF₂)ₙ₂COOM (II)

wherein n2 is an integer of 4 to 6; and M is as defined above.

The perfluoroethercarboxylic acid (III) having 7 or fewer carbon atoms is represented by the following general formula (III):

Rf¹-O-(CF(CF₃)CF₂O)ₙ₃CF(CF₃)COOM (III)

wherein Rf¹ is a trifluoromethyl group; n3 is 1; and M is as defined above.

The perfluoroalkylalkylenecarboxylic acid (IV) having 7 or fewer carbon atoms is represented by the following general formula (IV):

Rf²(CH₂)ₙ₄Rf³COOM (IV)

wherein Rf² is a perfluoroalkyl group having 1 to 4 carbon atoms; Rf³ is a linear or branched perfluoroalkylene group having 1 to 3 carbon atoms; n4 is an integer of 1 to 3, provided that Rf², Rf³, and n4 are combined such that the total number of carbon atoms is 6 or less; and M is as defined above.

The alkoxyfluorocarboxylic acid (V) having 7 or fewer carbon atoms is represented by the following general formula (V):

Rf⁴-O-CY¹Y²CF₂-COOM (V)

wherein Rf⁴ is a linear or branched partially or fully fluorinated alkyl group having 1 to 4 carbon atoms and optionally containing an ether bond and/or a chlorine atom; Y¹ and Y² are the same or different and are each H or F; and M is as defined above.

The perfluoroalkylsulfonic acid (VI) having 7 or fewer carbon atoms is represented by the following general formula (VI):

F(CF₂)ₙ₅SO₃M (VI)

wherein n5 is an integer of 3 to 7; and M is as defined above.

The ω-H perfluorosulfonic acid (VII) having 7 or fewer carbon atoms is represented by the following general formula (VII):

H(CF₂)ₙ₆SO₃M (VII)

wherein n6 is an integer of 4 to 7; and M is as defined above.

The perfluoroalkylalkylenesulfonic acid (VIII) having 7 or fewer carbon atoms is represented by the following general formula (VIII):

Rf⁵(CH₂)ₙ₇SO₃M (VIII)

wherein Rf⁵ is a perfluoroalkyl group having 1 to 4 carbon atoms; n7 is an integer of 1 to 3; and M is as defined above.

The alkylalkylenecarboxylic acid (IX) having 7 or fewer carbon atoms is represented by the following general formula (IX):

Rf⁶(CH₂)ₙ₈COOM (IX)

wherein Rf⁶ is a linear or branched partially or fully fluorinated alkyl group having 1 to 4 carbon atoms and optionally containing an ether bond; n8 is an integer of 1 to 3; and M is as defined above.

The fluorocarboxylic acid (X) having 7 or fewer carbon atoms is represented by the following general formula (X):

Rf⁷-O-Rf⁸-O-CF₂-COOM (X)

wherein Rf⁷ is a linear or branched partially or fully fluorinated alkyl group having 1 to 2 carbon atoms and optionally containing an ether bond and/or a chlorine atom; Rf⁸ is a linear or branched partially or fully fluorinated alkyl group having 1 to 3 carbon atoms; and M is as defined above.

The alkoxyfluorosulfonic acid (XI) having 7 or fewer carbon atoms is represented by the following general formula (XI):

Rf⁹-O-CY¹Y²CF₂-SO₃M (XI)

wherein Rf⁹ is a linear or branched partially or fully fluorinated alkyl group having 1 to 5 carbon atoms and optionally containing an ether bond and optionally containing chlorine; Y¹ and Y² are the same or different and are each H or F; and M is as defined above.

The compound (XII) having 7 or fewer carbon atoms is represented by the following general formula (XII): 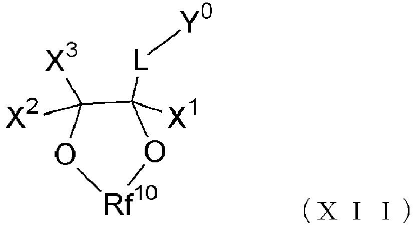 wherein X¹, X², and X³ may be the same or different and are H, F, and a linear or branched partially or fully fluorinated alkyl group having 1 to 3 carbon atoms and optionally containing an ether bond; Rf¹⁰ is a perfluoroalkylene group having 1 to 3 carbon atoms; L is a linking group; and Y⁰ is an anionic group.

Y⁰ may be -COOM, -SO₂M, or -SO₃M, and may be -SO₃M or COOM, wherein M is as defined above.

Examples of L include a single bond and a partially or fully fluorinated alkylene group having 1 to 4 carbon atoms and optionally containing an ether bond.

However, the total number of carbon atoms of X¹, X², X³, Rf¹⁰, L, and Y⁰ is 7 or less.

The compound (XIII) having 7 or fewer carbon atoms is represented by the following general formula (XIII):

Rf¹¹=O-(CF₂CF(CF₃)O)ₙ₉(CF₂O)ₙ₁₀CF₂COOM (XIII)

wherein Rf¹¹ is a fluoroalkyl group having 1 to 2 carbon atoms and containing chlorine; n9 is an integer of 0 to 1; n10 is an integer of 0 to 1; and M is as defined above.

The fluorine-containing surfactant having 7 or fewer carbon atoms, in particular, is preferably at least one selected from the group consisting of compounds represented by general formula (I), general formula (III), general formula (IX), and general formula (X), and more preferably at least one selected from the group consisting of compounds represented by general formula (I) and general formula (III).

Examples of the fluorine-containing surfactant having 7 or fewer carbon atoms include compounds represented by the following formulae. The fluorine-containing surfactant having 7 or fewer carbon atoms may be a mixture of these compounds.

F(CF₂)₅COOM,

CF₃CF₂CF₂OCF(CF₃)COOM,

CF₃CF₂OCF₂CF₂OCF₂COOM,

CF₃OCF(CF₃)CF₂OCF(CF₃)COOM,

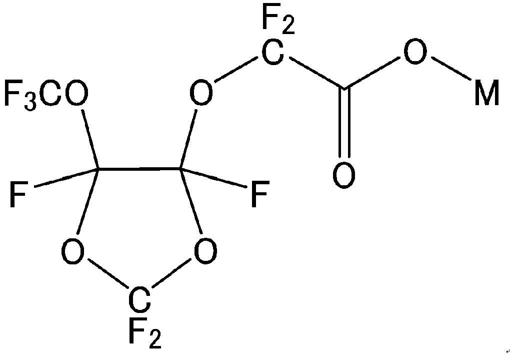

wherein M is **H,** a metal atom, NR⁷₄, optionally substituted imidazolium, optionally substituted pyridinium, or optionally substituted phosphonium, and R⁷ is H or an organic group.

The amount of the fluorine-containing surfactant added is preferably 10 ppm by mass to 10% by mass, is more preferably 100 ppm by mass or more and even more preferably 300 ppm by mass or more, and is more preferably 5% by mass or less and even more preferably 1% by mass or less, based on the aqueous medium.

### (Polymerization initiator)

The polymerization initiator used in the polymerization of the fluoromonomer is not limited as long as it is a polymerization initiator capable of generating radicals within the polymerization temperature range, and known oil-soluble and/or water-soluble polymerization initiators can be used. Moreover, the polymerization initiator can also be combined with a reducing agent or the like to form a redox agent and initiate polymerization. The concentration of the polymerization initiator is suitably determined according to the type of monomer, the molecular weight of the target fluoropolymer, and the reaction rate.

The polymerization initiator may be an oil-soluble radical polymerization initiator or a water-soluble radical polymerization initiator.

The oil-soluble radical polymerization initiator may be a known oil-soluble peroxide, and representative examples include a dialkyl peroxycarbonate such as diisopropyl peroxydicarbonate and di-sec-butyl peroxydicarbonate; a peroxy ester such as t-butyl peroxyisobutyrate and t-butyl peroxypivalate; and a dialkyl peroxide such as di-t-butyl peroxide, as well as a di[perfluoro (or fluorochloro) acyl]peroxide such as di(ω-hydro-dodecafluoroheptanoyl)peroxide, di(ω-hydro-tetradecafluorooctanoyl)peroxide, di(ω-hydro-hexadecafluorononanoyl)peroxide, di(perfluorobutyryl)peroxide, di(perfluorovaleryl)peroxide, di(perfluorohexanoyl)peroxide, di(perfluoroheptanoyl)peroxide, di(perfluorooctanoyl)peroxide, di(perfluorononanoyl)peroxide, di(ω-chloro-hexafluorobutyryl)peroxide, di(ω-chloro-decafluorohexanoyl)peroxide, di(ω-chloro-tetradecafluorooctanoyl)peroxide, ω-hydro-dodecafluoroheptanoyl-ω-hydrohexadecafluorononanoyl-peroxide, ω-chloro-hexafluorobutyryl-ω-chloro-decafluorohexanoyl-peroxide, ω-hydrododecafluoroheptanoyl-perfluorobutyryl-peroxide, di(dichloropentafluorobutanoyl)peroxide, di(trichlorooctafluorohexanoyl)peroxide, di(tetrachloroundecafluorooctanoyl)peroxide, di(pentachlorotetradecafluorodecanoyl)peroxide, and di(undecachlorodotoriacontafluorodocosanoyl)peroxide.

The water-soluble radical polymerization initiator may be a known water-soluble peroxide, and examples include ammonium salts, potassium salts, and sodium salts of persulphuric acid, perboric acid, perchloric acid, perphosphoric acid, and percarbonic acid, organic peroxides of disuccinic acid peroxide and diglutaric acid peroxide, t-butyl permaleate, and t-butyl hydroperoxide. A reducing agent such as a sulfite may be contained together, and the amount thereof may be 0.1 to 20 times the amount of the peroxide.

For example, when performing the polymerization at a low temperature of 30°C or lower, the polymerization initiator used is preferably a redox initiator obtained by combining an oxidizing agent and a reducing agent. Examples of the oxidizing agent include persulfates, organic peroxides, potassium permanganate, manganese triacetate, and ammonium cerium nitrate. Examples of the reducing agent include sulfites, bisulfites, bromates, diimines, and oxalic acid. Examples of the persulfates include ammonium persulfate and potassium persulfate. Examples of the sulfites include sodium sulfite and ammonium sulfite. In order to increase the decomposition rate of the initiator, the combination of the redox initiator preferably contains a copper salt or an iron salt. The copper salt may be copper(II) sulfate, and the iron salt may be iron(II) sulfate.

Examples of the redox initiator include potassium permanganate/oxalic acid, potassium permanganate/ammonium oxalate, ammonium persulfate/bisulfite/iron sulfate, manganese triacetate/oxalic acid, cerium ammonium nitrate/oxalic acid, and bromate/bisulfite, and potassium permanganate/oxalic acid is preferable. When using a redox initiator, one of an oxidizing agent or a reducing agent may be introduced into a polymerization tank in advance, and then the other may be added continuously or intermittently to initiate polymerization. For example, when using potassium permanganate/oxalic acid, preferably, a polymerization tank is charged with oxalic acid, and potassium permanganate is continuously added thereto.

The amount of the polymerization initiator added is not limited, and the polymerization initiator is added in an amount that does not significantly decrease the polymerization rate (e.g., a concentration of several ppm in water) or more at once in the initial stage of polymerization, or added successively or continuously. The upper limit is within a range where the reaction temperature is allowed to increase while the polymerization reaction heat is removed through the device surface, and the upper limit is more preferably within a range where the polymerization reaction heat can be removed through the device surface.

By adding a decomposer when polymerizing the fluoromonomer, the concentration of radicals during polymerization can be regulated. Examples of the decomposer include sulfites, bisulfites, bromates, diimines, oxalic acid, copper salts, and iron salts. Examples of sulfites include sodium sulfite and ammonium sulfite. The copper salt may be copper(II) sulfate, and the iron salt may be iron(II) sulfate. The amount of the decomposer added is in the range of 25 to 300% by mass based on the amount of the oxidizing agent combined as a polymerization initiator (a redox initiator). The amount of the decomposer added is preferably 25 to 150% by mass, and more preferably 50 to 100% by mass. The decomposer is preferably added after 5% by mass of the entirety of the fluoromonomer to be consumed in the polymerization reaction is polymerized, and more preferably added after 10% by mass is polymerized. The amount of the decomposer added is preferably an amount corresponding to 0.1 to 20 ppm by mass and more preferably an amount corresponding to 3 to 10 ppm by mass of the mass of the aqueous medium used.

### (Aqueous medium)

The aqueous medium for use in the polymerization of the fluoromonomer is a reaction medium in which the polymerization is performed, and means a liquid containing water. The aqueous medium is not limited as long as it contains water, and may be an aqueous medium containing water and, for example, a fluorine-free organic solvent such as ether or ketone, and/or a fluorine-containing organic solvent having a boiling point of 40°C or lower.

The aqueous medium is preferably an aqueous medium solely containing water or an aqueous medium solely containing water and a fluorine-free organic solvent, and is more preferably an aqueous medium solely containing water because the polymerization of the fluoromonomer can proceed smoothly and, also, deterioration of the efficiency of removing the fluorine-containing compound having a hydrophilic group can be suppressed.

The moisture content in the aqueous medium is preferably 90% or more, more preferably 95% or more, even more preferably 99.0% or more, yet more preferably 99.5% or more, and particularly preferably 99.9% or more, and may be 100% based on the mass of the aqueous medium because the polymerization of the fluoromonomer can proceed smoothly and, also, deterioration of the efficiency of removing the fluorine-containing compound having a hydrophilic group can be suppressed.

### (Fluoromonomer)

The fluoromonomer for use in the polymerization has at least one fluorine atom and at least one double bond. The fluoromonomer is preferably at least one selected from the group consisting of tetrafluoroethylene (TFE), hexafluoropropylene (HFP), chlorotrifluoroethylene (CTFE), vinyl fluoride, vinylidene fluoride (VdF), trifluoroethylene, fluoroalkyl vinyl ether, fluoroalkyl ethylene, fluoroalkyl allyl ether, trifluoropropylene, pentafluoropropylene, trifluorobutene, tetrafluoroisobutene, hexafluoroisobutene, a fluoromonomer represented by general formula (100): CHX¹⁰¹=CX¹⁰²Rf¹⁰¹, wherein one of X¹⁰¹ and X¹⁰² is H, the other is F, and Rf¹⁰¹ is a linear or branched fluoroalkyl group having 1 to 12 carbon atoms, a fluorinated vinyl heterocyclic compound, and a monomer that provides a crosslinking site.

The fluoroalkyl vinyl ether (FAVE) is preferably, for example, at least one selected from the group consisting of:
a fluoromonomer represented by general formula (110): CF₂=CF-ORf¹¹¹
   wherein Rf¹¹¹ represents a perfluoro organic group;
a fluoromonomer represented by general formula (120): CF₂=CF-OCH₂-Rf¹²¹
   wherein Rf¹²¹ is a perfluoroalkyl group having 1 to 5 carbon atoms;
a fluoromonomer represented by general formula (130): CF₂=CFOCF₂ORf¹³¹
   wherein Rf¹³¹ is a linear or branched perfluoroalkyl group having 1 to 6 carbon atoms, a cyclic perfluoroalkyl group having 5 to 6 carbon atoms, or a linear or branched perfluorooxyalkyl group having 2 to 6 carbon atoms and 1 to 3 oxygen atoms;
a fluoromonomer represented by general formula (140): CF₂=CFO(CF₂CF(Y¹⁴¹)O)ₘ(CF₂)ₙF
   wherein Y¹⁴¹ represents a fluorine atom or a trifluoromethyl group; m is an integer of 1 to 4; and n is an integer of 1 to 4; and
a fluoromonomer represented by general formula (150): CF₂=CF-O-(CF₂CFY¹⁵¹-O)ₙ-(CFY¹⁵²)ₘ-A¹⁵¹
   wherein Y¹⁵¹ represents a fluorine atom, a chlorine atom, a - SO₂F group, or a perfluoroalkyl group; the perfluoroalkyl group optionally containing ether oxygen and a -SO₂F group; n represents an integer of 0 to 3; n Y¹⁵¹s may be the same as or different from each other; Y¹⁵² represents a fluorine atom, a chlorine atom, or a -SO₂F group; m represents an integer of 1 to 5; m Y¹⁵²s may be the same as or different from each other; A¹⁵¹ represents -SO₂X¹⁵¹, -COZ¹⁵¹, or -POZ¹⁵²Z¹⁵³; X¹⁵¹ represents F, Cl, Br, I, -OR¹⁵¹, or-NR¹⁵²R¹⁵³; Z¹⁵¹, Z¹⁵², and Z¹⁵³ are the same or different, and each independently represent -NR¹⁵⁴R¹⁵⁵ or - OR¹⁵⁶; and R¹⁵¹, R¹⁵², R¹⁵³, R¹⁵⁴, R¹⁵⁵, and R¹⁵⁶ are the same or different, and each independently represent H, ammonium, an alkali metal, or an alkyl group, aryl group, or sulfonyl-containing group optionally containing a fluorine atom.

The "perfluoro organic group" as used herein means an organic group in which all hydrogen atoms bonded to the carbon atoms are replaced by fluorine atoms. The perfluoro organic group may have ether oxygen.

The fluoromonomer represented by general formula (110) may be a fluoromonomer in which Rf¹¹¹ is a perfluoroalkyl group having 1 to 10 carbon atoms. The perfluoroalkyl group preferably has 1 to 5 carbon atoms.

Examples of the perfluoro organic group in general formula (110) include a perfluoromethyl group, a perfluoroethyl group, a perfluoropropyl group, a perfluorobutyl group, a perfluoropentyl group, and a perfluorohexyl group.

Examples of the fluoromonomer represented by general formula (110) also include those represented by general formula (110) in which Rf¹¹¹ is a perfluoro(alkoxyalkyl) group having 4 to 9 carbon atoms; those in which Rf¹¹¹ is a group represented by the following formula:

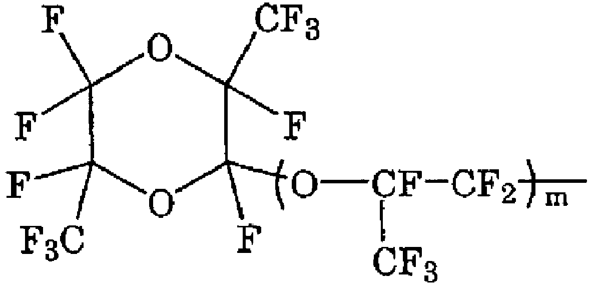

wherein m represents 0 or an integer of 1 to 4; and those in which Rf¹¹¹ is a group represented by the following formula: 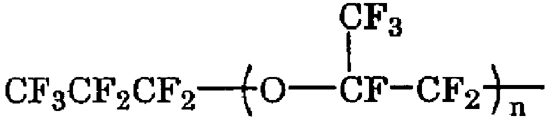 wherein n represents an integer of 1 to 4.

In particular, the fluoromonomer represented by the general formula (110) is preferably
a fluoromonomer represented by general formula (160): CF₂=CF-ORf¹⁶¹
wherein Rf¹⁶¹ represents a perfluoroalkyl group having 1 to 10 carbon atoms. Rf¹⁶¹ is preferably a perfluoroalkyl group having 1 to 5 carbon atoms.

Fluoroalkyl vinyl ether is preferably at least one selected from the group consisting of fluoromonomers represented by general formulae (160), (130), and (140).

The fluoromonomer represented by general formula (160) is commonly referred to as perfluoro(alkyl vinyl ether). The fluoromonomer represented by general formula (160) is preferably at least one selected from the group consisting of perfluoro(methyl vinyl ether), perfluoro(ethyl vinyl ether), and perfluoro(propyl vinyl ether), and is more preferably at least one selected from the group consisting of perfluoro(methyl vinyl ether) and perfluoro(propyl vinyl ether) .

The fluoromonomer represented by general formula (130) is preferably at least one selected from the group consisting of CF₂=CFOCF₂OCF₃, CF₂=CFOCF₂OCF₂CF₃, and CF₂=CFOCF₂OCF₂CF₂OCF₃.

The fluoromonomer represented by general formula (140) is preferably at least one selected from the group consisting of CF₂=CFOCF₂CF(CF₃)O(CF₂)₃F, CF₂=CFO(CF₂CF(CF₃)O)₂(CF₂)₃F, and CF₂=CFO(CF₂CF(CF₃)O)₂(CF₂)₂F.

The fluoromonomer represented by general formula (150) is preferably at least one selected from the group consisting of CF₂=CFOCF₂CF₂SO₂F, CF₂=CFOCF₂CF(CF₃)OCF₂CF₂SO₂F, CF₂=CFOCF₂CF(CF₂CF₂SO₂F)OCF₂CF₂SO₂F, and CF₂=CFOCF₂CF(SO₂F)₂.

The fluoromonomer represented by general formula (100) is preferably a fluoromonomer in which Rf¹⁰¹ is a linear fluoroalkyl group, and more preferably a fluoromonomer in which Rf¹⁰¹ is a linear perfluoroalkyl group. Rf¹⁰¹ preferably has 1 to 6 carbon atoms. Examples of the fluoromonomer represented by general formula (100) include CH₂=CFCF₃, CH₂=CFCF₂CF₃, CH₂=CFCF₂CF₂CF₃, CH₂=CFCF₂CF₂CF₂H, CH₂=CFCF₂CF₂CF₂CF₃, CHF=CHCF₃ (E isomer), and CHF=CHCF₃ (Z isomer), and, in particular, 2,3,3,3-tetrafluoropropylene represented by CH₂=CFCF₃ is preferable.

Fluoroalkyl ethylene is preferably represented by:

general formula (170): CH₂=CH-(CF₂)ₙ-X¹⁷¹

wherein X¹⁷¹ is H or F, and n is an integer of 3 to 10, and is more preferably at least one selected from the group consisting of CH₂=CH-C₄F₉ and CH₂=CH-C₆F₁₃.

Examples of the fluoroalkyl allyl ether include fluoromonomers represented by:

general formula (180): CF₂=CF-CF₂-ORf¹¹¹

wherein Rf¹¹¹ represents a perfluoroorganic group.

Rf¹¹¹ in general formula (180) is the same as Rf¹¹¹ in general formula (110). Rf¹¹¹ is preferably a perfluoroalkyl group having 1 to 10 carbon atoms or a perfluoroalkoxyalkyl group having 1 to 10 carbon atoms. Fluoroalkyl allyl ether represented by general formula (180) is preferably at least one selected from the group consisting of CF₂=CF-CF₂-O-CF₃, CF₂=CF-CF₂-O-C₂F₅, CF₂=CF-CF₂-O-C₃F₇, and CF₂=CF-CF₂-O-C₄F₉, more preferably at least one selected from the group consisting of CF₂=CF-CF₂-O-C₂F₅, CF₂=CF-CF₂-O-C₃F₇, and CF₂=CF-CF₂-O-C₄F₉, and even more preferably CF₂=CF-CF₂-O-CF₂CF₂CF₃.

Example of the fluorinated vinyl heterocyclic compound include fluorinated vinyl heterocyclic compounds represented by general formula (230): 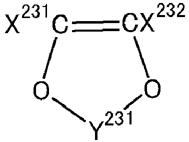 wherein X²³¹ and X²³² are each independently F, Cl, a methoxy group, or a fluorinated methoxy group; and Y²³¹ is represented by formula Y²³² or formula Y²³³:

-FC=CF- (Y²³²)

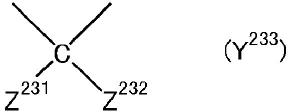

wherein Z²³¹ and Z²³² are each independently F or a fluorinated alkyl group having 1 to 3 carbon atoms.

The monomer that provides a crosslinking site is preferably at least one selected from the group consisting of:
a fluoromonomer represented by general formula (180):

   CX¹⁸¹₂=CX¹⁸²-R_{f}¹⁸¹CHR¹⁸¹X¹⁸³

   wherein X¹⁸¹ and X¹⁸² are each independently a hydrogen atom, a fluorine atom, or CH₃; R_{f}¹⁸¹ is a fluoroalkylene group, a perfluoroalkylene group, a fluoro(poly)oxyalkylene group, or a perfluoro(poly)oxyalkylene group; R¹⁸¹ is a hydrogen atom or CH₃; and X¹⁸³ is an iodine atom or a bromine atom;
a fluoromonomer represented by general formula (190):

   CX¹⁹¹₂=CX¹⁹²-R_{f}¹⁹¹X¹⁹³

   wherein X¹⁹¹ and X¹⁹² are each independently a hydrogen atom, a fluorine atom, or CH₃; R_{f}¹⁹¹ is a fluoroalkylene group, a perfluoroalkylene group, a fluoropolyoxyalkylene group, or a perfluoropolyoxyalkylene group; and X¹⁹³ is an iodine atom or a bromine atom;
a fluoromonomer represented by general formula (200):

   CF₂=CFO(CF₂CF(CF₃)O)ₘ(CF₂)ₙ-X²⁰¹

   wherein m is an integer of 0 to 5; n is an integer of 1 to 3; and X²⁰¹ is a cyano group, a carboxyl group, an alkoxycarbonyl group, an iodine atom, a bromine atom, or -CH₂I; and
a fluoromonomer represented by general formula (210):

   CH₂=CFCF₂O(CF(CF₃)CF₂O)ₘ(CF(CF₃))ₙ-X²¹¹

   wherein m is an integer of 0 to 5; n is an integer of 1 to 3; and X²¹¹ is a cyano group, a carboxyl group, an alkoxycarbonyl group, an iodine atom, a bromine atom, or-CH₂OH; and
a monomer represented by general formula (220):

   CR²²¹R²²²=CR²²³-Z²²¹-CR²²⁴=CR²²⁵R²²⁶

   wherein R²²¹, R²²², R²²³, R²²⁴, R²²⁵, and R²²⁶ are the same as or different from each other, and are each a hydrogen atom or an alkyl group having 1 to 5 carbon atoms; Z²²¹ is a linear or branched alkylene group having 1 to 18 carbon atoms and optionally having an oxygen atom, a cycloalkylene group having 3 to 18 carbon atoms, an at least partially fluorinated alkylene or oxyalkylene group having 1 to 10 carbon atoms, or a (per)fluoropolyoxyalkylene group which is represented by:

   -(Q)ₚ-CF₂O-(CF₂CF₂O)ₘ(CF₂O)ₙ-CF₂-(Q)ₚ-

   wherein Q is an alkylene group or an oxyalkylene group; p is 0 or 1; and m/n is 0.2 to 5 and has a molecular weight of 500 to 10,000.

X¹⁸³ and X¹⁹³ are each preferably an iodine atom. R_{f}¹⁸¹ and R_{f}¹⁹¹ are each preferably a perfluoroalkylene group having 1 to 5 carbon atoms. R¹⁸¹ is preferably a hydrogen atom. X²⁰¹ is preferably a cyano group, an alkoxycarbonyl group, an iodine atom, a bromine atom, or -CH₂I. X²¹¹ is preferably a cyano group, an alkoxycarbonyl group, an iodine atom, a bromine atom, or -CH₂OH.

The monomer that provides a crosslinking site is preferably at least one selected from the group consisting of CF₂=CFOCF₂CF(CF₃)OCF₂CF₂CN, CF₂=CFOCF₂CF(CF₃)OCF₂CF₂COOH, CF₂=CFOCF₂CF(CF₃)OCF₂CF₂CH₂I, CF₂=CFOCF₂CF₂CH₂I, CH₂=CFCF₂OCF(CF₃)CF₂OCF(CF₃)CN, CH₂=CFCF₂OCF(CF₃)CF₂OCF(CF₃)COOH, CH₂=CFCF₂OCF(CF₃)CF₂OCF(CF₃)CH₂OH, CH₂=CHCF₂CF₂I, CH₂=CH(CF₂)₂CH=CH₂, CH₂=CH(CF₂)₆CH=CH₂, and CF₂=CFO(CF₂)₅CN, and more preferably at least one selected from the group consisting of CF₂=CFOCF₂CF(CF₃)OCF₂CF₂CN and CF₂=CFOCF₂CF₂CH₂I.

In the polymerization, the fluoromonomer may be polymerized with a fluorine-free monomer. An example of the fluorine-free monomer is a hydrocarbon monomer that is reactive with the fluoromonomer. Examples of the hydrocarbon monomer include alkenes such as ethylene, propylene, butylene, and isobutylene; alkyl vinyl ethers such as ethyl vinyl ether, propyl vinyl ether, butyl vinyl ether, isobutyl vinyl ether, and cyclohexyl vinyl ether; vinyl esters such as vinyl acetate, vinyl propionate, vinyl n-butyrate, vinyl isobutyrate, vinyl valerate, vinyl pivalate, vinyl caproate, vinyl caprylate, vinyl caprate, vinyl versatate, vinyl laurate, vinyl myristate, vinyl palmitate, vinyl stearate, vinyl benzoate, vinyl para-t-butylbenzoate, vinyl cyclohexanecarboxylate, monochlorovinyl acetate, vinyl adipate, vinyl acrylate, vinyl methacrylate, vinyl crotonate, vinyl sorbate, vinyl cinnamate, vinyl undecylenate, vinyl hydroxyacetate, vinyl hydroxypropionate, vinyl hydroxybutyrate, vinyl hydroxyvalerate, vinyl hydroxyisobutyrate, and vinyl hydroxycyclohexanecarboxylate; alkyl allyl ethers such as ethyl allyl ether, propyl allyl ether, butyl allyl ether, isobutyl allyl ether, and cyclohexyl allyl ether; alkyl allyl esters such as ethyl allyl ester, propyl allyl ester, butyl allyl ester, isobutyl allyl ester, and cyclohexyl allyl ester; and (meth)acrylic esters such as methyl acrylate, methyl methacrylate, ethyl acrylate, ethyl methacrylate, propyl acrylate, propyl methacrylate, butyl acrylate, butyl methacrylate, hexyl methacrylate, cyclohexyl methacrylate, and vinyl methacrylate.

The fluorine-free monomer may also be a functional group-containing hydrocarbon monomer (provided that a monomer that provides a crosslinking site is excluded). Examples of the functional group-containing hydrocarbon monomer include hydroxy alkyl vinyl ethers such as hydroxyethyl vinyl ether, hydroxypropyl vinyl ether, hydroxybutyl vinyl ether, hydroxyisobutyl vinyl ether, and hydroxycyclohexyl vinyl ether; fluorine-free monomers having a carboxyl group, such as acrylic acid, methacrylic acid, itaconic acid, succinic acid, succinic anhydride, fumaric acid, fumaric anhydride, crotonic acid, maleic acid, maleic anhydride, and perfluorobutenoic acid; fluorine-free monomers having a sulfo group, such as vinylsulfonic acid; fluorine-free monomers having a glycidyl group, such as glycidyl vinyl ether and glycidyl allyl ether; fluorine-free monomers having an amino group such as aminoalkyl vinyl ether and aminoalkyl allyl ether; fluorine-free monomers having an amide group such as (meth)acrylamide and methylol acrylamide; and fluorine-free monomers having a nitrile group, such as acrylonitrile and methacrylonitrile.

In the polymerization, desired fluoropolymer particles can be obtained by polymerizing one or two or more fluoromonomers described above.

### (Chain transfer agent)

In the production method of the present disclosure, the fluoromonomer can be polymerized also in the presence of a chain transfer agent. The use of a chain transfer agent enables the polymerization rate and the molecular weight to be regulated. Examples of the chain transfer agent include esters such as dimethyl malonate, diethyl malonate, methyl acetate, ethyl acetate, butyl acetate, and dimethyl succinate, as well as isopentane, methane, ethane, propane, methanol, isopropanol, acetone, various mercaptans, various halogenated hydrocarbons such as carbon tetrachloride, and cyclohexane.

The chain transfer agent to be used may be a bromine compound or an iodine compound. An example of a polymerization method involving a bromine compound or an iodine compound is a method comprising performing the polymerization of the fluoromonomer in an aqueous medium substantially in the absence of oxygen and in the presence of a bromine compound or an iodine compound (iodine transfer polymerization). Representative examples of the bromine compound or the iodine compound to be used include compounds represented by the general formula:

R^{a}IₓBr_{y}

wherein x and y are each an integer of 0 to 2 and satisfy 1 ≤ x + y ≤ 2; and R^{a} is a saturated or unsaturated fluorohydrocarbon or chlorofluorohydrocarbon group having 1 to 16 carbon atoms, or a hydrocarbon group having 1 to 3 carbon atoms, each of which optionally contains an oxygen atom. By using a bromine compound or an iodine compound, iodine or bromine is introduced into the polymer, and serves as a crosslinking point.

Examples of the bromine compound or the iodine compound include 1,3-diiodoperfluoropropane, 2-iodoperfluoropropane, 1,3-diiodo-2-chloroperfluoropropane, 1,4-diiodoperfluorobutane, 1,5-diiodo-2,4-dichloroperfluoropentane, 1,6-diiodoperfluorohexane, 1,8-diiodoperfluorooctane, 1,12-diiodoperfluorododecane, 1,16-diiodoperfluorohexadecane, diiodomethane, 1,2-diiodoethane, 1,3-diiodo-n-propane, CF₂Br₂, BrCF₂CF₂Br, CF₃CFBrCF₂Br, CFClBr₂, BrCF₂CFClBr, CFBrClCFClBr, BrCF₂CF₂CF₂Br, BrCF₂CFBrOCF₃, 1-bromo-2-iodoperfluoroethane, 1-bromo-3-iodoperfluoropropane, 1-bromo-4-iodoperfluorobutane, 2-bromo-3-iodoperfluorobutane, 3-bromo-4-iodoperfluorobutene-1,2-bromo-4-iodoperfluorobutene-1, and a monoiodomonobromo-substituted product, a diiodomonobromo-substituted product, and a (2-iodoethyl) and (2-bromoethyl)-substituted product of benzene, and one of these compounds may be used singly, or these compounds can also be used as a combination.

Among these, 1,4-diiodoperfluorobutane, 1,6-diiodoperfluorohexane, and 2-iodoperfluoropropane are preferably used from the viewpoint of polymerization reactivity, crosslinkability, availability, and the like.

The amount of the chain transfer agent used is usually 1 to 50,000 ppm by mass, and preferably 1 to 20,000 ppm by mass, based on the total amount of the fluoromonomer fed. The amount of the chain transfer agent used is preferably an amount such that the chain transfer agent is completely consumed during the polymerization of the fluoromonomer and does not remain in the aqueous dispersion containing the fluoropolymer so as not to deteriorate as much as possible the efficiency of removing the fluorine-containing surfactant having a hydrophilic group. Accordingly, the amount of the chain transfer agent used is more preferably 10,000 ppm by mass or less, even more preferably 5,000 ppm by mass or less, yet more preferably 1,000 ppm by mass or less, particularly preferably 500 ppm by mass or less, and most preferably 200 ppm by mass or less, based on the total amount of the fluoromonomer fed.

The chain transfer agent may be added to the reaction vessel at once before the beginning of the polymerization, may be added at once after the beginning of the polymerization, may be added in multiple portions during the polymerization, or may be added continuously during the polymerization.

### (Other additives)

Additives such as buffers, pH adjusters, stabilizing aids, and dispersion stabilizers can be used in the polymerization of the fluoromonomer. In the polymerization of the fluoromonomer, radical scavengers and decomposers may be added to regulate the polymerization rate and the molecular weight. Also, fluorine-free anionic surfactants, fluorine-free nonionic surfactants, fluorine-free cationic surfactants, and the like may be used in the polymerization of the fluoromonomer.

The stabilizing aid is preferably paraffin wax, fluorine-containing oil, a fluorine-containing solvent, silicone oil, or the like. One stabilizing aid may be used singly, or two or more may be used in combination. The stabilizing aid is more preferably paraffin wax. The paraffin wax may be in the form of liquid, semi-solid, or solid at room temperature, and is preferably a saturated hydrocarbon having 12 or more carbon atoms. The paraffin wax usually preferably has a melting point of 40 to 65°C, and more preferably 50 to 65°C.

The amount of the stabilizing aid used is preferably 0.1 to 12% by mass, and more preferably 0.1 to 8% by mass, based on the mass of the aqueous medium used. Desirably, the stabilizing aid is sufficiently hydrophobic so that the stabilizing aid is completely separated from the aqueous dispersion after polymerization, and does not serve as a contaminating component.

### (Polymerization conditions)

The fluoromonomer can be polymerized at normal pressure and temperature. Usually, the polymerization temperature is 5 to 120°C, and the polymerization pressure is 0.05 to 10 MPaG. The polymerization temperature and the polymerization pressure are suitably determined according to the type of monomer, the molecular weight of the target fluoropolymer, the reaction rate, and the like.

### (Aqueous dispersion obtained by polymerization)

Polymerization of the fluoromonomer yields an aqueous dispersion containing the fluoropolymer. The content of the fluoropolymer in the aqueous dispersion as polymerized is usually 8 to 50% by mass based on the aqueous dispersion.

The aqueous dispersion obtained by polymerizing the fluoromonomer usually contains, other than the fluoropolymer, a fluorine-containing surfactant used when polymerizing the fluoromonomer. Also, the aqueous dispersion obtained by polymerizing the fluoromonomer may contain, other than the fluoropolymer, a fluorine-containing compound having a hydrophilic group produced by polymerizing the fluoromonomer. The fluorine-containing compound having a hydrophilic group as used herein includes a fluorine-containing surfactant added during the polymerization and a fluorine-containing compound having a hydrophilic group produced by the polymerization of a fluoromonomer.

The hydrophilic group contained in the fluorine-containing compound as used herein is preferably an anionic group such as an acid group, e.g., -NH₂, -PO₃M, -OPO₃M, -SO₃M, - OSO₃M, and -COOM, wherein M represents a cation. In particular, the hydrophilic group is preferably -SO₃M or -COOM, and more preferably -COOM.

A typical fluorine-containing compound having a hydrophilic group in the aqueous dispersion obtained by polymerization is a fluorine-containing compound having a hydrophilic group and having a molecular weight of 1,000 g/mol or less. The production method of the present disclosure makes it possible to produce a fluoropolymer aqueous dispersion having a reduced content of the fluorine-containing compound having a hydrophilic group and having a molecular weight of 1,000 g/mol or less.

In one embodiment, the aqueous dispersion obtained by the polymerization contains a fluorine-containing surfactant added during the polymerization as the fluorine-containing compound having a hydrophilic group. The fluorine-containing surfactant added during the polymerization is as described above for the fluorine-containing surfactant used in the polymerization of the fluoromonomer.

The content of the fluorine-containing surfactant in the aqueous dispersion obtained by the polymerization may be 10 ppm by mass or more, 100 ppm by mass or more, or 1,000 ppm by mass or more, and may be 10% by mass or less, 5% by mass or less, or 1% by mass or less, based on the fluoropolymer in the aqueous dispersion.

In one embodiment, the aqueous dispersion obtained by polymerization contains a fluorine-containing surfactant having 7 or fewer carbon atoms added during the polymerization as the fluorine-containing compound having a hydrophilic group. The fluorine-containing surfactant having 7 or fewer carbon atoms added during the polymerization is as described above for the fluorine-containing surfactant used in the polymerization of the fluoromonomer.

The content of the fluorine-containing surfactant having 7 or fewer carbon atoms in the aqueous dispersion obtained by the polymerization may be 10 ppm by mass or more, 100 ppm by mass or more, or 1,000 ppm by mass or more, and may be 10% by mass or less, 5% by mass or less, or 1% by mass or less, based on the fluoropolymer in the aqueous dispersion.

The content of the fluorine-containing compound having a hydrophilic group in the aqueous dispersion obtained by the polymerization (the total amount of the content of the fluorine-containing surfactant added during the polymerization and the content of the fluorine-containing compound having a hydrophilic group produced by the polymerization of the fluoromonomer) may be 10 ppm by mass or more, 100 ppm by mass or more, or 1,000 ppm by mass or more, and may be 10% by mass or less, 5% by mass or less, or 1% by mass or less, based on the fluoropolymer in the aqueous dispersion.

In one embodiment, the aqueous dispersion obtained by the polymerization contains a compound represented by the following general formula (1) as the fluorine-containing compound having a hydrophilic group:

General formula (1): [X-Rf-A⁻]ᵢMⁱ⁺

wherein X is H, Cl, Br, F, or I; Rf is a linear or branched, partially fluorinated or fully fluorinated aliphatic group, or a linear or branched, partially fluorinated or fully fluorinated aliphatic group interrupted by at least one oxygen atom; A⁻ is an acid group; Mⁱ⁺ is a cation having a valence of i; and i represents an integer of 1 to 3.

In one embodiment, the aqueous dispersion obtained by the polymerization contains a compound represented by the following general formula (2) as the fluorine-containing compound having a hydrophilic group:

General formula (2): [Cₙ₋₁F₂ₙ₋₁COO⁻]M⁺

wherein n is an integer of 9 to 14, and M⁺ represents a cation.

The compound represented by general formula (2) (perfluoroalkanoic acid) is known to be formed during polymerization when perfluoro(alkyl vinyl ether) or the like is used as a fluoromonomer (see International Publication No. WO 2019/161153).

In one embodiment, the aqueous dispersion obtained by the polymerization contains a compound represented by the following general formula (3) as the fluorine-containing compound having a hydrophilic group:

General formula (3) : [R¹-O-L-CO₂⁻]M⁺

wherein R¹ is a linear or branched, partially fluorinated or fully fluorinated aliphatic group, or a linear or branched, partially fluorinated or fully fluorinated aliphatic group interrupted by at least one oxygen atom; L represents a linear or branched non-fluorinated, partially fluorinated, or fully fluorinated alkylene group; and M⁺ represents a cation.

In one embodiment, the aqueous dispersion obtained by the polymerization contains a compound represented by general formula (4) as the fluorine-containing compound having a hydrophilic group:

General formula (4) : [H-(CF₂)ₘCO₂⁻]M⁺

wherein m is an integer of 3 to 19, and M⁺ represents a cation.

### (Addition of nonionic surfactant to aqueous dispersion)

In the production method of the present disclosure, a nonionic surfactant is added to the aqueous dispersion obtained by the polymerization. By adding a nonionic surfactant, the dispersibility of the fluoropolymer in the aqueous dispersion can be increased, and the dispersibility of the fluoropolymer can be maintained even during the ion exchange treatment or the adsorption treatment. As a result, the content of the fluorine-containing compound having a hydrophilic group in the aqueous dispersion can be surprisingly reduced, and also an aqueous dispersion having excellent dispersion stability can be produced.

The nonionic surfactant is usually free of a charged group and has a hydrophobic moiety that is a long chain hydrocarbon. The hydrophilic moiety of the nonionic surfactant contains water-soluble functional groups such as a chain of ethylene ether derived from polymerization with ethylene oxide.

Examples of the nonionic surfactant are as follows.

Polyoxyethylene alkyl ether, polyoxyethylene alkylphenyl ether, polyoxyethylene alkyl ester, sorbitan alkyl ester, polyoxyethylene sorbitan alkyl ester, glycerol ester, and derivatives thereof.

Specific examples of polyoxyethylene alkyl ether: polyoxyethylene lauryl ether, polyoxyethylene cetyl ether, polyoxyethylene stearyl ether, polyoxyethylene oleyl ether, and polyoxyethylene behenyl ether.

Specific examples of polyoxyethylene alkylphenyl ether: polyoxyethylene nonylphenyl ether and polyoxyethylene octylphenyl ether.

Specific examples of polyoxyethylene alkyl ester: polyethylene glycol monolaurate, polyethylene glycol monooleate, and polyethylene glycol monostearate.

Specific examples of sorbitan alkyl ester: polyoxyethylene sorbitan monolaurate, polyoxyethylene sorbitan monopalmitate, polyoxyethylene sorbitan monostearate, and polyoxyethylene sorbitan monooleate.

Specific examples of polyoxyethylene sorbitan alkyl ester: polyoxyethylene sorbitan monolaurate, polyoxyethylene sorbitan monopalmitate, and polyoxyethylene sorbitan monostearate.

Specific examples of glycerol ester: glycerol monomyristate, glycerol monostearate, and glycerol monooleate.

Specific examples of derivatives: polyoxyethylene alkylamine, polyoxyethylene alkylphenyl-formaldehyde condensates, and polyoxyethylene alkyl ether phosphate.

The ethers and esters may have an HLB value of 10 to 18.

Examples of nonionic surfactants include Triton(R) X series (X15, X45, X100, etc.), Tergitol(R) 15-S series, and Tergitol(R) TMN series (TMN-6, TMN-10, TMN-100X, etc.), Tergitol(R) L series manufactured by Dow Chemical Company, Pluronic(R) R series (31R1, 17R2, 10R5, 25R4 (m to 22, n to 23), and Iconol(R) TDA series (TDA-6, TDA-9, TDA-10) manufactured by BASF.

The nonionic surfactant is preferably a fluorine-free nonionic surfactant. Examples include ether-type nonionic surfactants such as polyoxyethylene alkyl phenyl ether, polyoxyethylene alkyl ether, and polyoxyethylene alkylene alkyl ether; polyoxyethylene derivatives such as ethylene oxide/propylene oxide block copolymers; ester-type nonionic surfactants such as sorbitan fatty acid esters, polyoxyethylene sorbitan fatty acid esters, polyoxyethylene sorbitol fatty acid esters, glycerin fatty acid esters, and polyoxyethylene fatty acid esters; and amine-based nonionic surfactants such as polyoxyethylene alkyl amine and alkylalkanolamide.

The hydrophobic group of the nonionic surfactant may be any of an alkylphenol group, a linear alkyl group, and a branched alkyl group.

The nonionic surfactant is preferably a nonionic surfactant represented by general formula (i):

R⁶-O-A¹-H (i)

wherein R⁶ is a linear or branched primary or secondary alkyl group having 8 to 18 carbon atoms, and A¹ is a polyoxyalkylene chain.

In general formula (i), the number of carbon atoms in R⁶ is preferably 10 to 16, and more preferably 12 to 16. When the number of carbon atoms in R⁶ is 18 or less, the aqueous dispersion likely has excellent precipitation stability. On the other hand, when the number of carbon atoms in R⁶ exceeds 18, handleability is poor because of the high flow temperature. When the number of carbon atoms of R⁶ is 8 or less, the surface tension of the aqueous dispersion is increased and, thus, permeability and wettability are likely impaired.

The polyoxyalkylene chain of A¹ may be composed of oxyethylene and oxypropylene. The polyoxyalkylene chain is a polyoxyalkylene chain in which the average number of repeating oxyethylene groups is 5 to 20 and the average number of repeating oxypropylene groups is 0 to 2, and is a hydrophilic group. The number of oxyethylene units may have either a broad or narrow monomodal distribution as typically supplied, or a broader or bimodal distribution which may be obtained by blending. When the average number of repeating oxypropylene groups is greater than 0, the oxyethylene groups and oxypropylene groups in the polyoxyalkylene chain may be arranged in blocks or randomly. From the viewpoint of viscosity and precipitation stability of the aqueous dispersion, a polyoxyalkylene chain composed of an average repeating number of 7 to 12 oxyethylene groups and an average repeating number of 0 to 2 oxypropylene groups is preferable. In particular, A¹ having 0.5 to 1.5 oxypropylene groups on average favorably results in reduced foamability, and is thus preferable.

More preferably, R⁶ is (R') (R")HC-, wherein R' and R'' are the same or different linear, branched, or cyclic alkyl groups, and the total number of carbon atoms is at least 5, and preferably 7 to 17. Preferably, at least one of R' and R'' is a branched or cyclic hydrocarbon group.

Specific examples of the polyoxyethylene alkyl ether include C₁₃H₂₇-O-(C₂H₄O)ₙ-H, C₁₂H₂₅-O-(C₂H₄O)ₙ-H, C₁₀H₂₁CH(CH₃)CH₂-O-(C₂H₄O)ₙ-H, C₁₃H₂₇-O-(C₂H₄O)ₙ-(CH(CH₃)CH₂O)-H, C₁₆H₃₃-O-(C₂H₄O)ₙ-H, and HC(C₅H₁₁)(C₇H₁₅)-O-(C₂H₄O)ₙ-H, wherein n is an integer of 1 or greater. Examples of commercially available products of the polyoxyethylene alkyl ether include Genapol X series (manufactured by Clariant) such as Genapol X080 (trade name), NOIGEN TDS series (manufactured by DKS Co., Ltd.) such as NOIGEN TDS-80 (trade name), LEOCOL TD series (manufactured by Lion Corp.) such as LEOCOL TD-90 (trade name), LIONOL(R) TD series (manufactured by Lion Corp.), T-Det A series (manufactured by Harcros Chemicals Inc.) such as T-Det A 138 (trade name), and Tergitol(R) 15 S series (manufactured by Dow Chemical Company).

The nonionic surfactant is preferably an ethoxylate of 2,6,8-trimethyl-4-nonanol having about 4 to about 18 ethylene oxide units on average, an ethoxylate of 2,6,8-trimethyl-4-nonanol having about 6 to about 12 ethylene oxide units on average, or a mixture thereof. This type of nonionic surfactant is also commercially available, for example, as TERGITOL TMN-6, TERGITOL TMN-10, and TERGITOL TMN-100X (all trade names, manufactured by Dow Chemical Co., Ltd.).

The hydrophobic group of the nonionic surfactant may be any of an alkylphenol group, a linear alkyl group, and a branched alkyl group. Examples of the nonionic surfactant include a nonionic surfactant represented by general formula (ii):

R⁷-C₆H₄-O-A²-H (ii)

wherein R⁷ is a linear or branched alkyl group having 4 to 12 carbon atoms, and A² is a polyoxyalkylene chain. Specific examples of the nonionic surfactant include Triton(R) X-100 (trade name, manufactured by Dow Chemical Co., Ltd.).

The polyoxyalkylene chain of A² may be composed of oxyethylene and oxypropylene. The polyoxyalkylene chain is a polyoxyalkylene chain in which the average number of repeating oxyethylene groups is 5 to 20 and the average number of repeating oxypropylene groups is 0 to 2, and is a hydrophilic group. The number of oxyethylene units may have either a broad or narrow monomodal distribution as typically supplied, or a broader or bimodal distribution which may be obtained by blending. When the average number of repeating oxypropylene groups is more than 0, the oxyethylene groups and oxypropylene groups in the polyoxyalkylene chain may be arranged in blocks or randomly. From the viewpoint of viscosity and precipitation stability of the aqueous dispersion, a polyoxyalkylene chain composed of oxyethylene groups with an average repeating number of 7 to 12 and oxypropylene groups with an average repeating number of 0 to 2 is preferable. In particular, A² having 0.5 to 1.5 oxypropylene groups on average favorably results in reduced foamability, and is thus preferable.

More preferably, R⁷ is a primary or secondary alkyl group, and more preferably (R') (R'')HC-, wherein R' and R'' are the same or different linear, branched, or cyclic alkyl groups, and the total number of carbon atoms is at least 5, and preferably 7 to 17. Preferably, at least one of R' and R'' is a branched or cyclic hydrocarbon group.

Examples of the nonionic surfactant also include polyol compounds. Specific examples include those described in International Publication No. WO 2011/014715. Typical examples of the polyol compound include compounds having one or more sugar units as polyol units. The sugar units may be modified to contain at least one long chain. Examples of suitable polyol compounds containing at least one long chain moiety include alkyl glycosides, modified alkyl glycosides, sugar esters, and combinations thereof. Examples of the sugars include, but are not limited to, monosaccharides, oligosaccharides, and sorbitanes. Examples of monosaccharides include pentoses and hexoses. Typical examples of monosaccharides include ribose, glucose, galactose, mannose, fructose, arabinose, and xylose. Examples of oligosaccharides include oligomers of 2 to 10 of the same or different monosaccharides. Examples of oligosaccharides include, but are not limited to, saccharose, maltose, lactose, raffinose, and isomaltose.

Typically, sugars suitable for use as polyol compounds include cyclic compounds containing a 5-membered ring of four carbon atoms and one heteroatom (typically oxygen or sulfur, preferably oxygen atom), or cyclic compounds containing a 6-membered ring of five carbon atoms and one heteroatom as described above, preferably, an oxygen atom. These further contain at least two or at least three hydroxy groups (-OH groups) bonded to the carbon ring atoms. Typically, the sugars are modified in that one or more hydrogen atoms of hydroxy groups (and/or hydroxyalkyl groups) bonded to the carbon ring atoms are replaced by a long chain residue such that an ether or ester bond is created between the long chain residue and the sugar moiety. The sugar-based polyol may contain a single sugar unit or a plurality of sugar units. The single sugar unit or the plurality of sugar units may be modified with a long chain moiety described above. Specific examples of sugar-based polyol compounds include glycosides, sugar esters, sorbitan esters, and mixtures and combinations thereof.

A preferable type of polyol compound is an alkyl or modified alkyl glucoside. This type of surfactant contains at least one glucose moiety. Examples include compounds represented by the formula: 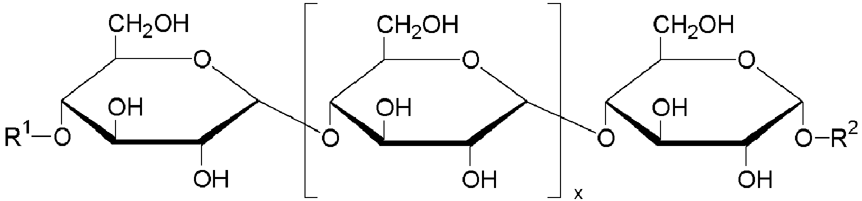 wherein x represents 0, 1, 2, 3, 4, or 5, and R¹ and R² each independently represent H or a long chain unit containing at least 6 carbon atoms, provided that at least one of R¹ and R² is not H. Typical examples of R¹ and R² include aliphatic alcohol residues. Examples of the aliphatic alcohols include hexanol, heptanol, octanol, nonanol, decanol, undecanol, dodecanol (lauryl alcohol), tetradecanol, hexadecanol (cetyl alcohol), heptadecanol, octadecanol (stearyl alcohol), eicosanoic acid, and combinations thereof. It is understood that the above formula represents specific examples of alkyl polyglucosides showing glucose in a pyranose form but other sugars or the same sugars but in different enantiomeric or diastereomeric forms may also be used.

Alkyl glucosides can be obtained by, for example, acid-catalyzed reactions of glucose, starch, or n-butyl glucoside with aliphatic alcohols, which typically yields a mixture of various alkyl glucosides (Alkylpolygylcoside, Rompp, Lexikon Chemie, Version 2.0, Stuttgart/New York, Georg Thieme Verlag, 1999). Examples of the aliphatic alcohols include hexanol, heptanol, octanol, nonanol, decanol, undecanol, dodecanol (lauryl alcohol), tetradecanol, hexadecanol (cetyl alcohol), heptadecanol, octadecanol (stearyl alcohol), eicosanoic acid, and combinations thereof. Alkyl glucosides are also commercially available under the trade name GLUCOPON or DISPONIL from Cognis GmbH, Dusseldorf, Germany.

Examples of other nonionic surfactants include bifunctional block copolymers supplied from BASF as Pluronic(R) R series and tridecyl alcohol alkoxylates supplied from BASF as Iconol(R) TDA series.

The nonionic surfactant is preferably at least one selected from the group consisting of a nonionic surfactant represented by general formula (i) and a nonionic surfactant represented by general formula (ii), and more preferably a nonionic surfactant represented by general formula (i).

Preferably, the nonionic surfactant does not contain an aromatic moiety.

The nonionic surfactant is preferably at least one selected from the group consisting of 2,6,8-trimethyl-4-nonanol ethoxylates having about 4 to about 18 ethylene oxide units on average, 2,6,8-trimethyl-4-nonanol ethoxylates having about 6 to about 12 ethylene oxide units on average, C₁₃H₂₇-O-(C₂H₄O)ₙ-H, C₁₂H₂₅-O-(C₂H₄O)ₙ-H, C₁₀H₂₁CH(CH₃)CH₂-O-(C₂H₄O)ₙ-H, C₁₃H₂₇-O-(C₂H₄O)ₙ-(CH(CH₃)CH₂O)-H, C₁₆H₃₃-O-(C₂H₄O)ₙ-H, and HC(C₅H₁₁)(C₇H₁₅)-O-(C₂H₄O)ₙ-H, wherein n is an integer of 1 or more.

The nonionic surfactant is added to the aqueous dispersion obtained by the polymerization and, accordingly, an aqueous dispersion is preferably prepared in which the content of the nonionic surfactant in the aqueous dispersion is 5% by mass or more based on the fluoropolymer. The content of the nonionic surfactant in the aqueous dispersion containing the nonionic surfactant is more preferably 7% by mass or more and even more preferably 9% by mass or more, and is preferably 30% by mass or less, more preferably 25% by mass or less, and even more preferably 20% by mass or less.

The content of the nonionic surfactant is a value calculated according to the equation: N = [(Y-Z) / Z] × 100 (% by mass) from the heating residue (Y g) obtained by heating about 1 g (X g) of a sample at 110°C for 30 minutes and the heating residue (Z g) obtained by heating the resulting heating residue (Y g) at 300°C for 30 minutes.

### (Regulation of pH and regulation of temperature of aqueous dispersion)

The aqueous dispersion obtained by the polymerization usually has a pH lower than 7 and a temperature lower than 35°C. In the production method of the present disclosure, before the aqueous dispersion is brought into contact with a treatment agent, the pH of the aqueous dispersion is regulated to 7 or higher, and the temperature of the aqueous dispersion is regulated to 35°C or higher. Adding a nonionic surfactant to the aqueous dispersion and also regulating the pH and the temperature of the aqueous dispersion before performing an ion exchange treatment or an adsorption treatment enable the content of the fluorine-containing compound having a hydrophilic group in the eventually obtained aqueous dispersion to be surprisingly reduced.

The pH of the aqueous dispersion to be subjected to the ion exchange treatment or the adsorption treatment is 7 or higher, preferably 8 or higher, and more preferably 9 or higher, and is preferably 14 or lower, more preferably 13 or lower, and even more preferably 12 or lower.

The pH can be regulated by adding an alkali such as ammonia to the aqueous dispersion.

The temperature of the aqueous dispersion to be subjected to the ion exchange treatment or the adsorption treatment is 35°C or higher, preferably 37°C or higher, and more preferably 39°C or higher, and is preferably lower than the cloud point of the nonionic surfactant and more preferably lower than a temperature that is 10°C lower than the cloud point of the nonionic surfactant. The temperature of the aqueous dispersion to be subjected to the ion exchange treatment or the adsorption treatment, for example, may be 50°C or lower or 48°C or lower.

The content of the fluoropolymer to be subjected to the ion exchange treatment or the adsorption treatment is preferably 10% by mass or more based on the mass of the aqueous dispersion. A preferable lower limit of the fluoropolymer content is 15% by mass or more, 20% by mass or more, 25% by mass or more, or 30% by mass or more. The upper limit of the fluoropolymer content is preferably 60% by mass or less, more preferably 55% by mass or less, and even more preferably 50% by mass or less.

### (Ion exchange treatment or adsorption treatment)

In the production method of the present disclosure, after adding a nonionic surfactant and also regulating the pH and the temperature of the aqueous dispersion, the aqueous dispersion containing the nonionic surfactant and having a regulated pH and temperature is subjected to an ion exchange treatment or an adsorption treatment. The ion exchange treatment or the adsorption treatment can be performed by bringing the aqueous dispersion containing the nonionic surfactant and having a regulated pH and temperature into contact with at least one treatment agent selected from the group consisting of an ion exchange resin and an adsorbent. Bringing the aqueous dispersion containing the nonionic surfactant and having a regulated pH and temperature into contact with the treatment agent enables the content of the fluorine-containing compound having a hydrophilic group in the aqueous dispersion to be surprisingly reduced.

In the production method of the present disclosure, preferably the temperature of the aqueous dispersion is maintained at 35°C or higher during the ion exchange treatment or the adsorption treatment. The temperature of the aqueous dispersion during the ion exchange treatment or the dispersion treatment is preferably 37°C or higher and more preferably 39°C or higher, and is preferably lower than the cloud point of the nonionic surfactant and more preferably lower than a temperature that is 10°C lower than the cloud point of the nonionic surfactant. The temperature of the aqueous dispersion during the ion exchange treatment or the adsorption treatment, for example, may be 50°C or lower or may be 48°C or lower.

In the production method of the present disclosure, in the case of repeating the ion exchange treatment or the adsorption treatment, the pH is regulated to 7 or higher and the temperature is regulated to 35°C or higher at least once. In the case of repeating the ion exchange treatment or the adsorption treatment, preferably the pH of the aqueous dispersion to be subjected to the treatment is regulated to 7 or higher and the temperature is regulated to 35°C or higher in any ion exchange treatment or adsorption treatment.

The pressure when bringing the aqueous dispersion into contact with the treatment agent is not limited, and may be, for example, 0.1 to 10 atm, and the contact can be made at normal pressure (about 1 atm).

The time for which the aqueous dispersion is brought into contact with the ion exchange resin is not limited, and may be 0.1 seconds to 100 hours, may be 1 second to 50 hours, or may be 1 second to 20 hours.

The amount of the treatment agent to be brought into contact with the aqueous dispersion is preferably 10,000 g or less, and is preferably 0.1 g or more, more preferably 1 g or more, even more preferably 5 g or more, yet more preferably 10 g or more, and particularly preferably 100 g or more, per 1,000 g of the fluoropolymer in the aqueous dispersion.

After the aqueous dispersion is brought into contact with the treatment agent, the aqueous dispersion and the treatment agent can be separated to recover the aqueous dispersion.

The aqueous dispersion may be brought into contact with the treatment agent in a batch-wise or fluidized manner.

The aqueous dispersion may be brought into contact with the treatment agent once, or may be two or more times. By repeating the contact between the aqueous dispersion and the treatment agent two or more times, the content of the fluorine-containing compound having a hydrophilic group in the aqueous dispersion can be further reduced. The number of times the aqueous dispersion and the treatment agent are brought into contact may be 10 or less.

A commonly used method can be used to bring the aqueous dispersion into contact with the treatment agent. For example, the contact can be made by a method involving adding the treatment agent to the aqueous dispersion and stirring the mixture, a column method involving introducing the aqueous dispersion into a column packed with the treatment agent, or the like. The packed column used in the column method may be any of a moving type, fixed bed type, or fluidized bed type.

In the case of using the method involving adding the treatment agent to the aqueous dispersion and stirring the mixture, the aqueous dispersion and the treatment agent are separated after the aqueous dispersion and the treatment agent are brought into contact. The method for separating the treatment agent and the aqueous dispersion is not limited, and, for example, a filtration method or the like can be used.

In addition, by increasing the contact area between the aqueous dispersion and the treatment agent, or the exchange capacity of the ion exchange resin, the same treatment efficiency as the treatment efficiency attained when the aqueous dispersion and the treatment agent are brought into contact multiple times can be obtained. In particular, when bringing the aqueous dispersion into contact with the treatment agent using a column method involving introducing the aqueous dispersion into a column packed with the treatment agent, preferably the contact area between the aqueous dispersion and the treatment agent or the exchange capacity of the ion exchange resin is increased.

The contact area (the surface area) of the treatment agent is preferably 0.0020 m²/g or more, more preferably 0.0030 m²/g or more, even more preferably 0.0040 m²/g or more, and particularly preferably 0.0050 m²/g or more, based on the mass of the fluoropolymer in the aqueous dispersion. The upper limit is not limited and may be, for example, 5.0 m²/g or less.

The exchange capacity of the ion exchange resin is preferably 0.25 meq/g or more, preferably 0.50 meq/g or more, preferably 1.00 meq/g or more, and preferably 1.50 meq/g or more, based on the mass of the fluoropolymer in the aqueous dispersion. The upper limit is not limited and may be, for example, 2,500 meq/g or less.

An anion exchange resin can preferably be used as the ion exchange resin. The anion exchange resin is preferably a resin having an ion exchange group represented by the following general formula (A1):

-N⁺R¹R²R³X⁻

(wherein R¹, R², and R³ are the same or different and are each a hydrogen atom or an organic group, and at least one of R¹, R², and R³ is an organic group having three or more carbon atoms; and X represents a counter ion); or an ion exchange group represented by the following general formula (A2):

-NR⁴R⁵

(wherein R⁴ and R⁵ are the same or different and are each a hydrogen atom or an organic group, and at least one of R⁴ and R⁵ is an organic group having two or more carbon atoms).

In general formula (A1), R¹, R², and R³ are the same or different and are each a hydrogen atom or an organic group. R¹, R², and R³ may all be organic groups; or one may be a hydrogen atom, and two may be organic groups. Moreover, two may each be a hydrogen atom, and one may be an organic group. The organic group has one or more carbon atoms. The organic group preferably has two or more carbon atoms. In one preferable embodiment, R¹, R², and R³ are organic groups having two or more carbon atoms.

In general formula (A1), at least one of R¹, R², and R³ is an organic group having three or more carbon atoms. One of R¹, R², and R³ may be an organic group having three or more carbon atoms, and two may each be hydrogen atoms or organic groups having 1 or 2 carbon atoms. Also, two may each be an organic group having three or more carbon atoms, and one may be a hydrogen atom or an organic group having 1 or 2 carbon atoms. R¹, R², and R³ may all be organic groups having three or more carbon atoms.

In R¹, R², and R³, the number of carbon atoms of the organic group is preferably 10 or less, more preferably 8 or less, and even more preferably 6 or less. The number of carbon atoms in the organic group may be 5 or less.

In general formula (A1), at least one of R¹, R², and R³ is preferably an organic group having 4 or more carbon atoms. Adopting such a configuration enables a specific fluorine-containing compound to be more efficiently removed.

The organic group in R¹, R², and R³ is preferably an alkyl group, an alkanol group, or an alkenyl group, more preferably an alkyl group or an alkanol group, and even more preferably an alkyl group.

The "alkyl group" as used herein is a general term referring to a group remaining after removing one hydrogen atom from an aliphatic saturated hydrocarbon, and also includes a linear or branched alkyl group having one or more carbon atoms or a cyclic alkyl group having three or more carbon atoms.

The "alkanol group" as used herein is a general term referring to a group remaining after removing one hydrogen atom from alkanol, and also includes a linear or branched alkanol group having one or more carbon atoms or a cyclic alkanol group having three or more carbon atoms.

R¹, R², and R³ are the same or different and are each an alkyl group having two or more carbon atoms or an alkanol group having one or more carbon atoms, and at least one of R¹, R², and R³ is preferably an alkyl group having three or more carbon atoms.

In a more preferable embodiment, R¹, R², and R³ are the same or different and are each an alkyl group having two or more carbon atoms or an alkanol group having two or more carbon atoms, and at least one of R¹, R², and R³ is an alkyl group having three or more carbon atoms.

In also a preferable embodiment, R¹, R², and R³ are the same or different and are each an alkyl group having two or more carbon atoms or an alkanol group having one or more carbon atoms, and at least one of R¹, R², and R³ is an alkyl group having four or more carbon atoms.

In also a preferable embodiment, R¹, R², and R³ are the same or different and are each an alkyl group having two or more carbon atoms or an alkanol group having two or more carbon atoms, and at least one of R¹, R², and R³ is an alkyl group having four or more carbon atoms.

The number of carbon atoms in the alkyl group is preferably 10 or less, more preferably 8 or less, and even more preferably 6 or less. The number of carbon atoms of the alkyl group may be 5 or less.

The number of carbon atoms in the alkanol group is preferably 10 or less, more preferably 8 or less, and even more preferably 6 or less. The number of carbon atoms of the alkanol group may be 5 or less.

In general formula (A1), X is a counter ion. Examples of X include Cl, OH, Br, I, NO₃, and SO₄, and X is preferably Cl or OH. Note that, in the case of a divalent anion such as SO₄, one counter ion is coordinated to two molecules of the repeating unit of general formula (A1).

In general formula (A2), R⁴ and R⁵ are the same or different and are each a hydrogen atom or an organic group, and at least one of R⁴ and R⁵ is an organic group having two or more carbon atoms. R⁴ and R⁵ may all be organic groups. Also, one may be a hydrogen atom, and the other may be an organic group.

In general formula (A2), at least one of R⁴ and R⁵ is an organic group having two or more carbon atoms.

One of R⁴ and R⁵ may be an organic group having two or more carbon atoms, and the other may be a hydrogen atom or an organic group having one carbon atom. Also, R⁴ and R⁵ may both be organic groups each having two or more carbon atoms.

One of R⁴ and R⁵ may be an organic group having three or more carbon atoms, or may be an organic group having four or more carbon atom.

R⁴ and R⁵ are each preferably an organic groups having two or more carbon atoms.

In R⁴ and R⁵, the number of carbon atoms of the organic group is preferably 10 or less, more preferably 8 or less, and even more preferably 6 or less. The number of carbon atoms in the organic group may be 5 or less.

The organic group in R⁴ and R⁵ is preferably an alkyl group, an alkanol group, or an alkenyl group, more preferably an alkyl group or an alkanol group, and even more preferably an alkyl group.

In a more preferable embodiment, R⁴ and R⁵ are the same or different and are each an alkyl group or an alkanol group, and at least one of R⁴ and R⁵ is an alkyl group having two or more carbon atoms or an alkanol group having two or more carbon atoms.

The number of carbon atoms of the alkyl group is preferably 10 or less, more preferably 8 or less, and even more preferably 6 or less. The number of carbon atoms of the alkyl group may be 5 or less.

The number of carbon atoms in the alkanol group is preferably 10 or less, more preferably 8 or less, and even more preferably 6 or less. The number of carbon atoms of the alkanol group may be 5 or less.

In the anion exchange resin, preferably a group represented by general formula (A1) or a group represented by general formula (A2) is bonded to a resin matrix. In the anion exchange resin, for example, a group represented by general formula (A1) or a group represented by general formula (A2) is bonded to a resin matrix composed of a styrenic or acrylic polymer. The styrenic or acrylic polymer as a resin matrix is not limited, and, for example, a resin matrix that is used in a known anion exchange resin can be used. From the viewpoint of the efficiency of removing the fluorine-containing compounds having a hydrophilic group, the anion exchange resin preferably has a styrenic resin matrix.

Various degrees of basicity of the anion exchange resin can be set according to the type of polymer backbone and/or ion-exchange group.

The anion exchange resin preferably has a pore size of 1 to 5,000 Å. From the viewpoint of removal efficiency, the pore size is preferably 50 Å or more, more preferably 100 Å or more, and even more preferably 150 Å or more. The pore size may be 200 Å or more, or may be 250 Å or more. The pore size may be 1,000 Å or less. The pore size can be calculated by, for example, measuring the specific surface area and the total pore volume by a gas adsorption method.

From the viewpoint of removal efficiency, the anion exchange resin preferably has a total exchange capacity of 0.1 eq/L-resin or more. The total exchange capacity is more preferably 0.3 eq/L-resin or more, even more preferably 0.5 eq/L-resin or more, and particularly preferably 0.7 eq/L-resin or more. The upper limit is preferably 5.0 eq/L-resin or less, more preferably 3.0 eq/L-resin or less, and particularly preferably 2.0 eq/L-resin or less.

The moisture content of the anion exchange resin is preferably 20% by mass or more, more preferably 30 to 70% by mass, and even more preferably 35 to 65% by mass. Due to the moisture content of the anion exchange resin being 30% by mass or more, the fluorine-containing compound can be efficiently removed. Also, the fluorine-containing compound likely diffuses in the particles of the anion exchange resin. When the moisture content of the anion exchange resin is 70% by mass or less, a decreased strength of the particles of the anion exchange resin due to insufficient crosslinking can be suppressed.

The moisture content of the anion exchange resin can be measured by the following method. First, 10 mL of a sample formed into a standard shape is precisely measured with a graduated cylinder, then this resin is wrapped in cloth and centrifuged to remove any adhering moisture, and the mass of the resin is promptly measured. Subsequently, the resin is dried in a thermostatic dryer at 105°C for 4 hours and then cooled in a desiccator for 30 minutes, the mass of the dried resin is measured, and the moisture content is calculated using the following formula: Moisture content (% by mass) = (Mass (g) of resin before drying - Mass (g) of resin after drying)/Mass (g) of resin before drying × 100

The anion exchange resin is usually spherical. The average particle size of the anion exchange resin is preferably 0.1 to 5 mm, more preferably 0.2 to 2 mm, and particularly preferably 0.3 to 1.5 mm. When the average particle size of the anion exchange resin is within the above range, the packed column of the anion exchange resin is unlikely blocked. The average particle size is a value determined by a sieving method. Specifically, first, the anion exchange resin is placed in a sieve shaker, and the particle size distribution is measured by sieving. Then, the mesh size of a sieve corresponding to 50% of the total residue is determined, and is regarded as the average particle size.

The anion exchange resin may be a commercially available product, and examples include PFA694E and A592E manufactured by Purolite.

Also, the anion exchange resin may be a resin having an ion-exchange group (excluding the group represented by general formula (A1) and the group represented by general formula (A2)). Such an anion exchange resin may be a resin having at least one ion-exchange group selected from the group consisting of an amino group and a quaternary ammonium group (excluding the group represented by formula (A1) and the group represented by general formula (A2)). Such an anion exchange resin is preferably a group represented by the following general formula (B1):

-N⁺(CH₃)₃X⁻

(wherein X represents a counter ion) or a group represented by the following general formula (B2):

-N⁺(CH₃)₂(C₂H₄OH)X⁻

(wherein X represents a counter ion). Examples of X in general formulae (B1) and (B2) include Cl, OH, Br, I, NO₃, and SO₄, and X is preferably Cl or OH. Note that, in the case of a divalent anion such as SO₄, one counter ion is coordinated to two molecules of the repeating unit of general formula (A1).

In the anion exchange resin, an ion-exchange group (excluding the group represented by formula (A1) and the group represented by general formula (A2)) is preferably bonded to a resin matrix, and the resin matrix may be a styrenic or acrylic polymer. The styrenic or acrylic polymer as a resin matrix is not limited, and, for example, a resin matrix that is used in a known anion exchange resin can be used. From the viewpoint of the efficiency of removing the fluorine-containing compounds having a hydrophilic group, an anion exchange resin B preferably has a styrenic resin matrix.

The resin having an ion exchange group (excluding the group represented by general formula (A1) and the group represented by general formula (A2)) may be weakly basic or may be strongly basic. A strongly basic anion exchange resin is preferable. Various degrees of basicity of the anion exchange resin can be set according to the type of polymer backbone and/or ion-exchange group.

The resin having an ion exchange group (excluding the group represented by general formula (A1) and the group represented by general formula (A2)) preferably has a pore size of 1 to 5,000 Å. From the viewpoint of removal efficiency, the pore size is preferably 50 Å or more, more preferably 100 Å or more, and even more preferably 150 Å or more. The pore size may be 200 Å or more, or may be 250 Å or more. The pore size may be 1,000 Å or less. The pore size can be calculated by, for example, measuring the specific surface area and the total pore volume by a gas adsorption method.

From the viewpoint of removal efficiency, the resin having an ion exchange group (excluding the group represented by general formula (A1) and the group represented by general formula (A2)) preferably has a total exchange capacity of 0.1 eq/L-resin or more. The total exchange capacity is more preferably 0.3 eq/L-resin or more, even more preferably 0.5 eq/L-resin or more, and particularly preferably 0.7 eq/L-resin or more. While a larger total exchange capacity is more preferable, for example, the upper limit is preferably 5.0 eq/L-resin, more preferably 3.0 eq/L-resin or less, and particularly preferably 2.0 eq/L-resin or less.

The moisture content of the resin having an ion exchange group (excluding the group represented by general formula (A1) and the group represented by general formula (A2)) is preferably 20% by mass or more, more preferably 30 to 70% by mass, and even more preferably 35 to 65% by mass.

The resin having an ion exchange group (excluding the group represented by general formula (A1) and the group represented by general formula (A2)) is usually spherical.

The average particle size of a resin having an ion exchange group (excluding the group represented by general formula (A1) and the group represented by general formula (A2)) is preferably 0.1 to 5 mm, more preferably 0.2 to 2 mm, and particularly preferably 0.3 to 1.5 mm. When the average particle size is within the above range, the packed column of the anion exchange resin is unlikely blocked. The average particle size is a value determined by a sieving method. Specifically, first, the anion exchange resin is placed in a sieve shaker, and the particle size distribution is measured by sieving. Then, the mesh size of a sieve corresponding to 50% of the total residue is determined, and is regarded as the average particle size.

The resin having an ion exchange group (excluding the group represented by general formula (A1) and the group represented by general formula (A2)) may be a commercially available product, and, for example, the DIAION(TM) SA series and the like manufactured by Mitsubishi Chemical Corporation; A400, A300, and the like manufactured by Purolite; the Amberlite(TM) series and the Amberjet(TM) series such as IRA4002OH manufactured by DuPont de Nemours, Inc.; and the like can be used.

The ion exchange resin is preferably at least one selected from the group consisting of a resin in which the group represented by general formula (B1) is bonded to a styrenic polymer and a resin in which the group represented by general formula (B2) is bonded to a styrenic polymer. X in formulae (B1) and (B2), in particular, is preferably OH.

The adsorbent may be a synthetic adsorbent. The synthetic adsorbent is a porous resin that does not have an ion exchange group, and known synthetic adsorbents can be used. Examples of the ion exchange group include an amino group, a quaternary ammonium group, a carboxylic acid group, and a sulfonic acid group. Specific examples of the synthetic adsorbent include styrenic resins such as a styrenedivinylbenzene copolymer, acrylic resins and methacrylic resins such as a (meth)acrylic acid ester-ethylene glycol dimethacrylate copolymer, polyvinyl resins, and dextran resins. Specific examples of commercially available synthetic adsorbents include styrenic resins such as Diaion HP10, Diaion HP20, Diaion HP21, Diaion HP40, Diaion HP50, Sepabeads SP207, Sepabeads SP70, Sepabeads SP825, Sepabeads SP850, and Sepabeads SP207 (all manufactured by Mitsubishi Chemical Corporation) and Amberlite XAD1180N, Amberlite XAD2000, Amberlite XAD4, and Amberlite FPX66 (all manufactured by Organo Corporation); and acrylic resins such as Diaion HP2MG (manufactured by Mitsubishi Chemical Corporation) and Amberlite HXAD-7HP (manufactured by Organo Corporation).

The synthetic adsorbent preferably has a pore size of 1 to 5,000 Å. From the viewpoint of removal efficiency, the pore size is preferably 50 Å or more, more preferably 100 Å or more, and even more preferably 150 Å or more. The pore size may be 200 Å or more, and may be 250 Å or more. The pore size may be 1,000 Å or less. The pore size can be calculated by, for example, measuring the specific surface area and the total pore volume by a gas adsorption method.

The synthetic adsorbent preferably has a specific surface area of 300 m²/g or more. The specific surface area is more preferably 400 m²/g or more, even more preferably 500 m²/g or more, and yet more preferably 600 m²/g or more. The upper limit of the specific surface area is not limited and, for example, may be 2,000 m²/g or less, may be 1,500 m²/g or less, and may be 1,000 m²/g or less. The synthetic adsorbent is usually spherical and, from the viewpoint of removal efficiency, preferably has an average particle size of 0.1 to 2.0 mm, more preferably 0.2 to 1.5 mm, even more preferably 0.2 to 1.3 mm, and particularly preferably 0.3 to 1.0 mm. The average particle size of the synthetic adsorbent means a 50% mass value obtained by plotting an integrated mass after sieve classification on a graph.

From the viewpoint of increasing the removal efficiency, the synthetic adsorbent preferably contains water. The water content is preferably 20 to 80% by mass, more preferably 40 to 75% by mass, and particularly preferably 50 to 70% by mass.

Activated carbon can be produced from a carbonaceous material. The carbonaceous material is a material that yields activated carbon by carbonization, activation, or the like, and examples include wood, sawdust, charcoal, fruit husks such as coconut husks and walnut husks, plants such as fruit seeds, coal such as peat, lignite A, lignite B, bituminous coal, and anthracite, pitch such as petroleum pitch and coal pitch, coke, tar such as coal tar and petroleum tar, minerals such as petroleum distillation residues, natural materials such as cellulosic fibers such as cotton and rayon, and synthetic materials such as phenol resin, polyvinyl alcohol, and polyacrylonitrile. The form may be either powdery, granular, or fibrous, or may be what is obtained by shaping such a form.

Activated carbon preferably has a specific surface area of 500 m²/g or more. The specific surface area is more preferably 1,000 m²/g or more, even more preferably 1,500 m²/g or more, yet more preferably 1,800 m²/g or more, and particularly preferably 2,000 m²/g or more. The upper limit of the specific surface area is not limited, and may be, for example, 2,500 m²/g. The form of activated carbon is not limited, and may be, for example, pellet, granular, powdery, or spherical particles. Activated carbon may be a commercially available product. Examples of commercially available activated carbon include Shirasagi (TM) manufactured by Osaka Gas Chemical Co., Ltd., Filtrasorb (TM) CAL, Diahope (TM), and Diasorb (TM) manufactured by Calgon Carbon Japan, and Evadia (TM) series manufactured by Swing Corporation.

Activated carbon preferably has improved adsorption performance by receiving a steam activation treatment. In the steam activation treatment, activated carbon is preferably exposed to steam having a temperature of 120°C or higher such as 130 to 350°C or in particular 150 to 1,000°C, and a pressure of 0.2 MPa or higher such as 0.5 to 15 MPa or in particular 1 MPa to 15 MPa. The steam activation treatment time is generally 10 seconds to 50 hours such as 10 minutes to 10 hours. In activation, heating may be performed in a furnace.

The surface of activated carbon may be impregnated with a cation. Examples of cations include metal ions, metal oxide ions, and ammonium ions. Examples of metals include metal atoms of groups 1 to 13 of the periodic table (e.g., alkali metals (such as Li, Na, and K), and alkaline earth metals (such as Mg and Ca), Ti, Zr, V, Cr, Fe, Ni, Cu, and Zn).

### (Addition of nonionic surfactant to ion-exchange-treated or adsorption-treated aqueous dispersion)

In one embodiment of the production method of the present disclosure, a nonionic surfactant is added to the aqueous dispersion obtained after the aqueous dispersion is brought into contact with the treatment agent. By adding a nonionic surfactant, the dispersibility of the fluoropolymer in the ion-exchange-treated or adsorption-treated aqueous dispersion can be increased, and the aqueous dispersion can be smoothly concentrated. As a result, the content of the fluorine-containing compound having a hydrophilic group in the aqueous dispersion can be surprisingly reduced, and also an aqueous dispersion having excellent dispersion stability can be produced.

The nonionic surfactant added to the aqueous dispersion obtained after the aqueous dispersion is brought into contact with the treatment agent may be a nonionic surfactant that is exemplified as the nonionic surfactant to be added to the aqueous dispersion obtained by the polymerization. A nonionic surfactant that can be suitably used as the nonionic surfactant to be added to the aqueous dispersion obtained by the polymerization can also be suitably used as the nonionic surfactant to be added to the aqueous dispersion obtained after the aqueous dispersion is brought into contact with the treatment agent.

By adding a nonionic surfactant to the ion-exchange-treated or adsorption-treated aqueous dispersion, an aqueous dispersion is preferably prepared in which the content of the nonionic surfactant in the aqueous dispersion is 1 to 40% by mass based on the fluoropolymer. The content of the nonionic surfactant in the ion-exchange-treated or adsorption-treated aqueous dispersion is more preferably 5% by mass or more and is more preferably 30% by mass or less.

### (Concentration treatment)

In the production method of the present disclosure, the aqueous dispersion obtained after being brought into contact with the treatment agent may be concentrated.

Examples of the concentration method include phase separation concentration, electrophoresis, an ion exchanger method, and membrane concentration. The phase separation concentration, ion exchanger method, and membrane concentration can be carried out under conventionally known treatment conditions, and can be carried out by, but are not limited to, the methods described in International Publication No. WO 2004/050719, National Publication of International Patent Application No. 2002-532583, and Japanese Patent Laid-Open No. 55-120630.

The concentration method is preferably a method involving separating the aqueous dispersion into two or more phases and recovering the condensed phase, phase separation concentration or concentration by electrophoresis is preferable, and phase separation concentration is more preferable. The phase separation concentration can be performed, for example, by heating the aqueous dispersion to cause phase separation into a fluoropolymer-free phase (the supernatant phase) and a fluoropolymer-containing phase (the condensed phase), removing the fluoropolymer-free phase, and recovering the fluoropolymer-containing phase (the condensed phase).

The recovered fluoropolymer-containing phase (the condensed phase) contains the fluoropolymer, the nonionic surfactant and the aqueous medium, and also contains the fluorine-containing compound having a hydrophilic group, the content of which is lower than that before concentration.

The temperature of the phase separation concentration can be selected in reference to the cloud point of the nonionic surfactant contained in the aqueous dispersion. The temperature of the phase separation concentration is preferably equal to or higher than 10°C lower than the cloud point of the nonionic surfactant, and preferably equal to or lower than 10°C higher than the cloud point of the nonionic surfactant.

In the production method of the present disclosure, the phase separation concentration is also preferably performed repetitively. By repeating the phase separation concentration, the content of the fluorine-containing compound having a hydrophilic group in the aqueous dispersion can be easily reduced to the desired content.

How many times the phase separation concentrations is repeated is not limited, and is preferably two or more time and more preferably three or more times. The upper limit of repetition is not limited, and may be, for example, 10 or less. By repeating the phase separation concentration, the content of the fluorine-containing compound having a hydrophilic group can be further reduced.

When repeating the phase separation concentration two or more times, the first phase separation concentration is preferably performed by heating the aqueous dispersion at a temperature equal to or higher than a temperature that is 10°C lower than the cloud point of the nonionic surfactant and then allowing the aqueous dispersion to stand still to separate it into a supernatant phase and a condensed phase. The second or subsequent phase separation concentration is preferably performed by heating the aqueous dispersion to a temperature equal to or higher than a temperature that is 10°C lower than the cloud point of the nonionic surfactant and then allowing the aqueous dispersion to stand still to separate it into a supernatant phase and a condensed phase.

When repeating the phase separation concentration multiple times, it is possible that, except for the final phase separation concentration, the phase separation concentration is stopped when the solid concentration of the fluoropolymer in the aqueous dispersion reaches 48 to 52% by mass, an aqueous medium is added to the concentrated aqueous dispersion, and then the phase separation concentration is repeated. By stopping the phase separation concentration when the solid concentration of the fluoropolymer reaches the above range, each phase separation concentration can be completed in a short period of time without reducing the efficiency of removing the fluorine-containing compound having a hydrophilic group in each phase separation concentration and, as a result, the total time required for the phase separation concentration can be shortened.

The pH of the aqueous dispersion to be concentrated is preferably 4.0 to 12.0, more preferably 7.0 or higher, even more preferably 8.0 or higher, and particularly preferably 9.0 or higher. By regulating the pH of the aqueous dispersion to be within the above range, the rate of increasing the concentration of the fluoropolymer in the aqueous dispersion and the rate of removing the fluorine-containing compound having a hydrophilic group in the aqueous dispersion can be both increased, and thus the concentration of the fluoropolymer in the eventually obtained aqueous dispersion is increased.

The fluoropolymer content in the concentrated fluoropolymer aqueous dispersion is preferably 50% by mass or more, more preferably 55% by mass or more, and even more preferably 60% by mass or more, and is preferably 75% by mass or less, more preferably 73% by mass or less, even more preferably 71% by mass or less, and particularly preferably 70% by mass or less, based on the aqueous dispersion. The higher the fluoropolymer content in the fluoropolymer aqueous dispersion is, the easier it is to maintain a high fluoropolymer content even when various additives are added to the fluoropolymer aqueous dispersion. After being concentrated, the aqueous dispersion may be diluted to regulate the fluoropolymer content.

The content of the fluoropolymer in the aqueous dispersion can be determined by measuring the solid concentration of the aqueous dispersion and the content of the nonionic surfactant in the aqueous dispersion, and subtracting the content of the nonionic surfactant from the solid concentration of the aqueous dispersion. The solid concentration of the aqueous dispersion is a value calculated according to the equation: P = Z / X × 100 (% by mass) from the heating residue (Z g) obtained by heating about 1 g (X g) of a sample at 110°C for 30 minutes and further heating it at 300°C for 30 minutes.

### (Treatment of aqueous dispersion)

In the production method of the present disclosure, a nonionic surfactant can be added to the ion exchange-treated or adsorption-treated aqueous dispersion or to the concentrated aqueous dispersion. In particular, when the aqueous dispersion is concentrated by phase separation concentration, the content of the nonionic surfactant in the resulting aqueous dispersion may be reduced, and, by adding a nonionic surfactant to the concentrated aqueous dispersion, the dispersibility of the fluoropolymer in the concentrated aqueous dispersion can be increased.

As for the nonionic surfactant to be added to the aqueous dispersion, two nonionic surfactants having different hydrophilicities are preferably added. The index indicating the difference between hydrophilicities may be HLB, and, for example, a nonionic surfactant having an HLB of 13.00 or more and less than 13.50 and a nonionic surfactant having an HLB of 13.50 or more and 15.00 or less (preferably 14.50 or less, and more preferably 14.00 or less) are preferably included. By adding nonionic surfactants having different HLBs, foaming can also be suppressed without adding an antifoaming agent.

By adding a nonionic surfactant to the aqueous dispersion, an aqueous dispersion is preferably prepared in which the content of the nonionic surfactant in the aqueous dispersion is 4.0 to 12.0% by mass based on the fluoropolymer. The content of the nonionic surfactant in the aqueous dispersion is more preferably 4.5% by mass or more and even more preferably 5.0% by mass or more, and is more preferably 10% by mass or less, even more preferably 8.0% by mass or less, and yet more preferably 7.0% by mass or less.

In the production method of the present disclosure, a viscosity modifier can be added to the ion exchange-treated or adsorption-treated aqueous dispersion or to the concentrated aqueous dispersion.

A suitable viscosity modifier may be a fluorine-free anionic surfactant. The fluorine-free anionic surfactant usually has a hydrophilic moiety such as carboxylate, sulfonate or sulfate and a hydrophobic moiety that is a long chain hydrocarbon moiety such as alkyl.

Examples of the fluorine-free anionic surfactant include alkylsulfuric acids such as laurylsulfuric acid, alkylarylsulfonic acids such as dodecylbenzenesulfonic acid, sulfosuccinic acid alkyl esters, and salts thereof. The fluorine-free anionic surfactant may be one, or a combination of two or more, of such compounds.

The sulfosuccinic acid alkyl ester and a salt thereof may be a monoester, and is preferably a diester.

Examples of the sulfosuccinic acid alkyl ester and a salt thereof include sulfosuccinic acid alkyl esters represented by the general formula: R²¹-OCOCH (SO₃A²¹) CH₂COO-R²² and salts thereof, wherein R²¹ and R²² are the same or different and each represent an alkyl group having 4 to 12 carbon atoms, and A²¹ represents an alkali metal, an alkaline earth metal, or NH₄).

Examples of R²¹ and R²² include linear or branched alkyl groups such as n-butyl, iso-butyl, sec-butyl, n-pentyl, isopentyl, neopentyl, tert-pentyl, n-hexyl, iso-hexyl, tert-hexyl, n-heptyl, iso-heptyl, tert-heptyl, n-octyl, iso-octyl, tert-octyl, n-nonyl, iso-nonyl, tert-nonyl, n-decyl, and 2-ethylhexyl.

A²¹ is preferably Na, NH₄, or the like. Examples of the sulfosuccinic acid alkyl ester include di-n-octyl sulfosuccinate and di-2-ethylhexyl sulfosuccinate.

The fluorine-free anionic surfactant may have an acid group. The acid group is preferably selected from the group consisting of a carboxyl group, a sulfuric acid group, a sulfonic acid group, a phosphoric acid group, and a salt thereof, and, in particular, is preferably selected from the group consisting of a carboxyl group, a sulfuric acid group, a sulfonic acid group, and a salt thereof.

The fluorine-free anionic surfactant may further contain, in addition to the acid group, another group such as a polyoxyalkylene group having an oxyalkylene group with 2 to 4 carbon atoms, or an amino group. The amino group is not protonated.

The fluorine-free anionic surfactant is preferably an anionic hydrocarbon surfactant having a main chain composed of a hydrocarbon. Examples of the hydrocarbon include those having a saturated or unsaturated aliphatic chain with 6 to 40 carbon atoms, and preferably 8 to 20 carbon atoms. The saturated or unsaturated aliphatic chain may be either linear or branched, or may have a cyclic structure. The hydrocarbon may be aromatic, or may have an aromatic group. The hydrocarbon may contain a hetero atom such as oxygen, nitrogen, or sulfur.

Examples of the fluorine-free anionic surfactant include alkylsulfonic acids such as laurylsulfonic acid and salts thereof; alkylaryl sulfates and salts thereof; aliphatic (carboxylic) acids such as lauric acid and salts thereof; and alkyl phosphates, alkylaryl phosphates, and salts thereof; and in particular, those selected from the group consisting of sulfonic acids, carboxylic acids, and salts thereof are preferable; and aliphatic carboxylic acids and salts thereof are preferable. The aliphatic carboxylic acid or a salt thereof is preferably, for example, a saturated or unsaturated aliphatic carboxylic acid having 9 to 13 carbon atoms in which the terminal H may be replaced with -OH, or a salt thereof; the aliphatic carboxylic acid is preferably a monocarboxylic acid; and the monocarboxylic acid is preferably decanoic acid, undecanoic acid, undecenoic acid, lauric acid, or hydroxydodecanoic acid.

The fluorine-free anionic surfactant is preferably at least one selected from the group consisting of sulfosuccinic acid alkyl esters and salts thereof, alkylsulfuric acids and salts thereof, and monocarboxylic acids and salts thereof, more preferably at least one selected from the group consisting of dioctylsulfosuccinic acid, laurylsulfuric acid, decanoic acid, and salts thereof, and even more preferably at least one selected from the group consisting of dioctylsulfosuccinic acid, ammonium dioctylsulfosuccinate, ammonium laurylsulfate, and ammonium decanoate.

By adding a viscosity modifier to the aqueous dispersion, an aqueous dispersion is preferably prepared in which the content of the viscosity modifier in the aqueous dispersion is 10 to 5,000 ppm by mass based on the fluoropolymer. The content of the viscosity modifier in the aqueous dispersion is more preferably 50 ppm by mass or more and even more preferably 100 ppm by mass or more, and is more preferably 4,000 ppm by mass or less and even more preferably 3,000 ppm by mass or less.

In the production method of the present disclosure, a pH adjuster such as aqueous ammonia can also be added to the ion exchange-treated or adsorption-treated aqueous dispersion or to the concentrated aqueous dispersion, to regulate the pH of the aqueous dispersion. The pH of the aqueous dispersion is preferably 8 to 13, more preferably 9 to 12, and even more preferably 9 to 11.

The pH can be measured at 25°C in accordance with JIS K6893.

In the production method of the present disclosure, a preservative can be added to the ion exchange-treated or adsorption-treated aqueous dispersion or to the concentrated aqueous dispersion. By adding a preservative to the aqueous dispersion, the decomposition of the aqueous dispersion and the growth of bacteria can be suppressed while suppressing precipitation of the fluoropolymer, even when the aqueous dispersion is stored for a long period of time.

Examples of the preservative include isothiazolones, azoles, pronopol, chlorothalonil, methylsulfonyltetrachloropyridine, carbendazim, fluoroforbet, sodium diacetate, and diiodomethyl p-tolylsulfone.

By adding a preservative to the aqueous dispersion, an aqueous dispersion is preferably prepared in which the content of the preservative in the aqueous dispersion is 0.01 to 0.5% by mass based on the fluoropolymer. The content of the preservative in the aqueous dispersion is more preferably 0.05% by mass or more and is more preferably 0.2% by mass or less.

In the production method of the present disclosure, a water soluble polymer may be added to the ion exchange-treated or adsorption-treated aqueous dispersion, or to the concentrated aqueous dispersion. Examples of the water soluble polymer compound include methyl cellulose, alumina sol, polyvinyl alcohol, carboxylated vinyl polymer, polyethylene oxide (a dispersion stabilizer), polyethylene glycol (a dispersion stabilizer), polyvinylpyrrolidone (a dispersion stabilizer), phenol resin, urea resin, epoxy resin, melamine resin, polyester resin, polyether resin, acrylic silicone resin, silicone resin, silicone polyester resin, and polyurethane resin.

### 2. Fluoropolymer aqueous dispersion

The production method of the present disclosure provides a fluoropolymer aqueous dispersion having a reduced content of a fluorine-containing compound having a hydrophilic group and having 7 or fewer carbon atoms. According to the present disclosure, provided is a fluoropolymer aqueous dispersion containing a fluoropolymer, a nonionic surfactant, and a fluorine-containing compound having a hydrophilic group and having 7 or fewer carbon atoms, wherein the content of the fluoropolymer is 50 to 75% by mass based on the fluoropolymer aqueous dispersion, the content of the nonionic surfactant is 4.0 to 12% by mass based on the fluoropolymer, and the content of the fluorine-containing compound having a hydrophilic group and having 7 or fewer carbon atoms is more than 0 ppb by mass and less than 300 ppb by mass based on the fluoropolymer aqueous dispersion.

The fluoropolymer aqueous dispersion of the present disclosure contains a fluorine-containing compound having a hydrophilic group and having 7 or fewer carbon atoms. The content of the fluorine-containing compound having a hydrophilic group and having 7 or fewer carbon atoms in the aqueous dispersion is more than 0 ppb by mass and less than 300 ppb by mass based on the aqueous dispersion. A preferable upper limit of the content of the fluorine-containing compound having a hydrophilic group and having 7 or fewer carbon atoms in the aqueous dispersion is 280 ppb by mass or less, 260 ppb by mass or less, 240 ppb by mass or less, 220 ppb by mass or less, 200 ppb by mass or less, 180 ppb by mass or less, 160 ppb by mass or less, or 140 ppb by mass or less. A preferable lower limit of the content of the fluorine-containing compound having a hydrophilic group and having 7 or fewer carbon atoms in the aqueous dispersion is 0.1 ppb by mass or more, 1 ppb by mass or more, 5 ppb by mass or more, 10 ppb by mass or more, 20 ppb by mass or more, 30 ppb by mass or more, or 40 ppb by mass or more.

The fluorine-containing compound having a hydrophilic group and having 7 or fewer carbon atoms may be the above-described fluorine-containing surfactant having 7 or fewer carbon atoms used in the polymerization of the fluoromonomer. That is, the aqueous dispersion in one embodiment contains at least a fluorine-containing surfactant having 7 or fewer carbon atoms as the fluorine-containing compound having a hydrophilic group and having 7 or fewer carbon atoms.

Moreover, according to the production method of the present disclosure, not only the content of the fluorine-containing compound having a hydrophilic group and having 7 or fewer carbon atoms but also the content of a fluorine-containing compound having a hydrophilic group in the fluoropolymer aqueous dispersion can be reduced.

The fluoropolymer aqueous dispersion in one embodiment contains a fluorine-containing compound having a hydrophilic group. The content of the fluorine-containing compound having a hydrophilic group in the aqueous dispersion is more than 0 ppb by mass and less than 300 ppb by mass based on the aqueous dispersion. A preferable upper limit of the content of the fluorine-containing compound having a hydrophilic group and having 7 or fewer carbon atoms in the aqueous dispersion is 280 ppb by mass or less, 260 ppb by mass or less, 240 ppb by mass or less, 220 ppb by mass or less, 200 ppb by mass or less, 180 ppb by mass or less, 160 ppb by mass or less, or 140 ppb by mass or less. A preferable lower limit of the content of the fluorine-containing compound having a hydrophilic group and having 7 or fewer carbon atoms in the aqueous dispersion is 0.1 ppb by mass or more, 1 ppb by mass or more, 5 ppb by mass or more, 10 ppb by mass or more, 20 ppb by mass or more, 30 ppb by mass or more, or 40 ppb by mass or more.

The fluorine-containing compound having a hydrophilic group may be the above-described fluorine-containing surfactant used in the polymerization of the fluoromonomer. That is, the aqueous dispersion in one embodiment contains at least a fluorine-containing surfactant as the fluorine-containing compound having a hydrophilic group. A typical compound as the fluorine-containing surfactant is a fluorine-containing surfactant having a molecular weight of 1,000 g/mol or less and preferably 800 g/mol or less.

The fluoropolymer aqueous dispersion in one embodiment is substantially free of a compound represented by the following general formula (1) as the fluorine-containing compound having a hydrophilic group:

General formula (1): [X-Rf-A⁻]ᵢMⁱ⁺

wherein X is H, Cl, Br, F, or I; Rf is a linear or branched, partially fluorinated or fully fluorinated aliphatic group, or a linear or branched, partially fluorinated or fully fluorinated aliphatic group interrupted by at least one oxygen atom; A⁻ is an acid group; Mⁱ⁺ is a cation having a valence of i; and i represents an integer of 1 to 3.

The fluoropolymer aqueous dispersion in one embodiment is substantially free of a compound represented by the following general formula (2) as the fluorine-containing compound having a hydrophilic group:

General formula (2): [Cₙ₋₁F₂ₙ₋₁COO⁻]M⁺

wherein n is an integer of 9 to 14, and M⁺ represents a cation.

The compound represented by general formula (2) (perfluoroalkanoic acid) is known to be formed during polymerization when perfluoroalkyl vinyl ether or the like is used as a modifying monomer (see International Publication No. WO 2019/161153).

The fluoropolymer aqueous dispersion in one embodiment is substantially free of a compound represented by the following general formula (3) as the fluorine-containing compound having a hydrophilic group:

General formula (3): [R¹-O-L-CO₂⁻]M⁺

wherein R¹ is a linear or branched, partially fluorinated or fully fluorinated aliphatic group, or a linear or branched, partially fluorinated or fully fluorinated aliphatic group interrupted by at least one oxygen atom; L represents a linear or branched non-fluorinated, partially fluorinated, or fully fluorinated alkylene group; and M⁺ represents a cation.

The fluoropolymer aqueous dispersion in one embodiment is substantially free of a compound represented by general formula (4) as the fluorine-containing compound having a hydrophilic group:

General formula (4) : [H-(CF₂)ₘCO₂⁻]M⁺

wherein m is an integer of 3 to 19, and M⁺ represents a cation.

Herein, being substantially free of any of the compounds represented by general formulae (1) to (4) means that the content of any of the compounds represented by general formulae (1) to (4) in the fluoropolymer aqueous dispersion is 50 ppb by mass or less. The content of any of the compounds represented by general formulae (1) to (4) in the fluoropolymer aqueous dispersion is preferably 35 ppb by mass or less, more preferably 25 ppb by mass or less, even more preferably 10 ppb by mass or less, and yet more preferably 1 ppb by mass or less, and particularly preferably the fluorine-containing surfactant is below the detection limit of measurement by liquid chromatography-mass spectrometry (LC/MS).

The content of the fluorine-containing compound having a hydrophilic group in the fluoropolymer aqueous dispersion can be quantified by a known method. For example, the content can be quantified by LC/MS analysis.

First, methanol is added to the fluoropolymer aqueous dispersion, extraction is performed, and the resulting extract is subjected to LC/MS analysis. To further increase extraction efficiency, treatment by Soxhlet extraction, ultrasonic treatment, or the like may be performed.

The resulting extract is suitably concentrated by nitrogen purging, and the fluorine-containing compound having a hydrophilic group in the concentrated extract is measured by LC/MS.

From the resulting LC/MS spectrum, molecular weight information is extracted, and a match with the structural formula of a candidate fluorine-containing compound having a hydrophilic group is checked.

Thereafter, aqueous solutions having five or more different content levels of the confirmed fluorine-containing compound having a hydrophilic group are prepared, and LC/MS analysis of the aqueous solution of each content is carried out, and the relationship between the content and the area for the content is plotted, and a calibration curve is drawn.

Then, using the calibration curve, the area of the LC/MS chromatogram of the fluorine-containing compound having a hydrophilic group in the extract can be converted to the content of the fluorine-containing compound having a hydrophilic group.

Note that the resulting extract can be concentrated by nitrogen purging, thus enabling the lower quantification limit of the measurement method to be lowered.

The fluoropolymer contained in the fluoropolymer aqueous dispersion of the present disclosure will be described below.

The content of the fluoropolymer in the fluoropolymer aqueous dispersion is preferably 50% by mass or more, more preferably 55% by mass or more, even more preferably 57% by mass or more, and yet more preferably 60% by mass or more, and is preferably 75% by mass or less, more preferably 73% by mass or less, even more preferably 71% by mass or less, yet more preferably 70% by mass or less, and particularly preferably 69% by mass or less, based on the aqueous dispersion.

The nonionic surfactant may be a nonionic surfactant that can be used in the production method of the present disclosure. The content of the nonionic surfactant in the fluoropolymer aqueous dispersion is 4.0 to 12% by mass, is more preferably 4.5% by mass or more and even more preferably 5.0% by mass or more, and is more preferably 10% by mass or less, even more preferably 8.0% by mass or less, and yet more preferably 7.0% by mass or less.

Preferably the fluoropolymer aqueous dispersion of the present disclosure also contains a fluorine-free anionic surfactant. The fluorine-free anionic surfactant may be a fluorine-free anionic surfactant that can be used in the production method of the present disclosure. The content of the fluorine-free anionic surfactant in the fluoropolymer aqueous dispersion is preferably 10 to 5,000 ppm by mass, is more preferably 50 ppm by mass or more, and even more preferably 100 ppm by mass or more, and is more preferably 4,000 ppm by mass or less and even more preferably 3,000 ppm by mass or less, based on the fluoropolymer.

The viscosity of the fluoropolymer aqueous dispersion of the present disclosure is preferably 2.0 mPa·s or more, more preferably 5.0 mPa·s or more, even more preferably 10.0 mPa·s or more, and particularly preferably 15.0 mPa·s or more, and is preferably 100 mPa·s or less, more preferably 80 mPa·s or less, even more preferably 70 mPa·s or less, and particularly preferably 60 mPa·s or less.

The viscosity of the aqueous dispersion is measured using a B-type rotary viscometer (manufactured by Toki Sangyo Co., Ltd., rotor No. 2) under conditions of a rotational speed of 60 rpm, a measurement time of 120 seconds, and 25°C.

Preferably the fluoropolymer aqueous dispersion of the present disclosure also contains a preservative. The preservative may be a preservative that can be used in the production method of the present disclosure. The content of the preservative in the fluoropolymer aqueous dispersion is preferably 0.01 to 0.5% by mass, is more preferably 0.05% by mass or more, and is more preferably 0.2% by mass or less, based on the fluoropolymer.

The pH of the fluoropolymer aqueous dispersion of the present disclosure is preferably 8 to 13, more preferably 9 to 12, and even more preferably 9 to 11.

The pH can be measured at 25°C in accordance with JIS K6893.

The fluoropolymer aqueous dispersion of the present disclosure may contain a further component. The further component may be a water soluble polymer compound. Examples of the water soluble polymer compound include methyl cellulose, alumina sol, polyvinyl alcohol, carboxylated vinyl polymer, polyethylene oxide (a dispersion stabilizer), polyethylene glycol (a dispersion stabilizer), polyvinylpyrrolidone (a dispersion stabilizer), phenol resin, urea resin, epoxy resin, melamine resin, polyester resin, polyether resin, acrylic silicone resin, silicone resin, silicone polyester resin, and polyurethane resin.

The fluoropolymer aqueous dispersion of the present disclosure may be used in the form of an aqueous coating material by being mixed with, for example, a known compounding agent such as a pigment, a thickener, a dispersant, a antifoaming agent, an antifreezing agent, or a film-forming aid, or by being blended with another polymer compound.

Next, the fluoropolymer in the aqueous dispersion obtained by the production method of the present disclosure and the fluoropolymer in the aqueous dispersion of the present disclosure will now be described in more detail.

### (Fluoropolymer)

A fluoropolymer such as fluororesin or fluoroelastomer is obtained by polymerizing the fluoromonomer.

Examples of the fluoropolymer include a TFE polymer in which TFE is the monomer having the highest mole fraction (hereinafter, "the most abundant monomer") among the monomers in the polymer, a VDF polymer in which VDF is the most abundant monomer, and a CTFE polymer in which CTFE is the most abundant monomer.

The fluoropolymer preferably has an ion exchange rate (IXR) of higher than 53. A preferable fluoropolymer has either no ionic groups at all or a limited number of ionic groups resulting in an ion exchange rate higher than about 100. The ion exchange rate of the fluoropolymer is preferably 1,000 or more, more preferably 2,000 or more, and even more preferably 5,000 or more.

The TFE polymer may suitably be a TFE homopolymer, or may be a copolymer containing (1) TFE, (2) one or two or more fluorine-containing monomers each of which is different from TFE and has 2 to 8 carbon atoms, in particular VDF, HFP, or CTFE, and (3) a further monomer. Examples of the further monomer (3) include fluoro(alkyl vinyl ethers) having an alkyl group having 1 to 5 carbon atoms, particularly 1 to 3 carbon atoms; fluorodioxoles; perfluoroalkyl ethylenes; and ω-hydroperfluoroolefins.

The TFE polymer may also be a copolymer of TFE and one or two or more fluorine-free monomers. Examples of the fluorine-free monomers include alkenes such as ethylene and propylene; vinyl esters; and vinyl ethers. The TFE polymer may also be a copolymer of TFE, one or two or more fluorine-containing monomers having 2 to 8 carbon atoms, and one or two or more fluorine-free monomers.

The VDF polymer may suitably be a VDF homopolymer (PVDF), or may be a copolymer containing (1) VDF, (2) one or two or more fluoroolefins each of which is different from VDF and has 2 to 8 carbon atoms, in particular TFE, HFP, or CTFE, and (3) a perfluoro(alkyl vinyl ether) having an alkyl group having 1 to 5 carbon atoms, particularly 1 to 3 carbon atoms, or the like.

The CTFE polymer may suitably be a CTFE homopolymer, or may be a copolymer containing (1) CTFE, (2) one or two or more fluoroolefins each of which is different from CTFE and has 2 to 8 carbon atoms, in particular TFE or HFP, and (3) a perfluoro(alkyl vinyl ether) having an alkyl group having 1 to 5 carbon atoms, particularly 1 to 3 carbon atoms.

The CTFE polymer may also be a copolymer of CTFE and one or two or more fluorine-free monomers, and examples of the fluorine-free monomers include alkenes such as ethylene and propylene; vinyl esters; and vinyl ethers.

The fluoropolymer may be vitreous, plastic, or elastomeric. The fluoropolymer is amorphous or partially crystallized, and may be subjected to compression firing, melt fabrication, or non-melt fabrication.

In the production method of the present disclosure, a fluororesin is preferably produced as the fluoropolymer. The fluoropolymer aqueous dispersion of the present disclosure preferably contains a fluororesin as the fluoropolymer.

In the production method of the present disclosure, for example, (I) a tetrafluoroethylene polymer [TFE polymer (PTFE)] can be suitably produced as a non melt-processible fluororesin, and (II) an ethylene/TFE copolymer [ETFE], a TFE/HFP copolymer [FEP], a TFE/perfluoro(alkyl vinyl ether) copolymer [such as PFA or MFA], a TFE/perfluoroallyl ether copolymer, a TFE/VDF copolymer, or an electrolyte polymer precursor can be suitably produced as a melt-fabricable fluororesin.

The fluoropolymer is preferably a fluororesin, more preferably a fluororesin having a fluorine substitution percentage, calculated by the following formula, of 50% or higher, even more preferably a fluororesin having the fluorine substitution percentage of higher than 50%, yet more preferably a fluororesin having the fluorine substitution percentage of 55% or higher, yet more preferably a fluororesin having the fluorine substitution percentage of 60% or higher, yet more preferably a fluororesin having the fluorine substitution percentage of 75% or higher, particularly preferably a fluororesin having the fluorine substitution percentage of 80% or higher, and most preferably a fluororesin having the fluorine substitution percentage of 90 to 100%, i.e., a perfluororesin. Fluorine substitution percentage (%) = (Number of fluorine atoms bonded to carbon atoms constituting fluoropolymer)/ ((Number of hydrogen atoms bonded to carbon atoms constituting fluoropolymer) + (Number of fluorine atoms and chlorine atoms bonded to carbon atoms constituting fluoropolymer)) × 100

The fluoropolymer may have a core-shell structure. An example of the fluoropolymer having a core-shell structure is modified PTFE including a core of high molecular weight PTFE and a shell of a lower-molecular-weight PTFE or modified PTFE in the particle. Examples of such modified PTFE include PTFE described in Japanese National Publication of International Patent Application No. 2005/527652.

The core-shell structure may have the following structures.
Core: TFE homopolymer Shell: TFE homopolymer
Core: modified PTFE Shell: TFE homopolymer
Core: modified PTFE Shell: modified PTFE
Core: TFE homopolymer Shell: modified PTFE
Core: low molecular weight PTFE Shell: high molecular weight PTFE
Core: high molecular weight PTFE Shell: low molecular weight PTFE

In the fluoropolymer having the above core-shell structure, the lower limit of the proportion of the core is preferably 0.5% by mass, more preferably 1.0% by mass, even more preferably 2.0% by mass, yet more preferably 3.0% by mass, particularly preferably 5.0% by mass, and most preferably 10.0% by mass. The upper limit of the proportion of the core is preferably 99.5% by mass, more preferably 99.0% by mass, even more preferably 98.0% by mass, yet more preferably 97.0% by mass, particularly preferably 95.0% by mass, and most preferably 90.0% by mass.

In the fluoropolymer having the above core-shell structure, the lower limit of the proportion of the shell is preferably 0.5% by mass, more preferably 1.0% by mass, even more preferably 2.0% by mass, yet more preferably 3.0% by mass, particularly preferably 5.0% by mass, and most preferably 10.0% by mass. The upper limit of the proportion of the shell is preferably 99.5% by mass, more preferably 99.0% by mass, even more preferably 98.0% by mass, yet more preferably 97.0% by mass, particularly preferably 95.0% by mass, and most preferably 90.0% by mass.

In the fluoropolymer having the above core-shell structure, the core or the shell may be composed of two or more layers. For example, the fluoropolymer may have a trilayer structure including a core center portion of modified PTFE, a core outer layer portion of a TFE homopolymer, and a shell of modified PTFE.

Examples of the fluoropolymer having the above core-shell structure also include those in which a single particle of the fluoropolymer has a plurality of cores.

The non melt-processible fluororesin (I) and the melt-fabricable fluororesin (II) suitably produced by the production method of the present disclosure are preferably produced in the following manner.

### (I) Non melt-processible fluororesin

In the production method of the present disclosure, polymerization of TFE is usually performed at a polymerization temperature of 10 to 150°C and a polymerization pressure of 0.05 to 5 MPaG. For example, the polymerization temperature is more preferably 30°C or higher, and even more preferably 50°C or higher. Also, the polymerization temperature is more preferably 120°C or lower, and even more preferably 100°C or lower. Also, the polymerization pressure is more preferably 0.3 MPaG or higher and even more preferably 0.5 MPaG or higher, and is more preferably 5.0 MPaG or lower and even more preferably 3.0 MPaG or lower. In particular, from the viewpoint of improving the yield of the fluoropolymer, the polymerization pressure is preferably 1.0 MPaG or more, more preferably 1.2 MPaG or more, even more preferably 1.5 MPaG or more, and more preferably 2.0 MPaG or more.

In an embodiment, the polymerization reaction is initiated by charging pure water into a pressure-resistant reaction vessel equipped with a stirrer, deoxidizing the system, charging TFE, increasing the temperature to a predetermined level, and adding a polymerization initiator. When the pressure decreases as the reaction progresses, additional TFE is fed continuously or intermittently to maintain the initial pressure. When the amount of TFE fed reaches a predetermined level, feeding is stopped, and then TFE in the reaction vessel is purged and the temperature is returned to room temperature, whereby the reaction is completed. Additional TFE may be added continuously or intermittently to prevent pressure drop.

In the production of the TFE polymer (PTFE), various known modifying monomers may be used in combination. TFE polymer as used herein is a concept that encompasses not only a TFE homopolymer but also a non melt-processible copolymer of TFE and a modifying monomer (hereinafter, referred to as "modified PTFE").

The modifying monomer is not limited as long as it can be copolymerized with TFE, and examples include fluoromonomers and non-fluoromonomers. Also, one modifying monomer may be used, or multiple modifying monomers may be used.

Examples of the non-fluoromonomer include, but are not limited to, monomers represented by the general formula:

CH₂=CR^{Q1}-LR^{Q2}

wherein R^{Q1} represents a hydrogen atom or an alkyl group; L represents a single bond, -CO-O-*, -O-CO-*, or -O-; * indicates the position of bonding to R^{Q2}; R^{Q2} represents a hydrogen atom, an alkyl group, or a nitrile group.

Examples of the non-fluoromonomer include methyl acrylate, methyl methacrylate, ethyl acrylate, ethyl methacrylate, propyl acrylate, propyl methacrylate butyl acrylate, butyl methacrylate, hexyl methacrylate, cyclohexyl methacrylate, vinyl methacrylate, vinyl acetate, acrylic acid, methacrylic acid, acrylonitrile, methacrylonitrile, ethyl vinyl ether, and cyclohexyl vinyl ether. Among these, the non-fluoromonomer is preferably butyl methacrylate, vinyl acetate, or acrylic acid.

Examples of the fluoromonomer include perfluoroolefins such as hexafluoropropylene (HFP); hydrogen-containing fluoroolefins such as trifluoroethylene and vinylidene fluoride (VDF); perhaloolefins such as chlorotrifluoroethylene; perfluorovinyl ethers; (perfluoroalkyl)ethylenes; and perfluoroallyl ethers.

Examples of the perfluorovinyl ether include, but are not limited to, perfluoro unsaturated compounds represented by general formula (A):

CF₂=CF-ORf (A)

wherein Rf represents a perfluoroorganic group. The "perfluoro organic group" as used herein means an organic group in which all hydrogen atoms bonded to the carbon atoms are replaced by fluorine atoms. The perfluoro organic group may have ether oxygen.

Examples of the perfluorovinyl ether include perfluoro(alkyl vinyl ether) (PAVE) in which Rf is a perfluoroalkyl group having 1 to 10 carbon atoms in the general formula (A). The perfluoroalkyl group preferably has 1 to 5 carbon atoms.

Examples of the perfluoroalkyl group in PAVE include a perfluoromethyl group, a perfluoroethyl group, a perfluoropropyl group, a perfluorobutyl group, a perfluoropentyl group, and a perfluorohexyl group.

Examples of the perfluorovinyl ether further include those represented by general formula (A) in which Rf is a perfluoro(alkoxyalkyl) group having 4 to 9 carbon atoms; those in which Rf is a group represented by the following formula: 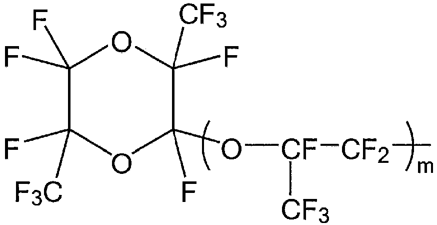 wherein m represents 0 or an integer of 1 to 4; and those in which Rf is a group represented by the following formula:

CF₃CF₂CF₂-(O-CF(CF₃)-CF₂)ₙ-

wherein n represents an integer of 1 to 4.

Examples of hydrogen-containing fluoroolefins include CH₂=CF₂, CFH=CH₂, CFH=CF₂, CH₂=CFCF₃, CH₂=CHCF₃, CHF=CHCF₃ (E-form), and CHF=CHCF₃ (Z-form).

Examples of the (perfluoroalkyl)ethylene (PFAE) include, but are not limited to, (perfluorobutyl) ethylene (PFBE), and (perfluorohexyl) ethylene.

Examples of perfluoroallyl ether include fluoromonomers represented by the general formula:

CF₂=CF-CF₂-ORf

wherein Rf represents a perfluoroorganic group.

Rf in the above general formula is the same as Rf in general formula (A). Rf is preferably a perfluoroalkyl group having 1 to 10 carbon atoms or a perfluoroalkoxyalkyl group having 1 to 10 carbon atoms. Perfluoroallyl ether is preferably at least one selected from the group consisting of CF₂=CF-CF₂-O-CF₃, CF₂=CF-CF₂-O-C₂F₅, CF₂=CF-CF₂-O-C₃F₇, and CF₂=CF-CF₂-O-C₄F₉, more preferably at least one selected from the group consisting of CF₂=CF-CF₂-O-C₂F₅, CF₂=CF-CF₂-O-C₃F₇, and CF₂=CF-CF₂-O-C₄F₉, and even more preferably CF₂=CF-CF₂-O-CF₂CF₂CF₃.

The modifying monomer is also preferably exemplified by a modifying monomer (3) having a monomer reactivity ratio of 0.1 to 8. The presence of the modifying monomer (3) makes it possible to obtain PTFE particles having a small particle size, and to thereby obtain an aqueous dispersion having high dispersion stability.

Here, the monomer reactivity ratio in the copolymerization with TFE is a value obtained by dividing a rate constant when the propagating radical reacts with TFE when the propagating radical is less than a repeating unit based on TFE by a rate constant when the propagating radical reacts with a modifying monomer. A smaller monomer reactivity ratio indicates higher reactivity of the modifying monomers with TFE. The monomer reactivity ratio can be determined by copolymerizing TFE with the modifying monomers, determining the composition of the polymer formed immediately after initiation, and calculating the monomer reactivity ratio by Fineman-Ross equation.

The copolymerization is performed using 3,600 g of deionized degassed water, 1,000 ppm by mass of ammonium perfluorooctanoate based on the water, and 100 g of paraffin wax contained in an autoclave made of stainless steel with an internal volume of 6.0 L at a pressure of 0.78 MPaG and a temperature of 70°C. A modifying monomer in an amount of 0.05 g, 0.1 g, 0.2 g, 0.5 g, or 1.0 g is added to the reactor, and then 0.072 g of ammonium persulfate (20 ppm by mass based on the water) is added thereto. To maintain the polymerization pressure at 0.78 MPaG, TFE is continuously fed. When the amount of TFE charged reaches 1,000 g, stirring is stopped, and the pressure is released until the pressure in the reactor decreases to the atmospheric pressure. After cooling, the paraffin wax is separated to give an aqueous dispersion containing the produced polymer. The aqueous dispersion is stirred so that the produced polymer coagulates, and the polymer is dried at 150°C. The composition of the resulting polymer is calculated by suitably combining NMR, FT-IR, elemental analysis, and X-ray fluorescence analysis according to the type of monomer.

The modifying monomer (3) having a monomer reactivity ratio of 0.1 to 8 is preferably at least one selected from the group consisting of modifying monomers represented by formulae (3a) to (3d):

CH₂=CH-Rf¹ (3a)

wherein Rf¹ is a perfluoroalkyl group having 1 to 10 carbon atoms;

CF₂=CF-O-Rf² (3b)

wherein Rf² is a perfluoroalkyl group having 1 to 2 carbon atoms;

CF₂=CF-O-(CF₂)ₙCF=CF₂ (3c)

wherein n is 1 or 2; and 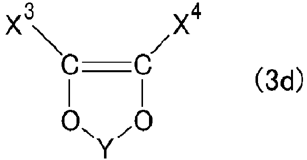 wherein X³ and X⁴ are each F, Cl, or a methoxy group; and Y is represented by formula Y1 or Y2; and

-CF=CF- (Y1)

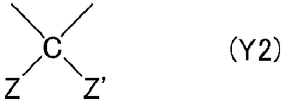

wherein Y2, Z, and Z' are each F or a fluorinated alkyl group having 1 to 3 carbon atoms.

The content of the modifying monomer (3) unit is preferably in the range of 0.00001 to 1.0% by mass based on the total polymerization units of the PTFE. The lower limit is more preferably 0.0001% by mass, more preferably 0.0005% by mass, even more preferably 0.001% by mass, and yet more preferably 0.005% by mass. The upper limit is, in ascending order of preference, 0.90% by mass, 0.50% by mass, 0.40% by mass, 0.30% by mass, 0.20% by mass, 0.15% by mass, 0.10% by mass, 0.08% by mass, 0.05% by mass, and 0.01% by mass.

The modifying monomer is preferably at least one selected from the group consisting of hexafluoropropylene, chlorotrifluoroethylene, vinylidene fluoride, perfluoro(alkyl vinyl ether), (perfluoroalkyl)ethylene, ethylene, and modifying monomers having a functional group capable of reacting by radical polymerization and a hydrophilic group, in view of obtaining an aqueous dispersion having a small average primary particle size of primary particles, a small aspect ratio of primary particles, and excellent stability. The use of the modifying monomer makes it possible to obtain an aqueous dispersion of PTFE having a smaller average primary particle size, a small aspect ratio of primary particles, and excellent dispersion stability. Also, an aqueous dispersion having a smaller amount of uncoagulated polymer can be obtained.

From the viewpoint of reactivity with TFE, the modifying monomer preferably contains at least one selected from the group consisting of hexafluoropropylene, perfluoro(alkyl vinyl ether), and (perfluoroalkyl)ethylene.

More preferably, the modifying monomer contains at least one selected from the group consisting of hexafluoropropylene, perfluoro(methyl vinyl ether), perfluoro(propyl vinyl ether), (perfluorobutyl)ethylene, (perfluorohexyl)ethylene, and (perfluorooctyl)ethylene.

The total amount of the hexafluoropropylene unit, the perfluoro(alkyl vinyl ether) unit, and the (perfluoroalkyl)ethylene unit is preferably in the range of 0.00001 to 1% by mass based on all polymerized units in PTFE. The lower limit of the total amount is more preferably 0.0001% by mass, more preferably 0.0005% by mass, even more preferably 0.001% by mass, and yet more preferably 0.005% by mass. The upper limit is, in ascending order of preference, 0.80% by mass, 0.70% by mass, 0.50% by mass, 0.40% by mass, 0.30% by mass, 0.20% by mass, 0.15% by mass, 0.10% by mass, 0.08% by mass, 0.05% by mass, or 0.01% by mass.

The modifying monomer also preferably includes a modifying monomer having a functional group capable of reacting by radical polymerization and a hydrophilic group (hereinafter, referred to as a "modifying monomer (A)").

The presence of the modifying monomer (A) makes it possible to obtain PTFE particles having a small primary particle size, and to thereby obtain an aqueous dispersion having high dispersion stability. Also, the amount of uncoagulated polymer can be reduced. Moreover, the aspect ratio of the primary particles can be reduced.

The amount of the modifying monomer (A) used is preferably an amount exceeding 0.1 ppm by mass of the aqueous medium, more preferably an amount exceeding 0.5 ppm by mass, even more preferably an amount exceeding 1.0 ppm by mass, yet more preferably 5 ppm by mass or more, and particularly preferably 10 ppm by mass or more. When the amount of the modifying monomer (A) used is excessively small, the average primary particle size of PTFE obtained may not be sufficiently small.

The amount of the modifying monomer (A) used may be within the above range, and the upper limit may be, for example, 5,000 ppm by mass. Also, in the production method, the modifying monomer (A) may be added to the system during the reaction in order to improve the stability of the aqueous dispersion during or after the reaction.

The modifying monomer (A) is highly water-soluble and, therefore, even when the unreacted modifying monomer (A) remains in the aqueous dispersion, it can be easily removed in the concentration step or the coagulation/washing step.

While the modifying monomer (A) is incorporated into the produced polymer during the course of polymerization, the concentration of the modifying monomer (A) in the polymerization system is low, and the amount incorporated into the polymer is small. Accordingly, problems that the heat resistance of PTFE is impaired or PTFE is colored after sintering do not arise.

Examples of the hydrophilic group in the modifying monomer (A) include -NH₂, -PO₃M, -OPO₃M, -SO₃M, -OSO₃M, and-COOM, wherein M represents H, a metal atom, NR^{7y}₄, optionally substituted imidazolium, optionally substituted pyridinium, or optionally substituted phosphonium, wherein R^{7y} is H or an organic group and may be the same or different, and any two may be bonded to each other to form a ring. Among these, the hydrophilic group is preferably -SO₃M or -COOM. The organic group in R^{7y} is preferably an alkyl group. R^{7y} is preferably H or a C₁₋₁₀ organic group, more preferably H or a C₁₋₄ organic group, and even more preferably H or a C₁₋₄ alkyl group.

The metal atom may be a monovalent or divalent metal atom, such as an alkali metal (Group 1) or an alkaline earth metal (Group 2), and is preferably Na, K, or Li.

Examples of the "functional group capable of reacting by radical polymerization" in the modifying monomer (A) include a group having an ethylenically unsaturated bond such as a vinyl group and an allyl group. The group having an ethylenically unsaturated bond can be represented by the following formula:

CX^{e}X^{g}=CX^{f}R-

wherein X^{e}, X^{f}, and X^{g} are each independently F, Cl, H, CF₃, CF₂H, CFH₂, or CH₃; and R is a linking group. The linking group R may be the linking group R^{a}, which will be described below. Preferable examples include groups having an unsaturated bond, such as -CH=CH₂, -CF=CH₂, -CH=CF₂, -CF=CF₂, -CH₂-CH=CH₂, -CF₂-CF=CH₂, -CF₂-CF=CF₂, -(C=O)-CH=CH₂, -(C=O)-CF=CH₂, -(C=O)-CH=CF₂, -(C=O)-CF=CF₂, -(C=O)-C(CH₃)=CH₂, -(C=O)-C(CF₃)=CH₂,-(C=O)-C(CH₃)=CF₂, -(C=O)-C(CF₃)=CF₂, -O-CH₂-CH=CH₂, -O-CF₂-CF=CH₂, -O-CH₂-CH=CF₂, and -O-CF₂-CF=CF₂.

Since the modifying monomer (A) has a functional group capable of reaction by radical polymerization, it is conjectured that when used in the polymerization, the modifying monomer (A) reacts with a fluorine-containing monomer at the initial stage of the polymerization reaction and forms highly stable particles having a hydrophilic group derived from the modifying monomer (A). Accordingly, it is considered that the number of particles increases when the polymerization is performed in the presence of the modifying monomer (A).

The polymerization may be performed in the presence of one or more modifying monomers (A).

In the polymerization, the modifying monomer (A) may be a compound having an unsaturated bond.

The modifying monomer (A) is preferably a compound represented by general formula (4):

CXⁱX^{k}=CX^{j}R^{a}-(CZ¹Z²)ₖ-Y³ (4)

wherein Xⁱ, X^{j}, and X^{k} are each independently F, Cl, H, or CF₃; Y³ is a hydrophilic group; R^{a} is a linking group; Z¹ and Z² are each independently H, F, or CF₃; and k is 0 or 1.

Examples of the hydrophilic group include -NH₂, -PO₃M,-OPO₃M, -SO₃M, -OSO₃M, and -COOM, wherein M represents H, a metal atom, NR^{7y}₄, optionally substituted imidazolium, optionally substituted pyridinium, or optionally substituted phosphonium, wherein R^{7y} is H or an organic group, and may be the same or different, and any two may be bonded to each other to form a ring. Among these, the hydrophilic group is preferably -SO₃M or -COOM. The organic group in R^{7y} is preferably an alkyl group. R^{7y} is preferably H or a C₁₋₁₀ organic group, more preferably H or a C₁₋₄ organic group, and even more preferably H or a C₁₋₄ alkyl group. The metal atom may be a monovalent or divalent metal atom, such as an alkali metal (Group 1) or an alkaline earth metal (Group 2), and is preferably Na, K, or Li.

The use of the modifying monomer (A) makes it possible to obtain an aqueous dispersion having a smaller average primary particle size and superior stability. Also, the aspect ratio of the primary particles can be reduced.

R^{a} is a linking group. The "linking group" as used herein refers to a divalent linking group. The linking group may be a single bond and preferably contains at least one carbon atom, and the number of carbon atoms may be 2 or more, 4 or more, 8 or more, 10 or more, or 20 or more. The upper limit is not limited, and, for example, may be 100 or less, and may be 50 or less.

The linking group may be linear or branched, cyclic or acyclic, saturated or unsaturated, and substituted or unsubstituted, and, as desired, may contain one or more heteroatoms selected from the group consisting of sulfur, oxygen, and nitrogen, and, as desired, may contain one or more functional groups selected from the group consisting of ester, amide, sulfonamide, carbonyl, carbonate, urethane, urea, and carbamate. The linking group may be a group that does not contain a carbon atom and that is a catenary heteroatom such as oxygen, sulfur, or nitrogen.

R^{a} is preferably a catenary heteroatom such as oxygen, sulfur, or nitrogen, or a divalent organic group.

When R^{a} is a divalent organic group, a hydrogen atom bonded to a carbon atom may be replaced with halogen other than fluorine, such as chlorine, and R^{a} may or may not contain a double bond. Also, R^{a} may be linear or branched, and may be cyclic or acyclic. Also, R^{a} may contain a functional group (e.g., ester, ether, ketone, amine, or halide).

R^{a} may also be a fluorine-free divalent organic group or a partially fluorinated or perfluorinated divalent organic group.

R^{a} may be, for example, a hydrocarbon group in which no fluorine atom is bonded to a carbon atom, a hydrocarbon group in which some hydrogen atoms bonded to carbon atoms are replaced by fluorine atoms, a hydrocarbon group in which all hydrogen atoms bonded to carbon atoms are replaced by fluorine atoms, -(C=O)-, -(C=O)-O-, or a hydrocarbon group containing an ether bond, and these may contain an oxygen atom, may contain a double bond, and may contain a functional group.

R^{a} is preferably -(C=O)-, -(C=O)-O-, or a hydrocarbon group having 1 to 100 carbon atoms that optionally contains an ether bond and optionally contains a carbonyl group, wherein some or all of the hydrogen atoms bonded to the carbon atoms in the hydrocarbon group may be replaced by fluorine.

R^{a} is preferably at least one selected from -(CH₂)ₐ-,-(CF₂)ₐ-, -O-(CF₂)ₐ-, -(CF₂)ₐ-O-(CF₂)_{b}-, -O(CF₂)ₐ-O-(CF₂)_{b}-,-(CF₂)ₐ-[O-(CF₂)_{b}]_{c}-, -O(CF₂)ₐ-[O-(CF₂)_{b}]_{c}-, -[(CF₂)ₐ-O]_{b}-[(CF₂)_{c}-O]_{d}-, -O[(CF₂)ₐ-O]_{b}-[(CF₂)_{c}-O]_{d}-, -O-[CF₂CF(CF₃)O]ₐ-(CF₂)_{b}-,-(C=O)-, -(C=O)-O-, -(C=O)-(CH₂)ₐ-, -(C=O)-(CF₂)ₐ-, -(C=O)-O-(CH₂)ₐ-, -(C=O)-O-(CF₂)ₐ-, -(C=O)-[(CH₂)ₐ-O]_{b}-, -(C=O)-[(CF₂)ₐ-O]_{b}-, - (C=O)-O[(CH₂)ₐ-O]_{b}-, -(C=O)-O[(CF₂)ₐ-O]_{b}-, -(C=O)-O[(CH₂)ₐ-O]_{b}-(CH₂)_{c}-, -(C=O)-O[(CF₂)ₐ-O]_{b}-(CF₂)_{c}-, -(C=O)-(CH₂)ₐ-O-(CH₂)_{b}-, -(C=O)-(CF₂)ₐ-O-(CF₂)_{b}-, -(C=O)-O-(CH₂)ₐ-O-(CH₂)_{b}-,-(C=O)-O-(CF₂)ₐ-O-(CF₂)_{b}-, - (C=O)-O-C₆H₄-, and combinations thereof.

In the formulae, a, b, c, and d are each independently at least 1 or more. a, b, c and d may independently be 2 or more, 3 or more, 4 or more, 10 or more, or 20 or more. The upper limits of a, b, c, and d are, for example, 100.

Specific examples suitable for R^{a} include -CF₂-O-, -CF₂-O-CF₂-, -CF₂-O-CH₂-, -CF₂-O-CH₂CF₂-, -CF₂-O-CF₂CF₂-, -CF₂-O-CF₂CH₂-, -CF₂-O-CF₂CF₂CH₂-, -CF₂-O-CF(CF₃)-, -CF₂-O-CF(CF₃)CF₂-,-CF₂-O-CF(CF₃)CF₂-O-, -CF₂-O-CF(CF₃)CH₂-, -(C=O)-, -(C=O)-O-,-(C=O)-(CH₂)-, -(C=O)-(CF₂)-, -(C=O)-O-(CH₂)-, -(C=O)-O-(CF₂)-,-(C=O)-[(CH₂)₂-O]ₙ-, -(C=O)-[(CF₂)₂-O]ₙ-, -(C=O)-O[(CH₂)₂-O]ₙ-,-(C=O)-O[(CF₂)₂-O]ₙ-, -(C=O)-O[(CH₂)₂-O]ₙ-(CH₂)-, -(C=O)-O[(CF₂)₂-O]ₙ-(CF₂)-, -(C=O)-(CH₂)₂-O-(CH₂)-, -(C=O)-(CF₂)₂-O-(CF₂)-,-(C=O)-O-(CH₂)₂-O-(CH₂)-, -(C=O)-O-(CF₂)₂-O-(CF₂)-, and -(C=O)-O-C₆H₄-. In particular, specifically R^{a} is preferably -CF₂-O-,-CF₂-O-CF₂-, -CF₂-O-CF₂CF₂-, -CF₂-O-CF(CF₃)-, -CF₂-O-CF(CF₃)CF₂-,-CF₂-O-CF(CF₃)CF₂-O-, - (C=O) -, - (C=O) -O-, - (C=O) - (CH₂)-, - (C=O)-O-(CH₂)-, -(C=O)-O[(CH₂)₂-O]ₙ-, -(C=O)-O[(CH₂)₂-O]ₙ-(CH₂)-,-(C=O)-(CH₂)₂-O-(CH₂)-, or - (C=O)-O-C₆H₄-.

In the formulae, n is an integer of 1 to 10.

-R^{a}-(CZ¹Z²)ₖ- in general formula (4) is preferably -CF₂-O-CF₂-, -CF₂-O-CF(CF₃)-, -CF₂-O-C(CF₃)₂-, -CF₂-O-CF₂-CF₂-, -CF₂-O-CF₂-CF(CF₃)-, -CF₂-O-CF₂-C(CF₃)₂-, -CF₂-O-CF₂CF₂-CF₂-, -CF₂-O-CF₂CF₂-CF(CF₃)-, -CF₂-O-CF₂CF₂-C(CF₃)₂-, -CF₂-O-CF(CF₃)-CF₂-,-CF₂-O-CF(CF₃)-CF (CF₃)-, -CF₂-O-CF(CF₃)-C (CF₃)₂-, -CF₂-O-CF(CF₃) CF₂-CF₂-, -CF₂-O-CF(CF₃)CF₂-CF(CF₃)-, -CF₂-O-CF(CF₃)CF₂-C(CF₃)₂-, -CF₂-O-CF(CF₃)CF₂-O-CF₂-, -CF₂-O-CF(CF₃)CF₂-O-CF(CF₃)-, -CF₂-O-CF (CF₃)CF₂-O-C(CF₃)₂-, - (C=O)-, -(C=O) -O-, - (C=O) - (CH₂)-,-(C=O)-(CF₂)-, -(C=O)-O-(CH₂)-, -(C=O)-O-(CF₂)-, -(C=O)-[(CH₂)₂-O]ₙ-(CH₂)-, -(C=O)-[(CF₂)₂-O]ₙ-(CF₂)-, -(C=O)-[(CH₂)₂-O]ₙ-(CH₂)-(CH₂)-, -(C=O)-[(CF₂)₂-O]ₙ-(CF₂)-(CF₂)-, -(C=O)-O[(CH₂)₂-O]ₙ-(CF₂)-, (C=O)-O[(CH₂)₂-O]ₙ-(CH₂)(CH₂)-, (C=O)-O[(CF₂)₂-O]ₙ-(CF₂)-, -(C=O)-O[(CF₂)₂-O]ₙ-(CF₂)-(CF₂)-, -(C=O)-(CH₂)₂-O-(CH₂)-(CH₂)-, -(C=O)-(CF₂)₂-O-(CF₂)-(CF₂)-, -(C=O)-O-(CH₂)₂-O-(CH₂)-(CH₂)-, -(C=O)-O-(CF₂)₂-O-(CF₂)-(CF₂)-, -(C=O)-O-(CH₂)₂-O-(CH₂)-C(CF₃)₂-, - (C=O)-O-(CF₂)₂-O-(CF₂)-C (CF₃)₂-, or -(C=O)-O-C₆H₄-C(CF₃)₂-, and is more preferably -CF₂-O-CF(CF₃)-, -CF₂-O-CF₂-CF(CF₃)-, -CF₂-O-CF₂CF₂-CF(CF₃)-, -CF₂-O-CF(CF₃)-CF(CF₃)-, -CF₂-O-CF(CF₃)CF₂-CF(CF₃)-, -CF₂-O-CF(CF₃)CF₂-O-CF(CF₃)-, -(C=O)-,-(C=O)-O-(CH₂)-, -(C=O)-O-(CH₂)-(CH₂)-, -(C=O)-O[(CH₂)₂-O]ₙ-(CH₂)-(CH₂)-, - (C=O)-O-(CH₂)₂-O-(CH₂)-C(CF₃)₂-, or -(C=O)-O-C₆H₄-C(CF₃)₂-.

In the formulae, n is an integer of 1 to 10.

Specific examples of the compound represented by general formula (4) include compounds represented by the following formulae: 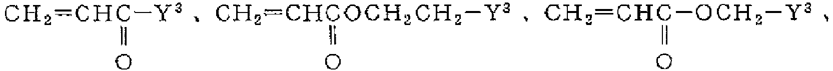 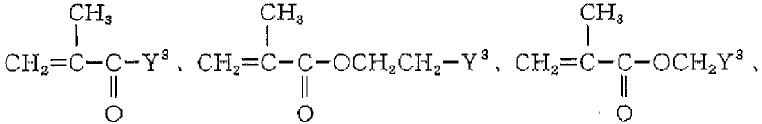 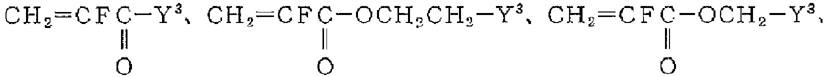 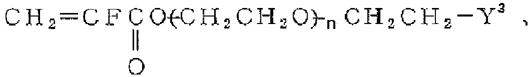 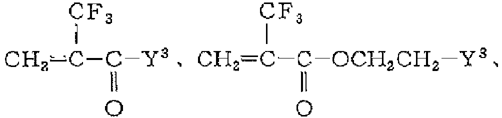 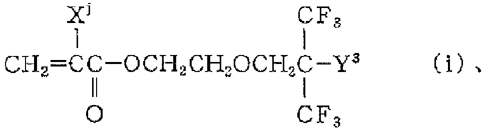 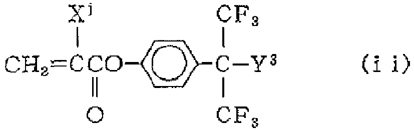 wherein X^{j} and Y³ are as described above; and n is an integer of 1 to 10.

R^{a} is preferably a divalent group represented by general formula (r1):

-(C=O)ₕ-(O)ᵢ-CF₂-O-(CX⁶₂)ₑ-{O-CF (CF₃)}_{f}-(O)_{g}- (r1)

(wherein X⁶ is each independently H, F, or CF₃, e is an integer of 0 to 3, f is an integer of 0 to 3, g is 0 or 1, h is 0 or 1, and i is 0 or 1), and is also preferably a divalent group represented by general formula (r2):

-(C=O)ₕ-(O)ᵢ-CF₂-O-(CX⁷₂)ₑ-(O)_{g}- (r2)

(wherein X⁷ is each independently H, F, or CF₃; e is an integer of 0 to 3; g is 0 or 1; h is 0 or 1; and i is 0 or 1).

-R^{a}-(CZ¹Z²)ₖ- in general formula (4) is also preferably a divalent group represented by the following formula (t1):

-(C=O)ₕ-(O)ᵢ-CF₂-O-(CX⁶₂)ₑ-{O-CF(CF₃)}_{f}-(O)_{g}-CZ¹Z²- (t1)

(wherein X⁶ is each independently H, F, or CF₃, e is an integer of 0 to 3, f is an integer of 0 to 3, g is 0 or 1, h is 0 or 1, i is 0 or 1, and Z¹ and Z² are each independently F or CF₃), and, more preferably, in formula (t1), one of Z¹ and Z² is F, and the other is CF₃.

Also, in general formula (4), -R^{a}-(CZ¹Z²)ₖ- is preferably a divalent group represented by the following formula (t2):

-(C=O)ₕ-(O)ᵢ-CF₂-O-(CX⁷₂)ₑ-(O)_{g}-CZ¹Z²- (t2)

(wherein X⁷ is each independently H, F, or CF₃, e is an integer of 0 to 3, g is 0 or 1, h is 0 or 1, i is 0 or 1, and Z¹ and Z² are each independently F or CF₃), and, more preferably, in formula (t2), one of Z¹ and Z² is F, and the other is CF₃.

The compound represented by general formula (4) also preferably has a C-F bond and does not have a C-H bond in the portion excluding the hydrophilic group (Y³). That is, in general formula (4), preferably, Xⁱ, X^{j}, and X^{k} are all F, and R^{a} is a perfluoroalkylene group having one or more carbon atoms. The perfluoroalkylene group may be either linear or branched, may be either cyclic or acyclic, and may contain at least one catenary heteroatom. The perfluoroalkylene group may have 2 to 20 carbon atoms or 4 to 18 carbon atoms.

The compound represented by general formula (4) may be partially fluorinated. That is, the compound represented by general formula (4) also preferably has at least one hydrogen atom bonded to a carbon atom and at least one fluorine atom bonded to a carbon atom, in the portion excluding the hydrophilic group (Y³).

The compound represented by general formula (4) is also preferably a compound represented by the following formula (4a):

CF₂=CF-O-Rf⁰-Y³ (4a)

wherein Y³ is a hydrophilic group; and Rf⁰ is a perfluorinated divalent linking group which is perfluorinated and may be a linear or branched, cyclic or acyclic, saturated or unsaturated, substituted or unsubstituted, and optionally contains one or more heteroatoms selected from the group consisting of sulfur, oxygen, and nitrogen.

The compound represented by general formula (4) is also preferably a compound represented by the following formula (4b):

CH₂=CH-O-Rf⁰-Y³ (4b)

wherein Y³ is a hydrophilic group; and Rf⁰ is a perfluorinated divalent linking group as defined in formula (4a).

In a preferable embodiment, Y³ in general formula (4) is -OSO₃M. Examples of the compound represented by general formula (4) when Y³ is -OSO₃M include CF₂=CF(OCF₂CF₂CH₂OSO₃M), CF₂=CF(O(CF₂)₄CH₂OSO₃M), CF₂=CF(OCF₂CF(CF₃)CH₂OSO₃M), CF₂=CF(OCF₂CF(CF₃)OCF₂CF₂CH₂OSO₃M), CH₂=CH((CF₂)₄CH₂OSO₃M), CF₂=CF(OCF₂CF₂SO₂N(CH₃)CH₂CH₂OSO₃M), CH₂=CH(CF₂CF₂CH₂OSO₃M), and CF₂=CF(OCF₂CF₂CF₂CF₂SO₂N(CH₃)CH₂CH₂OSO₃M). In the above formulae, M is as described above.

In a preferable embodiment, Y³ in general formula (4) is -SO₃M. Examples of the compound represented by general formula (4) when Y³ is -SO₃M include CF₂=CF(OCF₂CF₂SO₃M), CF₂=CF(O(CF₂)₄SO₃M), CF₂=CF(OCF₂CF(CF₃)SO₃M), CF₂=CF(OCF₂CF(CF₃)OCF₂CF₂SO₃M), CH₂=CH(CF₂CF₂SO₃M), CF₂=CF(OCF₂CF(CF₃)OCF₂CF₂CF₂CF₂SO₃M), CH₂=CH((CF₂)₄SO₃M), and CH₂=CH((CF₂)₃SO₃M). In the above formulae, M is as described above.

In a preferable embodiment, Y³ in the general formula (4) is -COOM. Examples of the compound represented by general formula (4) when Y³ is -COOM include CF₂=CF(OCF₂CF₂COOM), CF₂=CF(OCF₂CF₂CF₂COOM), CF₂=CF(O(CF₂)₅COOM), CF₂=CF(OCF₂CF(CF₃)COOM), CF₂=CF(OCF₂CF(CF₃)O(CF₂)ₙCOOM) (n is greater than 1), CH₂=CH(CF₂CF₂COOM), CH₂=CH((CF₂)₄COOM), CH₂=CH(CF₂CF₂COOM), CH₂=CH((CF₂)₃COOM), CF₂=CF(OCF₂CF₂SO₂NR'CH₂COOM), CF₂=CF(O(CF₂)₄SO₂NR'CH₂COOM), CF₂=CF(OCF₂CF(CF₃)SO₂NR'CH₂COOM), CF₂=CF(OCF₂CF(CF₃)OCF₂CF₂SO₂NR'CH₂COOM), CH₂=CH(CF₂CF₂SO₂NR'CH₂COOM), CF₂=CF(OCF₂CF(CF₃)OCF₂CF₂CF₂CF₂SO₂NR'CH₂COOM), CH₂=CH((CF₂)₄SO₂NR'CH₂COOM), and CH₂=CH((CF₂)₃SO₂NR'CH₂COOM). In the above formulae, R' is H or a C₁₋₄ alkyl group, and M is as described above.

In a preferable embodiment, Y³ in general formula (4) is -OPO₃M or -OP(O)(OM)₂. Examples of the compound represented by general formula (4) when Y³ is -OPO₃M or -OP(O)(OM)₂ include CF₂=CF(OCF₂CF₂CH₂OP(O)(OM)₂), CF₂=CF(O(CF₂)₄CH₂OP(O)(OM)₂), CF₂=CF(OCF₂CF(CF₃)CH₂OP(O)(OM)₂), CF₂=CF(OCF₂CF(CF₃)OCF₂CF₂CH₂OP(O)(OM)₂), CF₂=CF(OCF₂CF₂SO₂N(CH₃)CH₂CH₂OP(O)(OM)₂), CF₂=CF(OCF₂CF₂CF₂CF₂SO₂N(CH₃)CH₂CH₂OP(O)(OM)₂), CH₂=CH(CF₂CF₂CH₂OP(O)(OM)₂, CH₂=CH((CF₂)₄CH₂OP(O)(OM)₂), and CH₂=CH((CF₂)₃CH₂OP(O)(OM)₂). In the above formulae, M is as described above.

In a preferable embodiment, Y³ in the general formula (4) is -PO₃M or -P(O)(OM)₂. Examples of the compound represented by general formula (4) when Y³ is -PO₃M or-P(O)(OM)₂ include CF₂=CF(OCF₂CF₂P(O)(OM)₂), CF₂=CF(O(CF₂)₄P(O)(OM)₂), CF₂=CF(OCF₂CF(CF₃)P(O)(OM)₂), CF₂=CF(OCF₂CF(CF₃)OCF₂CF₂P(O)(OM)₂), CH₂=CH(CF₂CF₂P(O)(OM)₂), CH₂=CH((CF₂)₄P(O)(OM)₂), and CH₂=CH((CF₂)₃P(O)(OM)₂), wherein M is as described above.

The compound represented by general formula (4) is preferably at least one selected from the group consisting of: a compound represented by general formula (5):

CX₂=CY(-CZ₂-O-Rf-Y³) (5)

wherein X is the same or different and is -H or -F; Y is -H,-F, an alkyl group, or a fluorine-containing alkyl group; Z is the same or different and -H, -F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and Y³ is as described above; a compound represented by general formula (6):

CX₂=CY(-O-Rf-Y³) (6)

wherein X is the same or different and is -H or -F; Y is -H,-F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and Y³ is as described above; and a compound represented by general formula (7):

CX₂=CY(-Rf-Y³) (7)

wherein X is the same or different and is -H or -F; Y is -H, - F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and Y³ is as described above.

Note that the fluorine-containing alkylene group having 2 to 100 carbon atoms and having an ether bond described above is an alkylene group that does not include a structure in which an oxygen atom is an end and that contains an ether bond between carbon atoms.

In general formula (5), each X is -H or -F. X may be both -F, or at least one may be -H. For example, one may be -F and the other may be -H, or both may be -H.

In general formula (5), Y is -H, -F, an alkyl group, or a fluorine-containing alkyl group.

The alkyl group is an alkyl group not containing a fluorine atom, and may have one or more carbon atoms. The number of carbon atoms of the alkyl group is preferably 6 or less, more preferably 4 or less, and even more preferably 3 or less.

The fluorine-containing alkyl group is an alkyl group containing at least one fluorine atom, and may have one or more carbon atoms. The number of carbon atoms of the fluorine-containing alkyl group is preferably 6 or less, more preferably 4 or less, and even more preferably 3 or less.

Y is preferably -H, -F, or -CF₃, and more preferably -F.

In general formula (5), Z is the same or different and is -H, -F, an alkyl group, or a fluoroalkyl group.

The alkyl group is an alkyl group not containing a fluorine atom, and may have one or more carbon atoms. The number of carbon atoms of the alkyl group is preferably 6 or less, more preferably 4 or less, and even more preferably 3 or less.

The fluorine-containing alkyl group is an alkyl group containing at least one fluorine atom, and may have one or more carbon atoms. The number of carbon atoms of the fluorine-containing alkyl group is preferably 6 or less, more preferably 4 or less, and even more preferably 3 or less.

Z is preferably -H, -F, or -CF₃, and more preferably -F.

In general formula (5), at least one of X, Y, and Z preferably contains a fluorine atom. For example, X may be -H, and Y and Z may be -F.

In general formula (5), Rf is a fluorine-containing alkylene group having 1 to 40 carbon atoms or a fluorine-containing alkylene group having 2 to 100 carbon atoms and having an ether bond.

The fluorine-containing alkylene group preferably has two or more carbon atoms. Also, the fluorine-containing alkylene group preferably has 30 or fewer carbon atoms, more preferably 20 or fewer carbon atoms, and even more preferably 10 or fewer carbon atoms. Examples of the fluorine-containing alkylene group include -CF₂-, -CH₂CF₂-, -CF₂CF₂-, -CF₂CH₂-, -CF₂CF₂CH₂-,-CF(CF₃)-, -CF(CF₃)CF₂-, and -CF(CF₃)CH₂-. The fluorine-containing alkylene group is preferably a perfluoroalkylene group.

The fluorine-containing alkylene group having an ether bond preferably has three or more carbon atoms. The fluorine-containing alkylene group having an ether bond preferably has 60 or fewer carbon atoms, more preferably 30 or fewer carbon atoms, and even more preferably 12 or fewer carbon atoms.

The fluorine-containing alkylene group having an ether bond is also preferably a divalent group represented by the following formula: 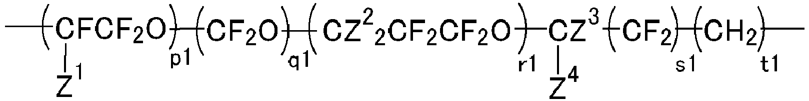 wherein Z¹ is F or CF₃; Z² and Z³ are each H or F; Z⁴ is H, F, or CF₃; p1 + q1 + r1 is an integer of 1 to 10; s1 is 0 or 1; and t1 is an integer of 0 to 5.

Specific examples of the fluorine-containing alkylene group having an ether bond include -CF(CF₃)CF₂-O-CF(CF₃)-,-(CF(CF₃)CF₂-O)ₙ-CF(CF₃)- (where n is an integer of 1 to 10),-CF(CF₃)CF₂-O-CF(CF₃)CH₂-, -(CF(CF₃)CF₂-O)ₙ-CF(CF₃)CH₂- (where n is an integer of 1 to 10), -CH₂CF₂CF₂O-CH₂CF₂CH₂-, -CF₂CF₂CF₂O-CF₂CF₂-, -CF₂CF₂CF₂O-CF₂CF₂CH₂-, -CF₂CF₂O-CF₂-, and -CF₂CF₂O-CF₂CH₂-. The fluorine-containing alkylene group having an ether bond is preferably a perfluoroalkylene group.

In general formula (5), Y³ is preferably -COOM, -SO₃M, or -OSO₃M, wherein M is H, a metal atom, NR^{7y}₄, optionally substituted imidazolium, optionally substituted pyridinium, or optionally substituted phosphonium, wherein R^{7y} is H or an organic group, and may be the same or different, and any two may be bonded to each other to form a ring.

The organic group in R^{7y} is preferably an alkyl group.

R^{7y} is preferably H or a C₁₋₁₀ organic group, more preferably H or a C₁₋₄ organic group, and even more preferably H or a C₁₋₄ alkyl group.

The metal atom may be an alkali metal (Group 1), an alkaline earth metal (Group 2), or the like, and is preferably Na, K, or Li.

M is preferably -H, a metal atom, or -NR⁷₄, more preferably -H, an alkali metal (Group 1), an alkaline earth metal (Group 2), or -NR⁷₄, even more preferably -H, -Na, -K, - Li, or -NH₄, yet more preferably -H, -Na, -K, or -NH₄, particularly preferably -H, -Na or -NH₄, and most preferably-H, or -NH₄.
Y³ is preferably -COOM or -SO₃M, and more preferably -COOM.

The compound represented by general formula (5) is preferably a compound (5a) represented by general formula (5a):

CH₂=CF(-CF₂-O-Rf-Y³) (5a)

wherein Rf and Y³ are as described above.

Specific examples of the compound represented by general formula (5a) include compounds represented by the following formula: 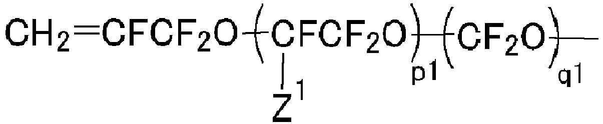 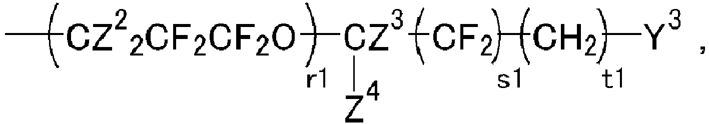 wherein Z¹ is F or CF₃; Z² and Z³ are each H or F; Z⁴ is H, F, or CF₃; p1+q1+r1 is an integer of 0 to 10; s1 is 0 or 1; t1 is an integer of 0 to 5; and Y³ is as described above, provided that when Z³ and Z⁴ are both H, p1 + q1 + r1 + s1 is not 0. More specifically, preferable examples include 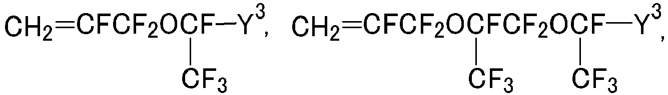 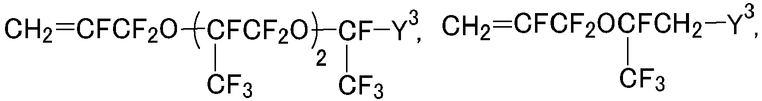 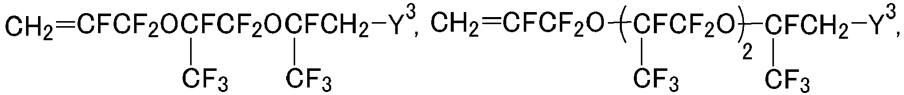 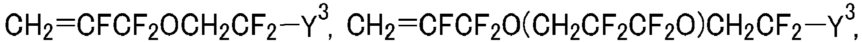 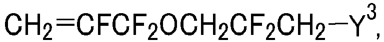 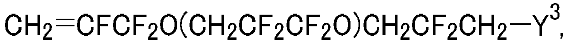 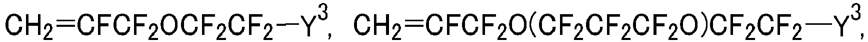 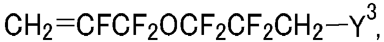 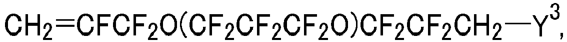 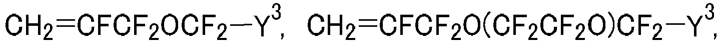 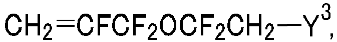 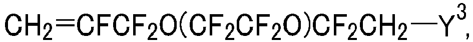 and, in particular, 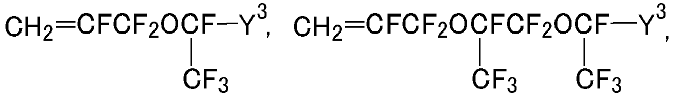 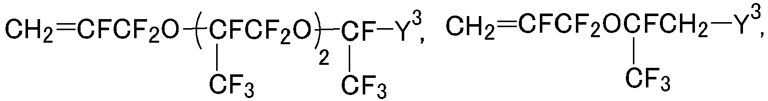 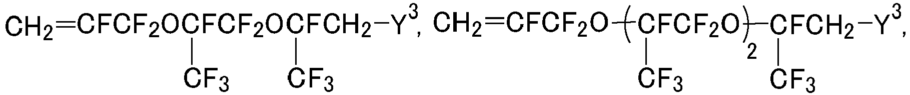 are preferable.

In the compound represented by general formula (5a), Y³ in formula (5a) is preferably -COOM. In particular, the compound represented by general formula (5a) is preferably at least one selected from the group consisting of CH₂=CFCF₂OCF(CF₃)COOM and CH₂=CFCF₂OCF(CF₃)CF₂OCF(CF₃)COOM (wherein M is as defined above), and more preferably CH₂=CFCF₂OCF(CF₃)COOM.

The compound represented by general formula (5) is preferably a compound (5b) represented by general formula (5b):

CX²₂=CFCF₂-O-(CF(CF₃)CF₂O)ₙ₅-CF(CF₃)-Y³ (5b)

wherein each X² is the same and represents F or H; n5 represents 0 or an integer of 1 to 10; and Y³ is as defined above.

In formula (5b), n5 is preferably 0 or an integer of 1 to 5, more preferably 0, 1, or 2, and even more preferably 0 or 1 from the viewpoint of stability of the resulting aqueous dispersion. Y³ is preferably -COOM from the viewpoint of obtaining appropriate water solubility and stability of the aqueous dispersion, and M is preferably H or NH₄ from the viewpoint of being less likely to remain as impurities and improving the heat resistance of the resulting molded body.

Examples of the compound represented by formula (5b) include CH₂=CFCF₂OCF(CF₃)COOM and
CH₂=CFCF₂OCF(CF₃)CF₂OCF(CF₃)COOM, wherein M is as defined above.

Examples of the compound represented by general formula (5) further include a compound represented by general formula (5c) :

CF₂=CFCF₂-O-Rf-Y³ (5c)

wherein Rf and Y³ are as described above.

More specific examples include: 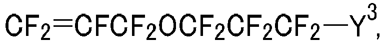 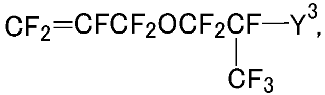 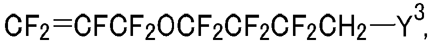 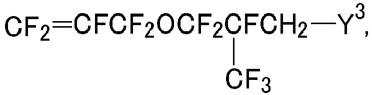 and the like.

In general formula (6), each X is -H or -F. X may be both -F, or at least one may be -H. For example, one may be -F and the other may be -H, or both may be -H.

In general formula (6), Y is -H, -F, an alkyl group, or a fluorine-containing alkyl group.

The alkyl group is an alkyl group not containing a fluorine atom, and may have one or more carbon atoms. The number of carbon atoms of the alkyl group is preferably 6 or less, more preferably 4 or less, and even more preferably 3 or less.

The fluorine-containing alkyl group is an alkyl group containing at least one fluorine atom, and may have one or more carbon atoms. The number of carbon atoms of the fluorine-containing alkyl group is preferably 6 or less, more preferably 4 or less, and even more preferably 3 or less.

Y is preferably -H, -F, or -CF₃, and more preferably -F.

In general formula (6), at least one of X and Y preferably contains a fluorine atom. For example, X may be -H, and Y and Z may be -F.

In general formula (6), Rf is a fluorine-containing alkylene group having 1 to 40 carbon atoms or a fluorine-containing alkylene group having 2 to 100 carbon atoms and having an ether bond.

The fluorine-containing alkylene group preferably has two or more carbon atoms. Also, the fluorine-containing alkylene group preferably has 30 or fewer carbon atoms, more preferably 20 or fewer carbon atoms, and even more preferably 10 or fewer carbon atoms. Examples of the fluorine-containing alkylene group include -CF₂-, -CH₂CF₂-, -CF₂CF₂-, -CF₂CH₂-, -CF₂CF₂CH₂-,-CF(CF₃)-, -CF(CF₃)CF₂-, and -CF(CF₃)CH₂-. The fluorine-containing alkylene group is preferably a perfluoroalkylene group.

In general formula (6), Y³ is preferably -COOM, -SO₃M, or -OSO₃M, wherein M is H, a metal atom, NR^{7y}₄, optionally substituted imidazolium, optionally substituted pyridinium, or optionally substituted phosphonium, where R^{7y} is H or an organic group, and may be the same or different, and any two may be bonded to each other to form a ring.

The organic group of R^{7y} is preferably an alkyl group. R^{7y} is preferably H or a C₁₋₁₀ organic group, more preferably H or a C₁₋₄ organic group, and even more preferably H or a C₁₋₄ alkyl group.

The metal atom may be an alkali metal (Group 1), an alkaline earth metal (Group 2), or the like, and is preferably Na, K, or Li.

M is preferably -H, a metal atom, or -NR⁷₄, more preferably -H, an alkali metal (Group 1), an alkaline earth metal (Group 2), or -NR⁷₄, even more preferably -H, -Na, -K,-Li, or -NH₄, yet more preferably -H, -Na, -K, or -NH₄, particularly preferably -H, -Na or -NH₄, and most preferably-H, or -NH₄.

Y³ is preferably -COOM or -SO₃M, and more preferably-COOM.

The compound represented by general formula (6) is preferably at least one selected from the group consisting of compounds represented by general formulae (6a), (6b), (6c), (6d), and (6e):

CF₂=CF-O-(CF₂)ₙ₁-Y³ (6a)

wherein n1 represents an integer of 1 to 10, and Y³ is as defined above;

CF₂=CF-O-(CF₂C(CF₃)F)ₙ₂-Y³ (6b)

wherein n2 represents an integer of 1 to 5, and Y³ is as defined above;

CF₂=CF-O-(CFX¹)ₙ₃-Y³ (6c)

wherein X¹ represents F or CF₃; n3 represents an integer of 1 to 10; and Y³ is as defined above;

CF₂=CF-O-(CF₂CFX¹O)ₙ₄-(CF₂)ₙ₆-Y³ (6d)

wherein n4 represents an integer of 1 to 10, n6 represents an integer of 1 to 3, and Y³ and X¹ are as defined above; and

CF₂=CF-O-(CF₂CF₂CFX¹O)ₙ₅-CF₂CF₂CF₂-Y³ (6e)

wherein n5 represents an integer of 0 to 10, and Y³ and X¹ are as defined above.

In formula (6a), n1 is preferably an integer of 5 or less, and more preferably an integer of 2 or less. Y³ is preferably -COOM or -SO₃M from the viewpoint of obtaining appropriate water-solubility and stability of the aqueous dispersion, and M is preferably H or NH₄ from the viewpoint of being less likely to remain as impurities and improving the heat resistance of the resulting molded body.

Examples of the compound represented by formula (6a) include CF₂=CF-O-CF₂COOM, CF₂=CF(OCF₂CF₂COOM), CF₂=CF(OCF₂CF₂CF₂COOM), CF₂=CF-O-CF₂SO₃M, CF₂=CF(OCF₂CF₂SO₃M), and CF₂=CF(OCF₂CF₂CF₂SO₃M), wherein M is as defined above.

In formula (6b), n2 is preferably an integer of 3 or less from the viewpoint of stability of the resulting aqueous dispersion, Y³ is preferably -COOM or -SO₃M from the viewpoint of obtaining appropriate water solubility and stability of the aqueous dispersion, and M is preferably H or NH₄ from the viewpoint of being less likely to remain as impurities and improving the heat resistance of the resulting molded body.

In formula (6c), n3 is preferably an integer of 5 or less from the viewpoint of water solubility, Y³ is preferably - COOM or -SO₃M from the viewpoint of obtaining appropriate water solubility and stability of the aqueous dispersion, and M is preferably H or NH₄ from the viewpoint of improving dispersion stability.

In formula (6d), X¹ is preferably -CF₃ from the viewpoint of stability of the aqueous dispersion, n4 is preferably an integer of 5 or less from the viewpoint of water solubility, Y³ is preferably -COOM or -SO₃M from the viewpoint of obtaining appropriate water solubility and stability of the aqueous dispersion, and M is preferably H or NH₄.

Examples of the compound represented by formula (6d) include CF₂=CFOCF₂CF(CF₃)OCF₂CF₂COOM, CF₂=CFOCF₂CF(CF₃)OCF₂COOM, CF₂=CFOCF₂CF(CF₃)OCF₂CF₂CF₂COOM, CF₂=CFOCF₂CF(CF₃)OCF₂CF₂SO₃M, CF₂=CFOCF₂CF(CF₃)OCF₂SO₃M, and CF₂=CFOCF₂CF(CF₃)OCF₂CF₂CF₂SO₃M, wherein M represents H, NH₄, or an alkali metal.

In general formula (6e), n5 is preferably an integer of 5 or less from the viewpoint of water solubility, Y³ is preferably -COOM or -SO₃M from the viewpoint of obtaining appropriate water solubility and stability of the aqueous dispersion, and M is preferably H or NH₄.

Examples of the compound represented by general formula (6e) include CF₂=CFOCF₂CF₂CF₂COOM and CF₂=CFOCF₂CF₂CF₂SO₃M, wherein M represents H, NH₄, or an alkali metal.

In general formula (7), Rf is preferably a fluorine-containing alkylene group having 1 to 40 carbon atoms. In general formula (7), at least one of X and Y preferably contains a fluorine atom.

The compound represented by general formula (7) is preferably at least one selected from the group consisting of a compound represented by general formula (7a):

CF₂=CF-(CF₂)ₙ₁-Y³ (7a)

wherein n1 represents an integer of 1 to 10; and Y³ is as defined above; and a compound represented by general formula (7b) :

CF₂=CF-(CF₂C(CF₃)F)ₙ₂-Y³ (7b)

wherein n2 represents an integer of 1 to 5; and Y³ is as defined above.

Y³ is preferably -SO₃M or -COOM, and M is preferably H, a metal atom, NR^{7y}₄, optionally substituted imidazolium, optionally substituted pyridinium, or optionally substituted phosphonium. R^{7y} represents H or an organic group.

In formula (7a), n1 is preferably an integer of 5 or less, and more preferably an integer of 2 or less. Y³ is preferably -COOM or -SO₃M from the viewpoint of obtaining appropriate water-solubility and stability of the aqueous dispersion, and M is preferably H or NH₄ from the viewpoint of being less likely to remain as impurities and improving the heat resistance of the resulting molded body.

Examples of the compound represented by formula (7a) include CF₂=CFCF₂COOM and CF₂=CFCF₂SO₃M, wherein M is as defined above.

In the formula (7b), n2 is preferably an integer of 3 or less from the viewpoint of stability of the resulting aqueous dispersion, Y³ is preferably -COOM or -SO₃M from the viewpoint of obtaining appropriate water-solubility and stability of the aqueous dispersion, and M is preferably H or NH₄ from the viewpoint of being less likely to remain as impurities and improving the heat resistance of the resulting molded body.

The modifying monomer preferably includes the modifying monomer (A), preferably includes at least one selected from the group consisting of compounds represented by general formula (5a), general formula (5c), general formula (6a), general formula (6b), general formula (6c), and general formula (6d), and more preferably includes the compound represented by general formula (5a) or general formula (5c).

When the modifying monomer used is the modifying monomer (A), the content of the modifying monomer (A) unit is preferably in the range of 0.00001 to 1.0% by mass based on all polymerized units in the TFE polymer (PTFE). The lower limit is more preferably 0.0001% by mass, more preferably 0.0005% by mass, even more preferably 0.001% by mass, and yet more preferably 0.005% by mass. The upper limit is, in ascending order of preference, 0.90% by mass, 0.50% by mass, 0.40% by mass, 0.30% by mass, 0.20% by mass, 0.15% by mass, 0.10% by mass, 0.08% by mass, 0.05% by mass, and 0.01% by mass.

Preferably, the aqueous dispersion of the TFE polymer, depending on the purpose, is mixed with an organic or inorganic filler to form a composition and used in a variety of applications. The composition, when applied to a metal or ceramic substrate, can provide a coating surface having non-stickiness, a low coefficient of friction, and excellent gloss, smoothness, abrasion resistance, weather resistance, and heat resistance, which is suitable for coating of rolls, cooking utensils, and the like, and impregnation processing of glass cloth, and the like.

The aqueous dispersion may also be used to prepare an organosol of the TFE polymer. The organosol may contain the TFE polymer and an organic solvent, and examples of the organic solvent include ether-based solvents, ketone-based solvents, alcohol-based solvents, amide-based solvents, ester-based solvents, aliphatic hydrocarbon-based solvents, aromatic hydrocarbon-based solvents, and halogenated hydrocarbon-based solvents. Preferably used are N-methyl-2-pyrrolidone and dimethylacetamide. The organosol may be prepared by the method described in, for example, International Publication No. WO 2012/002038.

The aqueous dispersion of the TFE polymer is also preferably used as a processing aid. When used as a processing aid, the aqueous dispersion is mixed with a host polymer, for example, to improve the melt strength of the host polymer in melt fabrication and to improve the mechanical strength, electric properties, flame retardancy, anti-dripping properties during combustion, and slidability of the resulting polymer.

The aqueous dispersion of the TFE polymer is also preferably used as a binder for batteries or used in dustproof applications.

The aqueous dispersion of the TFE polymer is also preferably combined with a resin other than the TFE polymer to form a processing aid before use. The aqueous dispersion is suitable as a material of the PTFEs described in, for example, Japanese Patent Laid-Open No. 11-49912, U.S. Patent No. 5,804,654, Japanese Patent Laid-Open No. 11-29679, and Japanese Patent Laid-Open No. 2003-2980. The processing aid containing the aqueous dispersion is not inferior in any way to those described in the above publications.

The aqueous dispersion of the TFE polymer is also preferably mixed with an aqueous dispersion of a melt-fabricable fluororesin so that the components coagulate to form co-coagulated powder. The co-coagulated powder is suitable as a processing aid.

Examples of the melt-fabricable fluororesin include FEP, PFA, TFE/perfluoroallyl ether copolymers, ETFE, and ethylene/TFE/HFP copolymers (EFEP), and, in particular, PFA or FEP is preferable.

The aqueous dispersion also preferably contains a melt-processible fluororesin. Examples of the melt-fabricable fluororesin include FEP, PFA, TFE/perfluoroallyl ether copolymers, ETFE, and EFEP. The aqueous dispersion containing the melt-fabricable fluororesin may be used as a coating material. The melt-fabricable fluororesin enables sufficient fusion of the TFE polymer particles, thus improving the film-formability and providing the resulting film with gloss.

The aqueous dispersion of the TFE polymer is also preferably used as a dust suppression treatment agent. The dust suppression treatment agent may be used in a method for suppressing dust from a dust-generating substance by mixing the dust suppression treatment agent with the dust-generating substance and subjecting the mixture to compression-shear action at a temperature of 20 to 200°C to fibrillate the TFE polymer, for example, the methods described in Japanese Patent No. 2,827,152 and Japanese Patent No. 2,538,783.

The aqueous dispersion of the TFE polymer can be suitably used for the dust suppression treatment agent composition described in International Publication No. WO 2007/004250, and can also be suitably used for the method of dust suppression treatment described in International Publication No. WO 2007/000812.

The dust suppression treatment agent is suitably used in dust suppression treatment in the fields of building-products, soil stabilizers, solidifying materials, fertilizers, landfill of incineration ash and harmful substance, explosion proof equipment, cosmetics, and sands for pet excretion represented by cat sand.

The aqueous dispersion of the TFE polymer is also preferably used as a material for producing TFE polymer fiber by a dispersion spinning method. The dispersion spinning method is a method in which the aqueous dispersion of the TFE polymer and an aqueous dispersion of a matrix polymer are mixed and the mixture is extruded to form an intermediate fiber structure, and then the intermediate fiber structure is fired to decompose the matrix polymer and sinter the TFE polymer particles, thereby providing TFE polymer fibers.

Low molecular weight PTFE can also be produced by the production method of the present disclosure.

Low molecular weight PTFE may be produced by polymerization, and can also be produced by reducing the molecular weight of high molecular weight PTFE obtained by polymerization by a known method (thermal decomposition, radiation decomposition, or the like).

Low molecular weight PTFE having a molecular weight of 600,000 or less (also referred to as PTFE micropowder) has excellent chemical stability and a very low surface energy, and is less likely to generate fibrils, and is therefore suitably used as an additive for improving the lubricity and the texture of the coating surface in production of plastics, inks, cosmetics, coating materials, greases, parts of office automation equipment, and toners (e.g., see Japanese Patent Laid-Open No. 10-147617).

Low molecular weight PTFE may also be obtained by polymerizing TFE, or TFE and a monomer copolymerizable with TFE, in the presence of a chain transfer agent. In this case, the chain transfer agent is preferably at least one selected from the group consisting of alkanes having 2 to 4 carbon atoms. Specifically, the chain transfer agent is more preferably methane, ethane, propane, butane, or isobutane, and even more preferably ethane or propane. In this case, the amount of the chain transfer agent is preferably 10 ppm by mass or more or more than 10 ppm by mass based on the aqueous medium.

When using the low molecular weight PTFE obtained by polymerization as a powder, powder particles can be obtained by coagulating the aqueous dispersion.

In the present disclosure, high molecular weight PTFE means non melt-processible and fibrillable PTFE. On the other hand, low molecular weight PTFE means melt-fabricable and non-fibrillable PTFE.

Non-melt processibility means a property that the melt flow rate cannot be measured at a temperature higher than the crystal melting point in accordance with ASTM D 1238 and D 2116.

The presence or absence of fibrillability can be determined by "paste extrusion", a representative method of forming a "high molecular weight PTFE powder" which is a powder made from a polymer of TFE. Usually, high molecular weight PTFE can be paste-extruded because it is fibrillable. When a non-fired molded product obtained by paste extrusion shows substantially no strength or elongation (for example, when it shows an elongation of 0% and is broken when stretched), it can be regarded as non-fibrillable.

The high molecular weight PTFE preferably has a standard specific gravity (SSG) of 2.130 to 2.280. The standard specific gravity is determined by the water replacement method in conformity with ASTM D 792 using a sample molded in conformity with ASTM D4895-89. The "high molecular weight" as used herein means that the standard specific gravity is within the above range.

The low molecular weight PTFE has a melt viscosity at 380°C of 1 × 10² to 7 × 10⁵ Pa·s. The "low molecular weight" as used herein means that the melt viscosity is within the above range. The melt viscosity is a value measured while maintaining 2 g of a sample, which is heated for 5 minutes at 380°C in advance, at that temperature under a load of 0.7 MPa in accordance with ASTM D 1238 using a flow tester (manufactured by Shimadzu Corporation) and a 2φ-8L die.

The high molecular weight PTFE has a melt viscosity significantly higher than that of the low molecular weight PTFE, and it is difficult to accurately measure the melt viscosity thereof. The melt viscosity of the low molecular weight PTFE is measurable, but it is difficult to obtain a molded article usable in the measurement of standard specific gravity from the low molecular weight PTFE, and it is thus difficult to measure the accurate standard specific gravity thereof. Accordingly, in the present disclosure, the standard specific gravity is used as an index of the molecular weight of the high molecular weight PTFE, while the melt viscosity is used as an index of the molecular weight of the low molecular weight PTFE. It should be noted that there is no known measuring method for directly specifying the molecular weight of either the high molecular weight PTFE or the low molecular weight PTFE.

The high molecular weight PTFE preferably has a peak temperature of 333 to 347°C, and more preferably 335 to 345°C. The low molecular weight PTFE preferably has a peak temperature of 322 to 333°C, and more preferably 324 to 332°C. The peak temperature can be specified as a temperature corresponding to the maximum value appearing in a differential thermal analysis (DTA) curve obtained by raising the temperature of PTFE, which has no history of being heated to a temperature of 300°C or higher, under a condition of 10°C/min using TG-DTA (thermogravimetric - differential thermal analyzer).

The peak temperature of PTFE may be 322 to 347°C.

When the PTFE is a high molecular weight PTFE, the upper limit of the peak temperature of PTFE may be 347°C or lower, 346°C or lower, 345°C or lower, 344°C or lower, 343°C or lower, 342°C or lower, 341°C or lower, or 340°C or lower.

When the PTFE is a high molecular weight PTFE, the lower limit of the peak temperature of the PTFE may be 333°C or higher, or 335°C or higher.

When the PTFE is a low molecular weight PTFE, the upper limit of the peak temperature of the PTFE may be 333°C or lower, or 332°C or lower.

When the PTFE is a low molecular weight PTFE, the lower limit of the peak temperature of the PTFE may be 322°C or higher, or 324°C or higher.

The average primary particle size of primary particles of the low molecular weight PTFE is preferably 10 to 300 nm, is more preferably 50 nm or more, even more preferably 100 nm or more, and yet more preferably 150 nm or less, and is more preferably 250 nm or less. A relatively small average primary particle size of primary particles can be obtained by, for example, adding a modifying monomer to the polymerization system at the initial stage of TFE polymerization.

The average primary particle size of primary particles of the low molecular weight PTFE can be measured by dynamic light scattering. First, a low molecular weight PTFE aqueous dispersion having a polymer solid concentration that is regulated to about 1.0% by mass is prepared, and the average primary particle size is measured 70 times cumuratively by dynamic light scattering at a measurement temperature of 25°C wherein the solvent (water) has a refractive index of 1.3328 and a viscosity of 0.8878 mPa·s. In the dynamic light scattering, ELSZ-1000S (manufactured by Otsuka Electronics Co., Ltd.) may be used, for example.

Also, the average primary particle size can be measured by the following method. A dispersion is diluted with water to a solid concentration of 0.15% by mass. The transmittance of incident light at 550 nm relative to the unit length of the resulting diluted latex is determined and the number-based length average particle size is determined by measuring the Feret diameter with a transmission electron microscope image. Based on these values, a calibration curve is created. Using this calibration curve, the average particle size can be determined from the measured transmittance of the projected light at 550 nm of each sample.

Preferably, the high molecular weight PTFE has at least one endothermic peak in a range of 333 to 347°C on a heat-of-fusion curve with a temperature-increasing rate of 10°C/min using a differential scanning calorimeter (DSC) for a PTFE which has never been heated up to 300°C or higher, and has an enthalpy of fusion of 52 mJ/mg or higher at 290 to 350°C calculated from the heat-of-fusion curve. The enthalpy of fusion of PTFE is more preferably 55 mJ/mg or more, and even more preferably 58 mJ/mg or more.

### (II) Melt-fabricable fluororesin

(1) In the production method of the present disclosure, the polymerization for FEP is preferably performed at a polymerization temperature of 10 to 150°C at a polymerization pressure of 0.3 to 6.0 MPaG.

FEP preferably has a monomer composition (% by mass) of TFE:HFP = (60 to 95): (5 to 40), and more preferably (85 to 92):(8 to 15).

In addition to TFE and HFP, by polymerizing a further monomer that is copolymerizable with these monomers, a copolymer of TFE, HFP and a further monomer may be obtained as FEP. Examples of the further monomer include the fluoromonomers (excluding TFE and HFP) and fluorine-free monomers described above. One further monomer may be used singly, or multiple further monomers may be used in combination. The further monomer is preferably perfluoro(alkyl vinyl ether). The content of the further-monomer unit in FEP may be 0.1 to 2% by mass based on all monomer units.

In the polymerization for FEP, the chain transfer agent used is preferably cyclohexane, methanol, ethanol, propanol, ethane, propane, butane, pentane, hexane, carbon tetrachloride, chloroform, methylene chloride, methyl chloride, or the like, and the pH buffer used is preferably ammonium carbonate, disodium hydrogen phosphate, or the like.

(2) In the production method of the present disclosure, the polymerization for a TFE/perfluoro(alkyl vinyl ether) copolymer such as PFA or MFA and a TFE/perfluoroallyl ether copolymer is usually preferably carried out at a polymerization temperature of 10 to 100°C at a polymerization pressure of 0.3 to 6.0 MPaG.

The TFE/perfluoro(alkyl vinyl ether) copolymer preferably has a monomer composition (mol%) of TFE:perfluoro(alkyl vinyl ether) = (90 to 99.7):(0.3 to 10), and more preferably (97 to 99): (1 to 3). The perfluoro(alkyl vinyl ether) used is preferably represented by the formula: CF₂=CFORf⁴, wherein Rf⁴ is a perfluoroalkyl group having 1 to 6 carbon atoms.

In addition to TFE and perfluoro(alkyl vinyl ether), by polymerizing a further monomer that is copolymerizable with these monomers, a copolymer of TFE, perfluoro (alkyl vinyl ether), and the further monomer may be obtained as a TFE/perfluoro (alkyl vinyl ether) copolymer. Examples of the further monomer include the fluoromonomers (excluding TFE and perfluoro(alkyl vinyl ether) and fluorine-free monomers described above. One further monomer may be used singly, or multiple further monomers may be used in combination. The content of the further-monomer unit in the TFE/perfluoro (alkyl vinyl ether) copolymer may be 0.1 to 2% by mass based on all monomer units.

The TFE/perfluoroallyl ether copolymer preferably has a monomer composition (mol%) of TFE:perfluoroallyl ether = (90 to 99.7): (0.3 to 10), and more preferably (97 to 99): (1 to 3). The perfluoroallyl ether used is preferably represented by the formula: CF₂=CFCF₂ORf⁴, wherein Rf⁴ is a perfluoroalkyl group having 1 to 6 carbon atoms.

In addition to TFE and perfluoroallyl ether, by polymerizing a further monomer that is copolymerizable with these monomers, a copolymer of TFE, perfluoroallyl ether, and the further monomer may be obtained as a copolymer of TFE/perfluoroallyl ether. Examples of the further monomer include the fluoromonomers (excluding TFE and perfluoroallyl ether) and fluorine-free monomers described above. One further monomer may be used singly, or multiple further monomers may be used in combination. The content of the further-monomer unit in the TFE/perfluoroallyl ether copolymer may be 0.1 to 2% by mass based on all monomer units.

In the polymerization for the TFE/perfluoro(alkyl vinyl ether) copolymer and the TFE/perfluoroallyl ether copolymer, the chain transfer agent used is preferably cyclohexane, methanol, ethanol, propanol, propane, butane, pentane, hexane, carbon tetrachloride, chloroform, methylene chloride, methyl chloride, methane, ethane, or the like, and the pH buffer used is preferably ammonium carbonate, disodium hydrogen phosphate, or the like.

The aqueous dispersion of the TFE/perfluoro(alkyl vinyl ether) copolymer such as PFA or MFA and the TFE/perfluoroallyl ether copolymer may also be appropriately mixed with a nonionic surfactant, and optionally polyethersulfone, polyamide-imide, and/or polyimide, and metal powder are dissolved or dispersed in an organic solvent, and thereby a primer composition can be obtained. This primer composition may be used in a method for applying a fluororesin to a metal surface, wherein the method includes applying the primer composition to a metal surface, applying a melt-fabricable fluororesin composition to the resulting primer layer, and firing the melt-fabricable fluororesin composition layer together with the primer layer.

(3) In the production method of the present disclosure, the polymerization for ETFE is preferably performed at a polymerization temperature of 10 to 100°C at a polymerization pressure of 0.3 to 2.0 MPaG.

The ETFE preferably has a monomer composition (mol%) of TFE:ethylene = (50 to 99): (50 to 1).

In addition to ethylene and TFE, by polymerizing a further polymer that is copolymerizable with these monomers, a copolymer of ethylene, TFE and a further monomer may be obtained as ETFE. Examples of the further monomer include the fluoromonomers (excluding TFE) and fluorine-free monomers (excluding ethylene) described above. One further monomer may be used singly, or multiple further monomers may be used in combination.

The further monomer is preferably hexafluoropropylene, perfluorobutyl ethylene, perfluorohexyl ethylene, 3,3,4,4,5,5,6,6,7,7,8,8,8-tridecafluorooct-1-ene, 2, 3, 3, 4, 4, 5, 5-heptafluoro-1-pentene (CH₂=CFCF₂CF₂CF₂H), or 2-trifluoromethyl-3,3,3-trifluoropropene ((CF₃)₂CF=CH₂).

The content of the further-monomer unit in ETFE may be 0 to 20% by mass based on all monomer units. A preferable mass ratio is TFE:ethylene:further monomer=(63 to 94): (27 to 2): (1 to 10).

In the polymerization for ETFE, the chain transfer agent used is preferably cyclohexane, methanol, ethanol, propanol, ethane, propane, butane, pentane, hexane, carbon tetrachloride, chloroform, methylene chloride, methyl chloride, or the like.

(4) The production method of the present disclosure may be used to produce an electrolyte polymer precursor. In the production method of the present disclosure, the polymerization for the electrolyte polymer precursor is preferably performed at a polymerization temperature of 10 to 100°C and a polymerization pressure of 0.1 to 2.0 MPaG. The electrolyte polymer precursor is composed of a monomer containing a functional group represented by -SO₂X¹⁵¹, -COZ¹⁵¹, or -POZ¹⁵²Z¹⁵³ (wherein X¹⁵¹, Z¹⁵¹, Z¹⁵², and Z¹⁵³ are as will be described below), and can be converted to an ion-exchangeable polymer through hydrolysis treatment.

An example of the monomer to be used in the electrolyte polymer precursor is
a fluoromonomer represented by general formula (150): CF₂=CF-O-(CF₂CFY¹⁵¹-O)ₙ-(CFY¹⁵²) ₘ-A¹⁵¹ wherein Y¹⁵¹ represents a fluorine atom, a chlorine atom, a - SO₂F group, or a perfluoroalkyl group; the perfluoroalkyl group optionally containing ether oxygen and a -SO₂F group; n represents an integer of 0 to 3; n Y¹⁵¹s are the same as or different from each other; Y¹⁵² represents a fluorine atom, a chlorine atom, or a -SO₂F group; m represents an integer of 1 to 5; m Y¹⁵²s are the same as or different from each other; A¹⁵¹ represents -SO₂X¹⁵¹, -COZ¹⁵¹, or -POZ¹⁵²Z¹⁵³; X¹⁵¹ represents F, Cl, Br, I, -OR¹⁵¹, or-NR¹⁵²R¹⁵³; Z¹⁵¹, Z¹⁵², and Z¹⁵³ are the same as or different from each other, and each represent -NR¹⁵⁴R¹⁵⁵ or - OR¹⁵⁶; R¹⁵¹, R¹⁵², R¹⁵³, R¹⁵⁴, R¹⁵⁵, and R¹⁵⁶ are the same as or different from each other, and each represent H, ammonium, an alkali metal, or an alkyl group, aryl group, or sulfonyl-containing group optionally containing a fluorine atom. Examples of the monomer to be used in the electrolyte polymer precursor also include the compound containing two fluorosulfonyl groups described in International Publication No. WO 2007/013532 and the perfluoromonomer having a -SO₂F group and a dioxolane ring described in International Publication No. WO 2014/175123. The electrolyte polymer precursor preferably has a monomer composition (mol%) of TFE:vinyl ether = (50 to 99): (50 to 1), and more preferably TFE:vinyl ether = (50 to 93): (50 to 7).

The electrolyte polymer precursor may be modified with a third monomer within a range of 0 to 20% by mass of all monomers. Examples of the third monomer include multifunctional monomers such as CTFE, vinylidene fluoride, perfluoroalkyl vinyl ether, perfluorobutenyl vinyl ether; cyclic monomers such as perfluoro-2,2-dimethyl-1,3-dioxolane and perfluoro-2-methylene-4-methyl-1,3-dioxole; and divinylbenzene.

The electrolyte polymer precursor thus obtained may be molded into a film, followed by hydrolysis using an alkali solution and a treatment using a mineral acid, and used as a polymer electrolyte film in fuel cells, electrolysis devices, redox flow batteries, and the like.

The electrolyte polymer precursor may be hydrolyzed using an alkali solution while the dispersed state thereof is maintained, thereby providing an electrolyte polymer dispersion.

This dispersion may be then heated up to 120°C or higher in a pressurized vessel and thereby dissolved in, for example, a solvent mixture of water and an alcohol, i.e., converted into a solution state.

The solution thus obtained may be used as a binder for electrodes and, also, may be combined with a variety of additives and cast to form a film, and the film may be used for antifouling films, organic actuators, or the like.

### (5) TFE/VDF copolymer

In the production method of the present disclosure, the polymerization for the TFE/VDF copolymer may be performed at any polymerization temperature, such as 0 to 100°C. The polymerization pressure is suitably determined according to other polymerization conditions such as the polymerization temperature, and may be usually 0 to 9.8 MPaG.

The TFE/VDF copolymer preferably has a monomer composition (mol%) of TFE:VDF = (5 to 90): (95 to 10). The TFE/VDF copolymer may be modified with a third monomer within a range of 0 to 50 mol% of all monomers. The monomer composition is preferably TFE:ethylene:third monomer = (30 to 85): (10 to 69.9): (0.1 to 10).

The third monomer is preferably a monomer represented by the formula: CX¹¹X¹²=CX¹³(CX¹⁴X¹⁵)ₙ₁₁X¹⁶ wherein X¹¹ to X¹⁶ are the same or different, and each represent H, F, or Cl; n11 represents an integer of 0 to 8, provided that TFE and VDF are excluded; or
a monomer represented by the formula: CX²¹X²²=CX²³-O(CX²⁴X²⁵)ₙ₂₁X²⁶
wherein X²¹ to X²⁶ are the same as or different from each other, and each represent H, F, or Cl; and n21 represents an integer of 0 to 8.

The third monomer may be a fluorine-free ethylenic monomer. From the viewpoint of maintaining heat resistance and chemical resistance, the fluorine-free ethylenic monomer is preferably selected from the group consisting of ethylenic monomers having 6 or fewer carbon atoms. Examples include ethylene, propylene, 1-butene, 2-butene, vinyl chloride, vinylidene chloride, alkyl vinyl ethers (e.g., methyl vinyl ether, ethyl vinyl ether, and propyl vinyl ether), maleic acid, itaconic acid, 3-butenoic acid, 4-pentenoic acid, vinylsulfonic acid, acrylic acid, and methacrylic acid.

The aqueous dispersion of the TFE/VDF copolymer may preferably be used to coat a porous substrate formed from a polyolefin resin to provide a composite porous film. The aqueous dispersion may also preferably contain inorganic particles and/or organic particles dispersed therein and be used to coat a porous substrate to provide a composite porous film. The composite porous film thereby obtained may be used as a separator for lithium secondary batteries.

The fluoropolymer in the aqueous dispersion obtained by the production method of the present disclosure and the fluoropolymer in the aqueous dispersion of the present disclosure are also preferably at least one melt-fabricable fluororesin selected from the group consisting of a TFE/fluoroalkyl vinyl ether (FAVE) copolymer and a TFE/HFP copolymer. When the fluoropolymer is such a copolymer, e.g., when the fluoropolymer aqueous dispersion of the present disclosure is used as a coating material composition that will be described below, a coating film having an excellent appearance and physical properties can be easily obtained.

The melting point of the melt-fabricable fluororesin is preferably 200 to 322°C, is more preferably 220°C or higher and even more preferably 240°C or higher, and is more preferably 315°C or lower and even more preferably 310°C or lower.

In the present disclosure, the melting point of the melt-fabricable fluororesin can be measured using a differential scanning calorimeter [DSC].

The TFE/FAVE copolymer comprises at least TFE unit and a FAVE unit.

A FAVE constituting the FAVE unit may be at least one selected from the group consisting of a monomer represented by general formula (11):

CF₂=CFO(CF₂CFY¹O)ₚ-(CF₂CF₂CF₂O)_{q}-Rf (11)

wherein Y¹ represents F or CF₃, Rf represents a perfluoroalkyl group having 1 to 5 carbon atoms, p represents an integer of 0 to 5, and q represents an integer of 0 to 5; and a monomer represented by general formula (12):

CFX=CXOCF₂OR¹ (12)

wherein X is the same or different and represents H, F, or CF₃, R¹ represents a linear or branched fluoroalkyl group having 1 to 6 carbon atoms and optionally containing 1 to 2 atoms of at least one selected from the group consisting of H, Cl, Br, and I, or a cyclic fluoroalkyl group having 5 or 6 carbon atoms and optionally containing 1 to 2 atoms of at least one selected from the group consisting of H, Cl, Br, and I.

The FAVE is, in particular, preferably a monomer represented by general formula (11), more preferably at least one selected from the group consisting of perfluoro(methyl vinyl ether), perfluoro(ethyl vinyl ether) (PEVE), and perfluoro(propyl vinyl ether) (PPVE), even more preferably at least one selected from the group consisting of PEVE and PPVE, and particularly preferably PPVE.

The content of FAVE unit in the TFE/FAVE copolymer is preferably 1.0 to 10.0% by mass based on all monomer units, is more preferably 2.0% by mass or more, even more preferably 2.5% by mass or more, yet more preferably 3.0% by mass or more, particularly preferably 3.5% by mass or more, and most preferably 4.0% by mass or more, and is more preferably 8.0% by mass or less, even more preferably 7.0% by mass or less, yet more preferably 6.5% by mass or less, and particularly preferably 6.0% by mass or less.

The content of TFE unit in the TFE/FAVE copolymer is preferably 99.0 to 90.0% by mass based on all monomer units, is more preferably 98.0% by mass or less, even more preferably 97.5% by mass or less, yet more preferably 97.0% by mass or less, particularly preferably 96.5% by mass or less, and most preferably 96.0% by mass or less, and is more preferably 92.0% by mass or more, even more preferably 93.0% by mass or more, yet more preferably 93.5% by mass or more, and particularly preferably 94.0% by mass or more.

The TFE/FAVE copolymer can also comprise a monomer unit that is derived from a monomer copolymerizable with TFE and FAVE. In this case, the content of the monomer copolymerizable with TFE and FAVE is preferably 0 to 9.0% by mass and more preferably 0.1 to 2.0% by mass based on all monomer units of the copolymer.

Examples of the monomer copolymerizable with TFE and FAVE include HFP, a vinyl monomer represented by CZ¹Z²=CZ³(CF₂)ₙZ⁴ (wherein Z¹, Z², and Z³ are the same or different and represent H or F; Z⁴ represents H, F, or Cl; and n represents an integer of 2 to 10), and an alkyl perfluorovinyl ether derivative represented by CF₂=CF-OCH₂-Rf¹ (wherein Rf¹ represents a perfluoroalkyl group having 1 to 5 carbon atoms). In particular, HFP is preferable.

The TFE/FAVE copolymer is preferably at least one selected from the group consisting of a copolymer consisting of TFE unit and a FAVE unit and the above TFE/HFP/FAVE copolymer, and more preferably a copolymer consisting of TFE unit and a FAVE unit. In one embodiment, the TFE/FAVE copolymer does not comprise HFP unit.

The melting point of the TFE/FAVE copolymer is preferably 280 to 322°C, is more preferably 290°C or higher and even more preferably 295°C or higher, and is more preferably 315°C or lower and even more preferably 310°C or lower.

The TFE/HFP copolymer comprises at least TFE unit and HFP unit.

The content of the HFP unit in the TFE/HFP copolymer is preferably 1.0% by mass to 30.0% by mass based on all monomer units, is more preferably 2.0% by mass or more and even more preferably 5.0% by mass or more, and is more preferably 15.0% by mass or less.

The content of the TFE unit in the TFE/HFP copolymer is preferably 70.0 to 99.0% by mass or more based on all monomer units, more preferably 75.0% by mass or more, even more preferably 80.0% by mass or more, and yet more preferably 85.0% by mass or more, and is more preferably 98.0% by mass or less.

The TFE/HFP copolymer preferably has a mass ratio of the TFE unit to the HFP unit (TFE/HFP) of 70 to 99/1 to 30 (% by mass). The mass ratio (TFE/HFP) is more preferably 85 to 95/5 to 15 (% by mass).

The TFE/HFP copolymer can further comprise a FAVE unit. The FAVE unit contained in the TFE/HFP copolymer may be the same as the FAVE unit described above.

When the TFE/HFP copolymer comprises the FAVE unit, the content of the FAVE unit is preferably 0.1 to 25.0% by mass, is more preferably 0.5% by mass or more and even more preferably 1.0% by mass or more, and is more preferably 10.0% by mass or less, even more preferably 4.0% by mass or less, and yet more preferably 2.0% by mass or less.

When the TFE/HFP copolymer is a copolymer comprising TFE unit, HFP unit, and the FAVE unit (hereinafter also referred to as a "TFE/HFP/FAVE copolymer"), the mass ratio (TFE/HFP/FAVE) is preferably 70.0 to 99.0/0.1 to 25.0/0.1 to 25.0 (% by mass). The mass ratio (TFE/HFP/FAVE) is more preferably 75.0 to 98.0/1.0 to 15.0/1.0 to 10.0 (% by mass). The TFE/HFP/FAVE copolymer preferably contains the HFP unit and the FAVE unit in a total amount of 1% by mass or more.

The TFE/HFP copolymer may further comprises a further ethylenic monomer (α) unit other than the TFE unit, the HFP unit, and the FAVE unit. The further ethylenic monomer (α) unit is not limited as long as it is a monomer unit copolymerizable with TFE, HFP, and FAVE, and examples include fluorine-containing ethylenic monomers such as vinyl fluoride (VF), vinylidene fluoride (VdF), and chlorotrifluoroethylene (CTFE); non-fluorinated ethylenic monomers such as ethylene, propylene, and alkyl vinyl ether; and the like. The content of the further ethylenic monomer (α) unit is preferably 0 to 25.0% by mass, and more preferably 0.1 to 25.0% by mass.

When the copolymer is a TFE/HFP/FAVE/further ethylenic monomer (α) copolymer, the mass ratio (TFE/HFP/FAVE/further ethylenic monomer (α)) is preferably 70.0 to 98.0/0.1 to 25.0/0.1 to 25.0/0.1 to 25.0 (% by mass). The TFE/HFP/FAVE/further ethylenic monomer (α) copolymer preferably contains monomer units other than the TFE unit in a total amount of 1% by mass or more.

The melting point of the TFE/HFP copolymer is preferably 200 to 322°C, is more preferably 220°C or higher and even more preferably 240°C or higher, and is more preferably 300°C or lower, even more preferably 280°C or lower, and particularly preferably 270°C or lower.

The melt flow rate of the melt-fabricable fluororesin is preferably 0.1 to 70 g/10 min, is more preferably 1.0 g/10 min or more, and is more preferably 60 g/10 min or less, even more preferably 50 g/10 min or less, yet more preferably 40 g/10 min or less, and particularly preferably 30 g/10 min or less.

In the present disclosure, the melt flow rate of the melt-fabricable fluororesin is a value obtained in accordance with ASTM D1238 as the mass (g/10 min) of the polymer flowing out from a nozzle having an inner diameter of 2.1 mm and a length of 8 mm at 372°C under a load of 5 kg in 10 minutes using a melt indexer (manufactured by Yasuda Seiki Seisakusho Ltd.) .

The fluoropolymer aqueous dispersion of the present disclosure can be suitably used in a coating material composition, and can be suitably used in a liquid coating material composition. The coating material composition of the present disclosure contains a fluoropolymer aqueous dispersion having a reduced content of a fluorine-containing compound having a hydrophilic group and having 7 or fewer carbon atoms, and thus provides a coating film having a large contact angle and a small frictional coefficient. The reason therefor is not clear, but it is conjectured that the coating material composition contains the fluoropolymer aqueous dispersion having a reduced content of the fluorine-containing compound having a hydrophilic group, thus the dispersion stability of fluoropolymer particles in the coating material composition is appropriately low, accordingly the fluoropolymer particles more likely float to the surface of the coating film than other components during the formation of a coating film, and, as a result, the fluoropolymer content on the coating film surface is increased.

The coating material composition of the present disclosure may contain a further component in addition to the fluoropolymer aqueous dispersion. The further component include film-forming agents and binder resins.

The coating material composition of the present disclosure can be prepared by mixing the fluoropolymer aqueous dispersion of the present disclosure with other components. A coating material composition having an adjusted solid concentration may be prepared by mixing the fluoropolymer aqueous dispersion of the present disclosure with an aqueous medium. Also, the fluoropolymer aqueous dispersion of the present disclosure may be mixed with a nonionic surfactant to prepare a coating material composition having an adjusted content of the nonionic surfactant. The coating material composition of the present disclosure may have a different fluoropolymer content than the fluoropolymer aqueous dispersion of the present disclosure, and may have a different nonionic surfactant content than the fluoropolymer aqueous dispersion of the present disclosure.

In one embodiment, the coating material composition of the present disclosure contains a fluorine-containing compound having a hydrophilic group and having 7 or fewer carbon atoms. The content of the fluorine-containing compound having a hydrophilic group and having 7 or fewer carbon atoms in the coating material composition is more than 0 ppb by mass and less than 300 ppb by mass based on the coating material composition. A preferable upper limit of the content of the fluorine-containing compound having a hydrophilic group and having 7 or fewer carbon atoms in the coating material composition is 280 ppb by mass or less, 260 ppb by mass or less, 240 ppb by mass or less, 220 ppb by mass or less, 200 ppb by mass or less, 180 ppb by mass or less, 160 ppb by mass or less, or 140 ppb by mass or less. A preferable lower limit of the content of the fluorine-containing compound having a hydrophilic group and having 7 or fewer carbon atoms in the coating material composition is 0.1 ppb by mass or more, 1 ppb by mass or more, 5 ppb by mass or more, 10 ppb by mass or more, 20 ppb by mass or more, 30 ppb by mass or more, or 40 ppb by mass or more.

The fluorine-containing compound having a hydrophilic group and having 7 or fewer carbon atoms may be the above-described fluorine-containing surfactant having 7 or fewer carbon atoms used in the polymerization of the fluoromonomer. That is, in one embodiment, the coating material composition contains at least a fluorine-containing surfactant having 7 or fewer carbon atoms as the fluorine-containing compound having a hydrophilic group and having 7 or fewer carbon atoms.

In one embodiment, the coating material composition of the present disclosure contains a fluorine-containing compound having a hydrophilic group. The content of the fluorine-containing compound having a hydrophilic group in the coating material composition is more than 0 ppb by mass and less than 300 ppb by mass based on the coating material composition. A preferable upper limit of the content of the fluorine-containing compound having a hydrophilic group and having 7 or fewer carbon atoms in the coating material composition is 280 ppb by mass or less, 260 ppb by mass or less, 240 ppb by mass or less, 220 ppb by mass or less, 200 ppb by mass or less, 180 ppb by mass or less, 160 ppb by mass or less, or 140 ppb by mass or less. A preferable lower limit of the content of the fluorine-containing compound having a hydrophilic group and having 7 or fewer carbon atoms in the coating material composition is 0.1 ppb by mass or more, 1 ppb by mass or more, 5 ppb by mass or more, 10 ppb by mass or more, 20 ppb by mass or more, 30 ppb by mass or more, or 40 ppb by mass or more.

The fluorine-containing compound having a hydrophilic group may be the above-described fluorine-containing surfactant used in the polymerization of the fluoromonomer.

### <Film-forming agent>

In one embodiment, the coating material composition of the present disclosure contains a film-forming agent. When containing a film-forming agent, the coating material composition is capable of suppressing cracking during the drying of the resulting coating film, and thus has excellent workability.

Examples of the film-forming agent include acrylic resins such as depolymerizable acrylic resins, urethane resins, polyethylene glycol, and polypropylene glycol.

When the coating material composition of the present disclosure is applied, dried, and then fired, the depolymerizable acrylic resin gradually degrades while maintaining the binder effect on the fluoropolymer, and thus can prevent cracking.

In one embodiment, the coating material composition of the present disclosure contains the depolymerizable acrylic resin together with PTFE. A preferable depolymerizable acrylic resin remains up to a temperature at which PTFE starts to melt (melting temperature) even if depolymerization starts below the melting point of PTFE, and degradatively volatilizes at the firing (processing) temperature. For example, 5% or more, in particular 10% or more, at least 50%, and preferably at least 20% of a preferable depolymerizable acrylic resin remains at the melting temperature of PTFE (usually 240 to 345°C), and only 10% or less and in particular 5% or less remains at the firing (processing) temperature (usually a temperature exceeding the melting temperature of PTFE and up to 415°C, and preferably 360 to 400°C), and the preferable depolymerizable acrylic resin substantially does not remain when firing is complete. In this regard, the depolymerization (degradation) temperature of the depolymerizable acrylic resin is desirably about 200°C or higher and lower than the firing (processing) temperature. In particular, irrespective of the type of resin, a depolymerizable acrylic resin, about 25 to 50% of which remains in the temperature range of 300 to 320°C and about 20 to 10% of which remains in the temperature range of 330 to 345°C, is suitable in terms of the balance between the effect of preventing cracking resulting from shrinking and the effect of preventing coloring, and any depolymerizable acrylic resin that satisfies these conditions can be used.

Generally, regarding depolymerizability, the greater the number of branches in the polymer chain, the weaker the C-C bonds and the C-H bonds, and the more likely the polymer depolymerizes due to oxidative degradation, as described in "Polym. Eng. Soi., Vol. 6, p. 273 (1966)", "Plast. Massy., Vol. 75, p. 48 (1971)", and "Deterioration of Polymer Materials", Corona Publishing, p. 144 (1958). The depolymerizable acrylic resin may be a methacrylate resin and, specifically, a preferable example may be a methacrylate homopolymer or copolymer containing a methacrylate monomer represented by formula (8) as an essential component:

CH₂=C(CH₃)COOR

wherein R is an alkyl group or a hydroxyalkyl group having 1 to 5 carbon atoms. Specific examples of the methacrylate monomer that are preferably used include methyl methacrylate, ethyl methacrylate, propyl methacrylate, dimethylpropyl methacrylate, butyl methacrylate, and pentyl methacrylate. Among these, a depolymerizable acrylic resin having butyl methacrylate as a monomer is preferable for its low glass transition temperature and good depolymerizability (degradability).

Although no problem arises as long as a stable emulsion can be formed with a homopolymer, a monomer having a carboxyl group or a hydroxyl group may be suitably used as a comonomer from the viewpoint of stabilizing the emulsion.

Concerning the depolymerizable acrylic resin, fine particles (a depolymerizable acrylic resin emulsion) produced by, for example, a method such as emulsion polymerization can be used as-is, and the average particle size thereof is preferably 0.1 to 100 µm and, in particular, 0.2 to 1 µm. Those having an average particle size of less than 0.1 µm tend to readily result in mud cracks, while those having an average particle size of greater than 100 µm tend to make coating difficult.

In the coating material composition of the present disclosure, the content of the depolymerizable acrylic resin is preferably 5 to 25 parts, more preferably 7 to 20 parts, and even more preferably 10 to 15 parts, per 100 parts of the fluoropolymer, from the viewpoints of film formability and prevention of coating film coloration.

The depolymerizable acrylic resin is preferably mixed in the form of an emulsion with other components.

### <Binder resin>

In one embodiment, the coating material composition of the present disclosure contains a binder resin. When containing a binder resin, the coating material composition can provide a coating film having excellent adhesion to the substrate. The binder resin has the effect of improving the hardness and gloss of the resulting coating film.

Examples of the binder resin include polyamideimide (PAI), polyimide (PI), polyethersulfone (PES), polyarylene sulfide (PAS), polyetherimide, polyetheretherketone, and aromatic polyester. One binder resin may be used singly, or two or more may be used in combination.

PAI is a resin composed of a polymer having an amide bond and an imide bond within the molecular structure. PAI is not limited, and examples include resins composed of high molecular weight polymers obtained by reactions such as a reaction between an aromatic diamine having an amide bond within the molecule and an aromatic tetracarboxylic acid such as pyromellitic acid; a reaction between an aromatic tricarboxylic acid such as trimellitic anhydride and a diamine such as 4,4-diaminophenyl ether or a diisocyanate such as diphenylmethane diisocyanate; and a reaction between a dibasic acid having an aromatic imide ring within the molecule and a diamine. Preferable PAI is composed of a polymer having an aromatic ring in the main chain in terms of having excellent heat resistance.

PI is a resin composed of a polymer having an imide bond within the molecular structure. PI is not limited, and may be, for example, a resin composed of a high molecular weight polymer obtained by, e.g., a reaction of an aromatic tetracarboxylic anhydride such as pyromellitic anhydride. PI is preferably composed of a polymer having an aromatic ring in the main chain in terms of having excellent heat resistance.

PES is a resin composed of a polymer having a repeating unit represented by the following general formula:

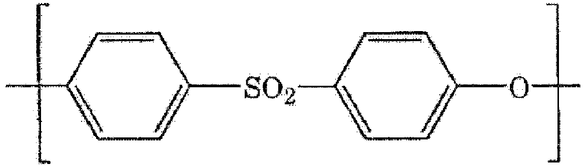

PES is not limited, and may be, for example, a resin composed of a polymer obtained by polycondensation of dichlorodiphenyl sulfone and bisphenol.

PAS is a resin composed of a polymer having a repeating unit represented by general formula -[Ar-S]- wherein Ar represents an arylene group. PAS is not limited, and an example may be polyphenylene sulfide (PPS).

The binder resin is preferably at least one selected from the group consisting of PAI, PI, PES, and PPS, and more preferably PAI, because a coating film having even better adhesion to the substrate can be provided. The binder resin is preferably PES from the viewpoint of suppressing coloring during firing and thus being capable of increasing the coloring flexibility of the coating film. One suitable embodiment is also to use a combination of PAI and PES as a binder resin.

In the coating material composition of the present disclosure, the content of the binder resin is preferably 5% by mass or more and more preferably 8% by mass or more, and is preferably 15% by mass or less and more preferably 12% by mass or less, based on the coating material composition. When the content of the binder resin is within the above range, a coating film having even better adhesion to the substrate can be provided.

In the coating material composition of the present disclosure, the mass ratio of the fluoropolymer to the binder resin (fluoropolymer/binder resin) is preferably 90/10 to 50/50, more preferably 85/15 to 60/40, and even more preferably 80/20 to 70/30. When the mass ratio of the fluoropolymer to the binder resin is within the above range, a coating film having even better adhesion to the substrate can be provided.

The coating material composition of the present disclosure may contain further components. Examples of further components include preservatives, water-soluble polymer compounds, pigments, fillers, antifoaming agents, desiccants, thickeners, organic solvents, leveling agents, anti-repelling agents, dispersants, anti-freezing agents, solid lubricants, anti-settling agents, moisture absorbers, surface conditioners, thixotropic agents, viscosity modifiers, anti-gelling agents, UV absorbers, HALS (light stabilizers), matting agents, plasticizers, anti-floating agents, anti-skinning agents, anti-scratch agents, corrosion inhibitors, antifungal agents, antibacterial agents, antioxidants, flame retardants, rheology modifiers, antistatic agents, silane coupling agents, various reinforcing agents, various extenders, conductive fillers, and colloidal silica.

The preservative contained in the coating material composition of the present disclosure can inhibit decomposition and bacterial growth of the coating material composition even when the coating material composition is stored for a long period of time.

Examples of the preservative include isothiazolone, azole, pronopol, chlorothalonil,
methylsulfonyltetrachloropyridine, carbendazim, fluoroforbet, sodium diacetate, and diiodomethyl p-tolylsulfone.

The content of the preservative in the coating material composition of the present disclosure is preferably 0.01 to 0.5% by mass and more preferably 0.05 to 0.2% by mass based on the fluoropolymer.

Examples of the water soluble polymer compound include methyl cellulose, alumina sol, polyvinyl alcohol, carboxylated vinyl polymer, polyethylene oxide (a dispersion stabilizer), polyethylene glycol (a dispersion stabilizer), polyvinylpyrrolidone (a dispersion stabilizer), phenol resin, urea resin, epoxy resin, melamine resin, polyester resin, polyether resin, acrylic silicone resin, silicone resin, silicone polyester resin, and polyurethane resin.

Various conventionally known pigments can be used, such as titanium oxide, carbon black, red iron oxide, and extender pigments. In the coating material composition of the present disclosure, the pigment content is preferably 0.1 to 20.0% by mass and more preferably 1 to 10% by mass based on the coating material composition.

Examples of the filler include inorganic fillers, diamond, fluorinated diamond, and carbon black.

Examples of inorganic fillers include, in addition to pigments, mica particles, pigment-coated mica particles, titanium-coated mica, inorganic nitrides, carbides, borides and oxides of zirconium, tantalum, titanium, tungsten, silicon, aluminum or beryllium (specifically, aluminum oxide, silicon carbide, zirconium oxide, zirconium carbide, and the like), metal flakes, metal powder, clay, talc, tourmaline, jade, germanium, corundum, silica stone, chrysoberyl, topaz, beryl, garnet, quartz, carbuncle, barium sulfate, and glass.

The inorganic filler provides the function of improving abrasion resistance, and mica is preferable in terms of providing an attractive appearance. The particle size of mica particles is 10 to 100 µm and preferably 15 to 50 µm. A particle size of less than 10 µm tends to result in poor abrasion resistance and poor luster, while a particle size exceeding 100 µm tends to result in poor non-stickiness. Pigment-coated mica particles can be obtained by adhering a pigment such as TiO₂·Fe₂O₃ to mica particles by a sintering deposition method or the like.

Examples of metal flakes include flakes of titanium, zirconium, aluminum, zinc, antimony, tin, iron, nickel, and the like, and titanium and zirconium are preferable from the viewpoint of rust resistance. The size thereof may be within the range usually applicable to coating materials.

Examples of metal powders include powders of gold, silver, copper, platinum, stainless steel, and the like.

The antifoaming agent may be a variety of aqueous antifoaming agent, and examples include lower alcohols such as methanol, ethanol, and butanol; higher alcohols such as amyl alcohol, polypropylene glycol, and derivatives thereof; fats and oils such as oleic acid, tall oil, mineral oil, and soap; surfactants such as sorbitan fatty acid esters, polyethylene glycol fatty acid esters, and Pluronic-type nonionic surfactants; silicone surfactants such as siloxane and silicone resin. One antifoaming agent may be used singly, or multiple antifoaming agents may be used in combination. Representative commercially available defoaming agents include B-series such as Adekanate B and Adekanate B1068 (manufactured by ADEKA Corporation); Foamaster DL, Nopco NXZ, and SN Defoamer series such as SN Defoamer 113, 325, 308, and 368; Dehydran 1293 and Dehydran 1513 (manufactured by San Nopco Ltd.); Flonone SB-110N, SB-210, 510, and 551, Aqualene 800, 805, and Aqualene 1488 (manufactured by Kyoeisha Chemical Co., Ltd.); Surfynol 104E, 440 (acetylene-based antifoaming agent manufactured by Air Products and Chemicals, Inc.); KS-607A (manufactured by Shin-Etsu Chemical Co., Ltd.]; FS Antifoam (manufactured by Dow Corning Corporation); BYK-020, 031, 073, W (manufactured by BYK-Chemie); Dehydran 981 (manufactured by Henkel-Hakusui Corporasion); Epan-410, 710, 720 (manufactured by DKS Co., Ltd.); Tego Foamex series (manufactured by Tego Goldschmidt); and Foamrex-747, TY-10, EP series (manufactured by Nicca Chemical Co., Ltd.). The content of the antifoaming agent in the coating material composition is preferably 0.01 to 10% by mass and more preferably 0.05 to 5% by mass.

The desiccant may be cobalt oxide.

Examples of the thickener include methyl cellulose, polyvinyl alcohol, and carboxylated vinyl polymers. In the coating material composition of the present disclosure, the content of the thickener is preferably 0.1 to 20% by mass and more preferably 0.5 to 10% by mass.

The organic solvent is preferably a high boiling point polyhydric alcohol. The high boiling point polyhydric alcohol can prevent mud cracks that occur when the applied coating material composition of the present disclosure is dried.

The high boiling point polyhydric alcohol (hereinafter referred to as polyhydric alcohol) has two or more hydroxyl groups and a boiling point of 100°C or higher. A polyhydric alcohol containing a nitrogen atom is not preferable because it causes coloration due to thermal degradation during firing. A preferable polyhydric alcohol has a boiling point that is equal to or higher than the drying temperature of the coating material composition, moreover 150°C or higher, and in particular 200°C or higher. The polyhydric alcohol preferably has 2 to 3 hydroxyl groups. A polyhydric alcohol having one or no hydroxyl group and having a boiling point of 100°C or higher has poor hydrophilicity, thus making uniform mixing difficult. Many polyhydric alcohols having four or more hydroxyl groups are solid at room temperature, and are thus unlikely expected to have the effect of preventing mud cracks.

The polyhydric alcohol eventually needs to completely evaporate or degradatively volatilize by being heated during firing which will be described below. Accordingly, a preferable polyhydric alcohol has a boiling point or a pyrolysis temperature equal to or lower than the melting temperature of the fluoropolymer contained in the coating material composition, and preferably 340°C or lower.

Suitable polyhydric alcohols may be, for example, one or two or more of ethylene glycol (boiling point: 198°C), 1,2-propanediol (boiling point: 188°C), 1,3-propanediol (boiling point: 214°C), 1,2-butanediol (boiling point: 190°C), 1,3-butanediol (boiling point: 208°C), 1,4-butanediol (boiling point: 229°C), 1,5-pentanediol (boiling point: 242°C), 2-butene-1,4-diol (boiling point: 235°C), glycerin (boiling point: 290°C), 2-ethyl-2-hydroxymethyl-1,3-propanediol (boiling point: 295°C), and 1,2,6-hexanetriol (boiling point: 178°C/under a pressure of 5 mmHg). In particular, glycerin is preferable.

In the coating material composition of the present disclosure, the content of the polyhydric alcohol is generally 5 to 18% by mass, preferably 7 to 15% by mass, and particularly preferably 7 to 12% by mass, based on the fluoropolymer. Due to the content of the polyhydric alcohol being within the above range, mud cracks can be prevented while preventing coloration of the resulting coating film.

As necessary, an organic solvent other than the high boiling point polyhydric alcohol may be added as long as the effect of the present disclosure is not impaired. Examples of such organic solvents include aromatic hydrocarbon solvents such as toluene and xylene, aliphatic hydrocarbon solvents having 9 to 11 carbon atoms, and aliphatic hydrocarbon solvents having 10 to 12 carbon atoms.

A coating film can be obtained by using the coating material composition of the present disclosure. The coating film obtained from the coating material composition of the present disclosure has excellent water- and oil-repellency and low friction.

While embodiments have been described above, it will be understood that various changes in form and detail can be made without departing from the gist and scope of the claims.
<1> According to the first aspect of the present disclosure, provided is a method for producing a fluoropolymer aqueous dispersion containing a fluoropolymer, the method comprising:
   polymerizing a fluoromonomer in the presence of a fluorine-containing surfactant and an aqueous medium to prepare an aqueous dispersion containing a fluoropolymer,
   adding a nonionic surfactant to the resulting aqueous dispersion and also regulating a pH of the aqueous dispersion to 7 or higher and regulating a temperature of the aqueous dispersion to 35°C or higher, and
   bringing the aqueous dispersion containing the nonionic surfactant into contact with at least one treatment agent selected from the group consisting of an ion exchange resin and an adsorbent.
<2> According to the second aspect of the present disclosure, provided is the production method according to the first aspect, wherein the temperature of the aqueous dispersion containing the nonionic surfactant is regulated to 35°C or higher and lower than a cloud point of the nonionic surfactant.
<3> According to the third aspect of the present disclosure, provided is the production method according to the first or second aspect, wherein a fluoropolymer content in the aqueous dispersion containing the nonionic surfactant when being brought into contact with the treatment agent is 10% by mass or more based on the aqueous dispersion.
<4> According to the fourth aspect of the present disclosure, provided is the production method according to any one of the first to third aspects, wherein the contact between the aqueous dispersion and the treatment agent is repeated two or more times.
<5> According to the fifth aspect of the present disclosure, provided is
   the production method according to any one of the first to fourth aspects, wherein the nonionic surfactant is represented by general formula (i):

   R⁶-O-A¹-H (i)

   wherein R⁶ is a linear or branched primary or secondary alkyl group having 8 to 18 carbon atoms, and A¹ is a polyoxyalkylene chain.
<6> According to the sixth aspect of the present disclosure, provided is the production method according to any one of the first to fifth aspects, comprising further adding the nonionic surfactant to the aqueous dispersion obtained after contact with the treatment agent, and concentrating the aqueous dispersion containing the nonionic surfactant.
<7> According to the seventh aspect of the present disclosure, provided is the production method according to the sixth aspect, wherein the aqueous dispersion is concentrated by separating the aqueous dispersion into two or more phases and recovering a condensed phase.
<8> According to the eighth aspect of the present disclosure, provided is the production method according to the sixth or seventh aspect, comprising adding the nonionic surfactant to the concentrated aqueous dispersion.
<9> According to the nineth aspect of the present disclosure, provided is the method according to any one of the sixth to eighth aspects, comprising adding any one or more of a pH adjuster, a viscosity modifier, and a preservative to the concentrated aqueous dispersion.
<10> According to the tenth aspect of the present disclosure, provided is
   a fluoropolymer aqueous dispersion comprising:
   a fluoropolymer, a nonionic surfactant, and a fluorine-containing compound having a hydrophilic group and having 7 or fewer carbon atoms, wherein
   a content of the fluoropolymer is 50 to 75% by mass based on the fluoropolymer aqueous dispersion,
   a content of the nonionic surfactant is 4.0 to 12% by mass based on the fluoropolymer, and
   a content of the fluorine-containing compound having a hydrophilic group and having 7 or fewer carbon atoms is more than 0 ppb by mass and less than 300 ppb by mass based on the fluoropolymer aqueous dispersion.
<11> According to the eleventh aspect of the present disclosure, provided is
   the fluoropolymer aqueous dispersion according to the tenth aspect, wherein the nonionic surfactant is represented by general formula (i):

   R⁶-O-A¹-H (i)

   wherein R⁶ is a linear or branched primary or secondary alkyl group having 8 to 18 carbon atoms, and A¹ is a polyoxyalkylene chain.
<12> According to the twelfth aspect of the present disclosure, provided is
   the fluoropolymer aqueous dispersion according to the tenth or eleventh aspect, wherein the fluoropolymer contains a perfluoro(alkyl vinyl ether) unit.
<13> According to the thirteenth aspect of the present disclosure,
   the fluoropolymer aqueous dispersion according to the twelfth aspect, which is substantially free of a fluorine-containing compound having a hydrophilic group represented by general formula (2):

   General formula (2): [Cₙ₋₁F₂ₙ₋₁COO⁻]M⁺

   wherein n is an integer of 9 to 14, and M⁺ represents a cation.
<14> According to the fourteenth aspect of the present disclosure, provided is the fluoropolymer aqueous dispersion according to any one of the tenth to thirteenth aspects, wherein the fluoropolymer is a polytetrafluoroethylene.
<15> According to the fifteenth aspect of the present disclosure, provided is the fluoropolymer aqueous dispersion according to any one of the tenth to thirteenth aspects, wherein the fluoropolymer is at least one melt-fabricable fluororesin selected from the group consisting of a tetrafluoroethylene/fluoroalkyl vinyl ether copolymer and a tetrafluoroethylene/hexafluoropropylene copolymer.
<16> According to the sixteenth aspect of the present disclosure, provided is the fluoropolymer aqueous dispersion according to any one of the tenth to thirteenth aspects, wherein the fluoropolymer is at least one melt-fabricable fluororesin selected from the group consisting of:
   a tetrafluoroethylene/fluoroalkyl vinyl ether copolymer comprising tetrafluoroethylene unit and a fluoroalkyl vinyl ether unit, excluding a copolymer comprising hexafluoropropylene unit, wherein a content of the fluoroalkyl vinyl ether unit is 1.0 to 10.0% by mass based on all monomer units constituting the fluoropolymer;
   a tetrafluoroethylene/hexafluoropropylene copolymer consisting of tetrafluoroethylene unit and hexafluoropropylene unit, wherein a content of hexafluoropropylene unit is 1.0 to 15.0% by mass based on all monomer units constituting the fluoropolymer; and
   a tetrafluoroethylene/hexafluoropropylene/fluoroalkyl vinyl ether copolymer comprising at least tetrafluoroethylene unit, hexafluoropropylene unit, and a fluoroalkyl vinyl ether unit, wherein a content of hexafluoropropylene unit is 1.0 to 15.0% by mass based on all monomer units constituting the fluoropolymer and a content of the fluoroalkyl vinyl ether unit is 0.1 to 10.0% by mass based on all monomer units constituting the fluoropolymer.
<17> According to the seventeenth aspect of the present disclosure, provided is the fluoropolymer aqueous dispersion according to the fifteenth or sixteenth aspect, wherein the melt-fabricable fluororesin has a melting point of 200 to 322°C.
<18> According to the eighteenth aspect of the present disclosure, provided is a coating material composition containing the fluoropolymer aqueous dispersion according to any one of the tenth to seventeenth aspects.

### EXAMPLES

Next, embodiments of the present disclosure will now be described by way of Examples, but the present disclosure is not limited only to the Examples.

Various numerical values in the Examples were measured by the following methods.

### (1) Solid concentration (P)

The solid concentration was determined according to the equation: P = Z / X × 100 (% by mass) based on the heating residue (Z g) obtained by placing about 1 g (Xg) of a sample in an aluminum cup having a diameter of 5 cm, heating it at 110°C for 30 minutes, and further heating it at 300°C for 30 minutes.

### (2) Average primary particle diameter

A aqueous dispersion was diluted with water to a solid concentration of 0.15% by mass. The transmittance of projected light at 550 nm relative to the unit length of the resulting diluted aqueous dispersion was determined and the number-based length average primary particle size was determined by measuring the Feret diameter with a transmission electron microscope image. Based on these values, a calibration curve was drawn. Using this calibration curve, the average primary particle size was determined from the measured transmittance of the projected light at 550 nm of each sample.

### (3) pH

The pH at 25°C was measured using a glass electrode (manufactured by Horiba, Ltd.) in accordance with JIS K6893.

### (4) Standard specific gravity (SSG)

Using a sample formed in accordance with ASTM D 4895-89, the SSG was measured by the water replacement method in accordance with ASTM D 792.

### (5) Content of modifying monomer

The content of perfluoro(propyl vinyl ether) (PPVE) was determined from the infrared absorbance obtained by producing a thin film disk by press-forming a PTFE powder and carrying out FT-IR measurement, in which the ratio of absorbance at 995 cm⁻¹/absorbance at 935 cm⁻¹ was multiplied by 0.14.

### (6) Content of nonionic surfactant (N)

The amount was regarded as the content of the nonionic surfactant, which was obtained by subtracting the amount of stabilizer from the amount calculated from the formula: N = [(Y-Z) / X] × 100 (% by mass) from the heating residue (Y g) obtained by heating about 1 g (X g) of a sample in a 5 cm aluminum cup at 110°C for 30 minutes and the heating residue (Z g) obtained by heating the obtained heating residue (Y g) at 300°C for 30 minutes. The amount of stabilizer was calculated from the amount added during preparation.

### (7) Viscosity

Viscosity at 25°C was measured at a rotational speed of 60 rpm for a measurement time of 120 seconds using a Brookfield rotary viscometer (manufactured by Toki Sangyo Co., Ltd., rotor No. 2).

### (8) Measurement of content of fluorine-containing compound having a hydrophilic group and having 7 or fewer carbon atoms

First, 5.0 g of an aqueous dispersion was weighed, 10 g of methanol was added, the mixture was allowed to flow into a thimble filter, Soxhlet extraction was performed using methanol as an extraction solvent in a total amount of 150 g, the resulting extract was adjusted to a volume of 250 ml with methanol, and thus an extract containing a fluorine-containing compound having a hydrophilic group and having 7 or fewer carbon atoms was obtained.

### Calibration curve

Methanol standard solutions of the fluorine-containing compound having a hydrophilic group and having 7 or fewer carbon atoms with five known content levels of 0.1 to 100 ng/mL were prepared, and measurement was carried out using a liquid chromatograph-mass spectrometer (Waters, LC-MS ACQUITY UPLC/TQD). First-order approximation was used to create calibration curves from the sample concentrations and peak integral values thereof.

The content of the fluorine-containing compound having a hydrophilic group and having 7 or fewer carbon atoms was measured using a liquid chromatograph-mass spectrometer. Concerning the extract, the peak area of the fluorine-containing compound having a hydrophilic group and having 7 or fewer carbon atoms was determined using MRM method, and the content of the fluorine-containing compound having a hydrophilic group and having 7 or fewer carbon atoms contained in the aqueous dispersion was determined. The quantification limit is 10 ppb by mass.

### (9) Measurement of content of fluorine-containing compound having hydrophilic group and represented by formula (2)

First, 5.0 g of an aqueous dispersion was weighed, 10 g of methanol was added, the mixture was allowed to flow into a thimble filter, Soxhlet extraction was performed using methanol as an extraction solvent in a total amount of 150 g, the resulting extract was adjusted to a volume of 250 ml with methanol, and thus an extract containing a fluorine-containing compound having a hydrophilic group and represented by formula (2) was obtained.

General formula (2): [Cₙ₋₁F₂ₙ₋₁COO⁻]M⁺

wherein n is an integer of 9 to 14, and M⁺ represents a cation.

### Calibration curve

Methanol standard solutions of perfluorononanoic acid (PFNA), perfluorodecanoic acid (PFDA), perfluoroundecanoic acid (PFUnDA), perfluorododecanoic acid (PFDoDA), perfluorotridecanoic acid (PFTrDA), and perfluorotetradecanoic acid (PFTeDA) having five known concentration levels of 0.1 to 50 ng/mL were prepared, and measurement was made using a liquid chromatograph-mass spectrometer (Waters, LC-MS ACQUITY UPLC/TQD). First-order approximation was used to create calibration curves from the sample concentrations and peak integral values thereof.

The content of the fluorine-containing compound having a hydrophilic group and represented by formula (2) was measured using a liquid chromatograph-mass spectrometer. Concerning the extract, the peak area of the fluorine-containing compound having a hydrophilic group and represented by formula (2) was determined using MRM method, and the content of the fluorine-containing compound having a hydrophilic group and represented by formula (2) contained in the aqueous dispersion was determined. The quantification limit is 10 ppb by mass.

### Measuring instrument configuration and LC-MS measurement condition

### [Table 1]

**Table 1**

| LC unit | | | | |
|---|---|---|---|---|
| | Device | Acquity UPLC manufactured by Waters | | |
| | Column | Acquity UPLC BEH Shield RP18 1.7 µm (2.1 × 50 mm) manufactured by Waters | | |
| | Mobile phase | A CH₃CN | | |
| | | B 20mM CH₃COONH₄/H₂O | | |
| | | | 0→1.5min | A:B=10:90 |
| | | | 1.5→8.5min | A:B=10:90 → A:B=90:10 Linear gradient |
| | | | 8.5→10min | A:B=90:10 |
| | Flow rate | | 0.4mL/min | |
| | Column temperature | 40°C | | |
| | Sample injection volume | 5 µL | | |

| MS unit | | | | |
|---|---|---|---|---|
| | Device | TQ Detecter | | |
| | Measurement mode | MRM(Multiple Reaction Monitoring) | | |
| | Ionization method | Electrospray ionization | | |
| | | Negative mode | | |

MRM measurement parameters

### [Table 2]

**Table 2**

| Compound | Precursor | Product |
|---|---|---|
| Fluorine-containing compound having hydrophilic group having 7 or fewer carbon atoms | 395 | 351 |
| Perfluorononanoic acid | 463 | 419 |
| Perfluorodecanoic acid | 513 | 469 |
| Perfluoroundecanoic acid | 563 | 519 |
| Perfluorododecanoic acid | 613 | 569 |
| Perfluorotridecanoic acid | 663 | 619 |
| Perfluorotetradecanoic acid | 713 | 669 |

The average molecular structures of the surfactants used in the Examples and Comparative Examples are shown below. Surfactant (a) : C₁₃H₂₇O(CH₂CH₂O)₈H (average number of methyl groups per molecule: 4.0), HLB 13.30, cloud point 60°C Surfactant (b) : C₁₃H₂₇O(CH₂CH₂O)₁₀H (average number of methyl groups per molecule: 4.0), HLB 13.80, cloud point 71°C

### Synthesis Example 1

White solid A was obtained by the method described in Synthesis Example 1 of International Publication No. WO 2021/045228. The resulting white solid A was a fluorine-containing compound having a hydrophilic group and having 7 or fewer carbon atoms.

### Production Example 1

First, 3,580 g of deionized water, 160 g of paraffin wax, and 4.7 g of white solid A obtained in Synthesis Example 1 as a fluorine-containing surfactant were added to a stirrer-equipped SUS reactor having an internal volume of 6 L. Then, the contents of the reactor were suctioned while being heated to 70°C and, at the same time, the reactor was purged with TFE to remove oxygen in the reactor, and the contents were stirred. Then, 6.5 g of PPVE was injected with TFE into the reactor. Then, 50 mg of APS dissolved in 20 g of deionized water as an initiator was added to the reactor, and the pressure was regulated to 1.5 MPaG. TFE was added so as to maintain a constant pressure of 1.5 MPaG. When TFE consumed in the reaction reached 1,543 g, the feeding of TFE was stopped, and stirring was stopped to terminate the reaction.

Then, the reactor was evacuated until the pressure inside the reactor reached atmospheric pressure, the pressure was further reduced to -0.01 MPaG, the reactor was nitrogen-purged to atmospheric pressure (0.00 MPaG), and thus a PTFE aqueous dispersion 1-1 was obtained.

The PTFE aqueous dispersion 1-1 was taken out from the reactor into air and cooled, paraffin wax was removed, and thus a PTFE aqueous dispersion 1-2 was obtained. The resulting PTFE aqueous dispersion 1-2 had a solid concentration of 30.0% by mass, an average primary particle size of 270 nm, and a pH of 3.6.

The resulting PTFE aqueous dispersion 1-2 was diluted with deionized water to have a solid concentration of about 10% by mass and solidified under a high-speed stirring condition, and the solidified wet powder was dried at 150°C for 18 hours. The resulting PTFE powder had a standard specific gravity of 2.163 and a PPVE content of 0.28% by mass.

### Comparative Example 1

The surfactant (a) was added as a nonionic surfactant to the PTFE aqueous dispersion 1-2 obtained in Production Example 1 so as to be 10 parts by mass per 100 parts by mass of PTFE to prepare a PTFE aqueous dispersion C-1.

A strongly basic anion exchange resin (IRA4002OH manufactured by DuPont de Nemours, Inc.) was added to a PTFE aqueous dispersion having a liquid temperature of 20°C so as to be 60 parts by mass per 100 parts by mass of PTFE, the mixture was gently stirred for 180 minutes, and then the anion exchange resin was filtered off to give a PTFE aqueous dispersion C-2. Based on the mass of the fluoropolymer, the contact area of the treatment agent was 0.0023 m²/g, and the exchange capacity of the ion exchange resin was 0.55 meq/g. The resulting PTFE aqueous dispersion C-2 had a solid concentration of 28.8% by mass, a content of the nonionic surfactant of 10.1% by mass based on PTFE, and a pH of 11.2.

The content of perfluorononanoic acid (PFNA) was lower than the quantification limit (10 ppb by mass), and the content of perfluorotridecanoic acid (PFTrDA) was 21 ppb by mass based on the aqueous dispersion.

### Experimental Example 1

The surfactant (a) was added as a nonionic surfactant to the PTFE aqueous dispersion 1-2 obtained in Production Example 1 so as to be 10 parts by mass per 100 parts by mass of PTFE and, moreover, aqueous ammonia was added such that the pH was 10.0 to prepare a PTFE aqueous dispersion 1-3.

The PTFE aqueous dispersion 1-3 was heated to 40°C, a strongly basic anion exchange resin (IRA4002OH manufactured by DuPont de Nemours, Inc.) was added so as to be 60 parts by mass per 100 parts by mass of PTFE, the mixture was gently stirred for 180 minutes, and then the anion exchange resin was filtered off to give a PTFE aqueous dispersion 1-4. Based on the mass of the fluoropolymer, the contact area of the treatment agent was 0.0023 m²/g, and the exchange capacity of the ion exchange resin was 0.55 meq/g. The resulting PTFE aqueous dispersion 1-4 had a solid concentration of 28.9% by mass, a content of the nonionic surfactant of 10.0% by mass based on PTFE, and a pH of 11.3.

The content of perfluorononanoic acid (PFNA) and the content of perfluorotridecanoic acid (PFTrDA) were lower than the quantification limit (10 ppb by mass).

### Comparative Example 2

The PTFE aqueous dispersion C-2 obtained in Comparative Example 1 was used. An anion exchange resin was added again to the PTFE aqueous dispersion C-2 having a liquid temperature of 20°C, the mixture was gently stirred for 180 minutes, and then the anion exchange resin was filtered off to give a PTFE aqueous dispersion C-3. Based on the mass of the fluoropolymer, the contact area of the treatment agent was 0.0046 m²/g, and the exchange capacity of the ion exchange resin was 1.10 meq/g.

The surfactant (a) was added to the resulting PTFE aqueous dispersion C-3 so as to be 16 parts by mass per 100 parts by mass of PTFE, and the mixture was maintained at 63°C for 3 hours to separate it into a supernatant phase and a condensed phase. Only the condensed phase was recovered to give a PTFE aqueous dispersion C-4. The resulting PTFE aqueous dispersion C-4 had a solid concentration of 69.1% by mass and a content of the nonionic surfactant of 2.7% by mass based on PTFE.

The surfactant (b) was added to the resulting PTFE aqueous dispersion C-4 so as to be 5.0% by mass based on PTFE, ammonium lauryl sulfate was added so as to be 500 ppm based on PTFE, an isothiazolone preservative was added so as to be 1,000 ppm based on PTFE, and aqueous ammonia was added such that the pH was 9.5. Moreover, deionized water was added such that the solid content was 63% by mass to give a PTFE aqueous dispersion C-5. The resulting PTFE aqueous dispersion C-5 had a solid concentration of 62.9% by mass, a nonionic surfactant content of 5.0% by mass based on PTFE, a pH of 9.5, and a viscosity of 26.8 mPa·s.

The content of fluorine-containing compounds having a hydrophilic group and having 7 or fewer carbon atoms, such as the fluorine-containing surfactant synthesized in Synthesis Example 1, was 560 ppb by mass based on the aqueous dispersion.

### Example 1

The PTFE aqueous dispersion 1-4 obtained in Experimental Example 1 was heated again to 40°C, an anion exchange resin was added again, the mixture was gently stirred for 180 minutes, and then the anion exchange resin was filtered off. Moreover, the same operation was performed twice to give a PTFE aqueous dispersion 1-5. Based on the mass of the fluoropolymer, the contact area of the treatment agent was 0.0091 m²/g, and the exchange capacity of the ion exchange resin was 2.20 meq/g.

The surfactant (a) was added to the resulting PTFE aqueous dispersion 1-5 so as to be 16 parts by mass per 100 parts by mass of PTFE, and the mixture was retained at 63°C for 3 hours to be separated into a supernatant phase and a condensed phase. Only the condensed phase was recovered to give a PTFE aqueous dispersion 1-6.

The surfactant (a) and deionized water were added to the resulting PTFE aqueous dispersion 1-6 such that the ratio of the nonionic surfactant to PTFE and the ratio of water to PTFE were the same as those before performing the phase separation concentration, and the mixture was retained at 61°C for 3 hours to be separated into a supernatant phase and a condensed phase. Only the condensed phase was recovered to give a PTFE aqueous dispersion 1-7. The resulting PTFE aqueous dispersion 1-7 had a solid concentration of 70.5% by mass and a nonionic surfactant content of 2.5% by mass based on PTFE.

To the resulting PTFE aqueous dispersion 1-7 were added the surfactant (b), ammonium lauryl sulfate, an isothiazolone preservative, and aqueous ammonia as in Comparative Example 2. Moreover, deionized water was added such that the solid content was 63% by mass to give a PTFE aqueous dispersion 1-8. The resulting PTFE aqueous dispersion 1-8 had a solid concentration of 63.0% by mass, a nonionic surfactant content of 5.0% by mass based on PTFE, a pH of 9.4, and a viscosity of 26.5 mPa·s.

The content of fluorine-containing compounds having a hydrophilic group and having 7 or fewer carbon atoms, such as the fluorine-containing surfactant synthesized in Synthesis Example 1, was 45 ppb by mass based on the aqueous dispersion.

The content of fluorine-containing compounds having a hydrophilic group and the number n of carbon atoms of 9 to 14 represented by general formula (2) was all below the quantification limit (10 ppb by mass).

Next, embodiments of coating material compositions containing the PTFE aqueous dispersions obtained in the above Examples and Comparative Examples will now be described by way of Examples.

The numerical values in the Examples were measured by the following methods.

### <Contact angle>

The contact angle with respect to water and n-cetane was measured using a contact angle tester CA-DT manufactured by Kyowa Interface Science Co., Ltd.

### <Frictional coefficient>

Using a surface quality tester HEIDON Type 38 manufactured by Shinto Scientific Co., Ltd., the static frictional coefficient and the kinetic frictional coefficient when a ball indenter was pressed under a load of 1 kg and moved at a speed of 600 mm/min were measured.

In Comparative Example 3 and Example 2, the following various materials were used.

### Polyamideimide resin aqueous dispersion:

Aqueous dispersion of polyamideimide resin varnish prepared by the method described in Production Example 1 of International Publication No. WO 2016/147790.

### 50% by mass aqueous solution of nonionic surfactant:

50% by mass aqueous solution of polyoxyethylene alkyl ether

### Carbon black pigment mill base (solid concentration: 20% by mass) :

Aqueous black pigment paste obtained by pulverizing a commercially available carbon black pigment (average particle size 100 nm or less) together with a nonionic surfactant and water using a sand mill and glass beads as a dispersion medium.
Thickener: Methylcellulose
Leveling agent: Acetylene glycol
Depolymerizable acrylic resin emulsion: Butyl methacrylate resin, average particle size 0.3 µm, butyl methacrylate resin content 40% by mass
Hydrocarbon solvent: Mixture of C10-C12 aliphatic saturated hydrocarbons

### Comparative Example 3

The following components were stirred and mixed to give a primer composition P-1.
PTFE aqueous dispersion C-5 40.0 parts
Polyamideimide resin aqueous dispersion 39.0 parts
50% by mass aqueous solution of nonionic surfactant 8.0 parts
Carbon black pigment mill base (solid concentration: 20% by mass) 3.6 parts
Thickener 7.0 parts
Leveling agent 1.0 part
Water 1.4 parts

Also, the following components were stirred and mixed to give a top coat composition T-1.
PTFE aqueous dispersion C-5 70.0 parts
Depolymerizable acrylic resin emulsion 12.6 parts
50% by mass aqueous solution of nonionic surfactant 7.9 parts
Glycerin 3.1 parts
Hydrocarbon solvent 1.3 parts
Water 5.1 parts

Next, the primer composition P-1 was applied to the aluminum substrate and dried at 100°C for 20 minutes. Subsequently, the top coat composition T-1 was applied to the primer coating film, dried at 100°C for 20 minutes, and then heated at 380°C for 20 minutes. The contact angle and the frictional coefficient of the coating film thus obtained were measured. The results are shown in Table 3.

### Example 2

A coating film was obtained in the same manner as in Comparative Example 3 except that the PTFE aqueous dispersion 1-8 was used in place of the PTFE aqueous dispersion C-5 to give a primer composition P-2 and a top coat composition T-2. The contact angle and the frictional coefficient of this coating film were measured. The results are shown in Table 3.

### [Table 3]

**Table 3**

| | Unit | Comparative Example 3 | Example 2 |
|---|---|---|---|
| Contact angle (with respect to water) | Degree | 107 | 114 |
| Contact angle (with respect to n-cetane) | Degree | 40 | 44 |
| Static frictional coefficient | - | 0.13 | 0.08 |
| Kinetic frictional coefficient | - | 0.05 | 0.03 |

### Production Example 2

Polymerization for a TFE/perfluoro(alkyl vinyl ether) copolymer was carried out by the method described in Preparation Example 1 of Japanese Patent No. 3,336,839. In the polymerization, 3.8 g of the white solid A obtained in Synthesis Example 1 was used as a fluorine-containing surfactant in place of C₃F₇OCF(CF₃)CF₂OCF(CF₃)COONH₄.

Thereafter, the reactor was evacuated until the pressure inside the reactor reached atmospheric pressure, the pressure was further reduced to -0.01 MPaG, the reactor was nitrogen-purged to atmospheric pressure (0.00 MPaG), and thus a PFA aqueous dispersion 2-1 was obtained.

The PFA aqueous dispersion 2-1 was taken out from the reactor into air and cooled, and paraffin wax was removed to give a PFA aqueous dispersion 2-2. The resulting PFA aqueous dispersion 2-2 had a solid concentration of 15.5% by mass and a pH of 3.1.

Ammonium carbonate was added as a coagulating agent to a part of the resulting PFA aqueous dispersion 2-2, the mixture was solidified under high-speed stirring conditions, and the solidified wet powder was dried at 130°C for 16 hours. The PPVE content was 2.5% by mass.

### Comparative Example 4

The surfactant (a) was added as a nonionic surfactant to the PFA aqueous dispersion 2-2 obtained in Production Example 2 so as to be 10 parts by mass per 100 parts by mass of PFA to prepare a PFA aqueous dispersion C-6.

A strongly basic anion exchange resin (IRA4002OH manufactured by DuPont de Nemours, Inc.) was added to the PFA aqueous dispersion C-6 having a liquid temperature of 20°C so as to be 30 parts by mass per 100 parts by mass of PFA, the mixture was gently stirred for 180 minutes, and then the anion exchange resin was filtered off. An anion exchange resin was added again to the resulting PFA aqueous dispersion, the mixture was gently stirred for 180 minutes, and then the anion exchange resin was filtered off to give a PFA aqueous dispersion C-7. Based on the mass of the fluoropolymer, the contact area of the treatment agent was 0.0023 m²/g, and the exchange capacity of the ion exchange resin was 0.55 meq/g.

The surfactant (a) was added to the resulting PFA aqueous dispersion C-7 so as to be 16 parts by mass per 100 parts by mass of PFA, and the mixture was retained at 63°C for 3 hours to be separated into a supernatant phase and a condensed phase. Only the condensed phase was recovered, and the surfactant (b) was added so as to be 5.0% by mass based on PFA to give a PFA aqueous dispersion C-8. The resulting PFA aqueous dispersion C-8 had a solid concentration of 66.7% by mass and a nonionic surfactant content of 5.0% by mass based on PFA.

The content of fluorine-containing compounds having a hydrophilic group and having 7 or fewer carbon atoms, such as the fluorine-containing surfactant synthesized in Synthesis Example 1, was 490 ppb by mass based on the aqueous dispersion.

The content of perfluorononanoic acid (PFNA) was 200 ppb by mass based on the aqueous dispersion.

### Example 3

The surfactant (a) was added as a nonionic surfactant to the PFA aqueous dispersion 2-2 obtained in Production Example 2 so as to be 10 parts by mass per 100 parts by mass of PFA and, moreover, aqueous ammonia was added such that the pH was 7.5 to prepare a PFA aqueous dispersion 3-1.

The PFA aqueous dispersion 3-1 having a liquid temperature of 35°C was brought into contact with a treatment agent twice in the same manner as in Comparative Example 4 except that a strongly basic anion exchange resin (A400 manufactured by Purolite) was used as the treatment agent. Moreover, the same operation was performed four times to give a PFA aqueous dispersion 3-2. Based on the mass of the fluoropolymer, the contact area of the treatment agent was 0.0060 m²/g, and the exchange capacity of the ion exchange resin was 1.68 meq/g.

The resulting PFA aqueous dispersion 3-2 was concentrated in the same manner as in Comparative Example 4, only the condensed phase was recovered, and the surfactant (b) was added to give a PFA aqueous dispersion 3-3. The resulting PFA aqueous dispersion 3-3 had a solid concentration of 67.2% by mass and a nonionic surfactant content of 5.0% by mass based on PFA.

The content of fluorine-containing compounds having a hydrophilic group and having 7 or fewer carbon atoms, such as the fluorine-containing surfactant synthesized in Synthesis Example 1, was 68 ppb by mass based on the aqueous dispersion.

The content of perfluorononanoic acid (PFNA) was 42 ppb by mass based on the aqueous dispersion.

### Example 4

The PFA aqueous dispersion 3-1 having a liquid temperature of 35°C was introduced into a column packed with 180 parts by mass of A400 manufactured by Purolite per 100 parts by mass of PFA to give a PFA aqueous dispersion 4-1. Based on the mass of the fluoropolymer, the contact area of the treatment agent was 0.0060 m²/g, and the exchange capacity of the ion exchange resin was 1.68 meq/g.

The resulting PFA aqueous dispersion 4-1 was concentrated in the same manner as in Comparative Example 4, only the condensed phase was recovered, and the surfactant (b) was added to give a PFA aqueous dispersion 4-2. The resulting PFA aqueous dispersion 4-2 had a solid concentration of 68.0% by mass and a nonionic surfactant content of 5.1% by mass based on PFA.

The content of fluorine-containing compounds having a hydrophilic group and having 7 or fewer carbon atoms, such as the fluorine-containing surfactant synthesized in Synthesis Example 1, was 55 ppb by mass based on the aqueous dispersion.

The content of perfluorononanoic acid (PFNA) was 40 ppb by mass based on the aqueous dispersion.

### Example 5

The surfactant (a) was added as a nonionic surfactant to the PFA aqueous dispersion 2-2 obtained in Production Example 2 so as to be 10 parts by mass per 100 parts by mass of PFA and, moreover, aqueous ammonia was added such that the pH was 11.0 to prepare a PFA aqueous dispersion 5-1.

IRA4002OH manufactured by DuPont de Nemours, Inc. was added to the PFA aqueous dispersion 5-1 having a liquid temperature of 45°C so as to be 60 parts by mass per 100 parts by mass of PFA, the mixture was gently stirred for 180 minutes, and then the anion exchange resin was filtered off. An anion exchange resin was added again to the resulting PFA aqueous dispersion, the mixture was gently stirred for 180 minutes, and then the anion exchange resin was filtered off to give a PFA aqueous dispersion 5-2. Based on the mass of the fluoropolymer, the contact area of the treatment agent was 0.0091 m²/g, and the exchange capacity of the ion exchange resin was 2.20 meq/g.

The resulting PFA aqueous dispersion 5-2 was concentrated in the same manner as in Comparative Example 4, only the condensed phase was recovered, and the surfactant (b) was added to give a PFA aqueous dispersion 5-3. The resulting PFA aqueous dispersion 5-3 had a solid concentration of 67.0% by mass and a nonionic surfactant content of 5.0% by mass based on PFA.

The content of fluorine-containing compounds having a hydrophilic group and having 7 or fewer carbon atoms, such as the fluorine-containing surfactant synthesized in Synthesis Example 1, was 49 ppb by mass based on the aqueous dispersion.

The content of perfluorononanoic acid (PFNA) was 36 ppb by mass based on the aqueous dispersion.

### Comparative Example 5

The following components were stirred and mixed to give a top coat composition T-3:
PFA aqueous dispersion C-8 74.6 parts
50% by mass aqueous solution of nonionic surfactant 4.6 parts
Ethylene glycol 5.0 parts
Water 15.8 parts

Next, the primer composition P-1 was applied to an aluminum substrate and dried at 100°C for 20 minutes. Subsequently, the top coat composition T-3 was applied to the primer coating film, dried at 100°C for 20 minutes, and then heated at 380°C for 20 minutes. The contact angle and the frictional coefficient of the coating film thus obtained were measured. The results are shown in Table 4.

### Example 6

A coating film was obtained in the same manner as in Comparative Example 5 except that the PFA aqueous dispersion 5-3 was used in place of the PFA aqueous dispersion C-8 to give a top coat composition T-4. The contact angle and the frictional coefficient of this coating film were measured. The results are shown in Table 4.

### [Table 4]

**Table 4**

| | Unit | Comparative Example 5 | Example 6 |
|---|---|---|---|
| Contact angle (with respect to water) | Degree | 105 | 114 |
| Contact angle (with respect to n-cetane) | Degree | 39 | 43 |
| Static frictional coefficient | - | 0.15 | 0.09 |
| Kinetic frictional coefficient | - | 0.05 | 0.03 |

## Claims

1. A method for producing a fluoropolymer aqueous dispersion containing a fluoropolymer, the method comprising:
polymerizing a fluoromonomer in the presence of a fluorine-containing surfactant and an aqueous medium to prepare an aqueous dispersion containing a fluoropolymer,
adding a nonionic surfactant to the resulting aqueous dispersion and also regulating a pH of the aqueous dispersion to 7 or higher and regulating a temperature of the aqueous dispersion to 35°C or higher, and
bringing the aqueous dispersion containing the nonionic surfactant into contact with at least one treatment agent selected from the group consisting of an ion exchange resin and an adsorbent.

2. The production method according to claim 1, wherein the temperature of the aqueous dispersion containing the nonionic surfactant is regulated to 35°C or higher and lower than a cloud point of the nonionic surfactant.

3. The production method according to claim 1 or 2, wherein a fluoropolymer content in the aqueous dispersion containing the nonionic surfactant when being brought into contact with the treatment agent is 10% by mass or more based on the aqueous dispersion.

4. The production method according to any one of claims 1 to 3, wherein the contact between the aqueous dispersion and the treatment agent is repeated two or more times.

5. The production method according to any one of claims 1 to 4, wherein the nonionic surfactant is represented by general formula (i):
R⁶-O-A¹-H (i)
wherein R⁶ is a linear or branched primary or secondary alkyl group having 8 to 18 carbon atoms, and A¹ is a polyoxyalkylene chain.

6. The production method according to any one of claims 1 to 5, comprising further adding the nonionic surfactant to the aqueous dispersion obtained after contact with the treatment agent, and concentrating the aqueous dispersion containing the nonionic surfactant.

7. The production method according to claim 6,
wherein the aqueous dispersion is concentrated by separating the aqueous dispersion into two or more phases and recovering a condensed phase.

8. The production method according to claim 6 or 7, comprising adding the nonionic surfactant to the concentrated aqueous dispersion.

9. The method according to any one of claims 6 to 8, comprising adding any one or more of a pH adjuster, a viscosity modifier, and a preservative to the concentrated aqueous dispersion.

10. A fluoropolymer aqueous dispersion comprising:
a fluoropolymer, a nonionic surfactant, and a fluorine-containing compound having a hydrophilic group and having 7 or fewer carbon atoms, wherein
a content of the fluoropolymer is 50 to 75% by mass based on the fluoropolymer aqueous dispersion,
a content of the nonionic surfactant is 4.0 to 12% by mass based on the fluoropolymer, and
a content of the fluorine-containing compound having a hydrophilic group and having 7 or fewer carbon atoms is more than 0 ppb by mass and less than 300 ppb by mass based on the fluoropolymer aqueous dispersion.

11. The fluoropolymer aqueous dispersion according to claim 10, wherein the nonionic surfactant is represented by general formula (i):
R⁶-O-A¹-H (i)
wherein R⁶ is a linear or branched primary or secondary alkyl group having 8 to 18 carbon atoms, and A¹ is a polyoxyalkylene chain.

12. The fluoropolymer aqueous dispersion according to claim 10 or 11, wherein the fluoropolymer contains a perfluoro(alkyl vinyl ether) unit.

13. The fluoropolymer aqueous dispersion according to claim 12, which is substantially free of a fluorine-containing compound having a hydrophilic group represented by general formula (2):
General formula (2): [Cₙ₋₁F₂ₙ₋₁COO⁻]M⁺
wherein n is an integer of 9 to 14, and M⁺ represents a cation.

14. The fluoropolymer aqueous dispersion according to any one of claims 10 to 13, wherein the fluoropolymer is a polytetrafluoroethylene.

15. The fluoropolymer aqueous dispersion according to claim 10 or 11, wherein the fluoropolymer is at least one melt-fabricable fluororesin selected from the group consisting of a tetrafluoroethylene/fluoroalkyl vinyl ether copolymer and a tetrafluoroethylene/hexafluoropropylene copolymer.

16. The fluoropolymer aqueous dispersion according to claim 10 or 11, wherein the fluoropolymer is at least one melt-fabricable fluororesin selected from the group consisting of:
a tetrafluoroethylene/fluoroalkyl vinyl ether copolymer comprising tetrafluoroethylene unit and a fluoroalkyl vinyl ether unit, excluding a copolymer comprising hexafluoropropylene unit, wherein a content of the fluoroalkyl vinyl ether unit is 1.0 to 10.0% by mass based on all monomer units constituting the fluoropolymer;
a tetrafluoroethylene/hexafluoropropylene copolymer consisting of tetrafluoroethylene unit and hexafluoropropylene unit, wherein a content of hexafluoropropylene unit is 1.0 to 15.0% by mass based on all monomer units constituting the fluoropolymer; and
a tetrafluoroethylene/hexafluoropropylene/fluoroalkyl vinyl ether copolymer comprising at least tetrafluoroethylene unit, hexafluoropropylene unit, and a fluoroalkyl vinyl ether unit, wherein a content of hexafluoropropylene unit is 1.0 to 15.0% by mass based on all monomer units constituting the fluoropolymer and a content of the fluoroalkyl vinyl ether unit is 0.1 to 10.0% by mass based on all monomer units constituting the fluoropolymer.

17. The fluoropolymer aqueous dispersion according to claim 15 or 16, wherein the melt-fabricable fluororesin has a melting point of 200 to 322°C.

18. A coating material composition containing the fluoropolymer aqueous dispersion according to any one of claims 10 to 17.
